(19) Europäisches Patentamt

European Patent Office

Office européen des brevets

(11) EP 2 533 189 A1

(12) **EUROPEAN PATENT APPLICATION**
published in accordance with Art. 153(4) EPC

(43) Date of publication:
**12.12.2012 Bulletin 2012/50**

(51) Int Cl.:
*G06Q 50/00* (2012.01)    *H02J 3/00* (2006.01)
*H02J 13/00* (2006.01)    *H01M 8/00* (2006.01)

(21) Application number: **11739777.8**

(22) Date of filing: **02.02.2011**

(86) International application number:
**PCT/JP2011/052140**

(87) International publication number:
**WO 2011/096429 (11.08.2011 Gazette 2011/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.02.2010 JP 2010023396**

(71) Applicant: Omron Corporation
**Kyoto-shi, Kyoto 600-8530 (JP)**

(72) Inventor: **HISANO, Atsushi**
**Kyoto-shi, Kyoto 600-8530 (JP)**

(74) Representative: **Wilhelms · Kilian & Partner**
**Patentanwälte**
**Eduard-Schmid-Straße 2**
**D-81541 München (DE)**

(54) **POWER DEMAND-SUPPLY SYSTEM**

(57)    An electricity supply and purchase system (100, 100a to 100e) according to the present invention for transmitting electricity via an electric line (14) from an electricity transmission sender to an electricity transmission receiver, includes electricity transmission deciding means (40) for deciding an electricity transmission content including an electricity amount of the electricity transmission to be transmitted from the electricity transmission sender; electricity reception deciding means (43) for deciding an electricity reception content including an electricity amount of electricity reception at the electricity transmission receiver; a communication system (12) for communication between the electricity transmission sender and the electricity transmission receiver, the communication being carried out for matching consistency between the electricity transmission content and the electricity reception content; electricity transmission flow control means (41) for performing the electricity transmission from the electricity transmission sender to the electricity line based on the electricity transmission content for which the consistency is confirmed by the communication performed via the communication system; electricity reception flow control means (44) for performing the electricity reception at the electricity transmission receiver from the electricity line based on the electricity reception content for which the consistency is confirmed by the communication performed via the communication system.

FIG. 2

EP 2 533 189 A1

**Description**

Technical Field

The present invention relates to a power demand-supply system (hereinafter, an electricity supply and purchase system) for realizing supply and use of green electricity. More specifically, the present invention relates to fields of, for example, (i) devices called solar power conditioners, (ii) devices and services for verifying supply and purchase of green electricity, (iii) systems for charging and for facilitating payment for a charge in the supply and purchase of the green electricity.

Background Art

In these days, global warming has become an issue over the world. Today, various countries are working on to reduce their emission of warm-house effect gases such as $CO_2$, which is one of causes of the global warming. Recently, Japan announces her specific target for $CO_2$ emission reduction to the international society. So, Japan is now expected by the international society that Japan will make a significant contribution to solve the global warming issue. Under these circumstances, Japanese technologies and effect for $CO_2$ reduction are in the spotlight.

Not only in Japan, but also in various countries having a duty of $CO_2$ reduction as above, companies and associations now have a duty of $CO_2$ reduction. For achieving the goal of the $CO_2$ reduction in a country, it is necessary for the companies and the associations in the country to achieve their goal for the $CO_2$ reduction.

One typical example of efforts for the $CO_2$ reduction at cooperation or association levels in a country is green electricity power generation (supply) and use (demand). Compared with non-green electricity, the green electricity is approximately 1/10 to 1/100 in life cycle $CO_2$ emission amount. Therefore, the generation and use (supply and demand) of the green electricity can reduces the $CO_2$ emission amount to about 1/10 to 1/100 of the generation and use (supply and demand) of the non-green electricity.

Conventionally, there have been systems, devices, and methods for realizing supply and purchase of the green electricity.

For example, Patent Literature 1 discloses a method and a device for electrical power system in which energy supply facilities such as wind-power electricity generation, solar power electricity generation, fuel cell electricity generation, etc. are utilized as dispersed power sources, by use of which supply and purchase of electricity is adjusted. This realizes a method or device, which can contribute to not only energy usage efficiency improvement and load leveling of the whose electrical power system, but also to global environmental protection. Moreover, Patent Literature 2 discloses an electricity supplying system in which an electricity purchaser can purchase electricity from an electricity supplier by selecting green electricity, i.e., electricity generated by green energy. Moreover, Patent Literature 3 discloses an electricity information processing system in which an electricity generating company can buy and sell solar power-generated electricity (green electricity) by mediating between a solar power generating device owner (electricity supplier) and a machine user (electricity purchaser).

Furthermore, it has been generalized to issue a certificate for certifying that green electricity is generated (supplied) or used (consumed), and how much green electricity is generated (supplied) or used (consumed). This can prove to a third party how much the electricity supplier or purchaser contributes to the global environmental protection and achieves the duty of reduction. The certificate is generally referred to as "green electricity certificate", etc., and is used to show that a corporation etc. has contributed to $CO_2$ reduction and how much the $CO_2$ reduction the corporation etc. has achieved is. The green electricity certificate can issue to, for example, an electricity supplier or an electricity purchaser directly participated to the supply, consumption, or commercial transaction of the green electricity (see, Patent Literatures 4 and 5, etc.). Further, the green electricity certificate can be used to prove degree of contribution to the global environmental protection to a third party indirectly participating the supply or the consumption of the green electricity. For example, the third party purchases the green electricity certificate itself at a price adequate for an amount of the green electricity. In such a social system, the third party can be regarded that the third party has indirectly contributed to the generation (supply) and use (consumption) of the green electricity of the amount by purchasing the green electricity certificate (see Non-Patent Literature 1, for example).

It is expected that demand for the green electricity certificate will increase, because, it is relatively easy for corporation or association to use the green electricity certificate for various purposes, such as facilitating image enhancement, proving fulfillment of the duty of $CO_2$ reduction, etc. by obtaining or purchasing the green electricity certificate.

[Definition of Term]

"Green Electricity" ... in the present Specification, the term "green electricity" means electricity that is generated without direct emission of $CO_2$. For example, electricity generated by using natural energy such as solar power, wind power, geothermal power, hydraulic power, etc., or electricity generated by using nuclear energy, etc. may be the green electricity. The green electricity is also referred to as low carbon electricity.

"Non-Green Electricity"...in the present Specification, on the contrary to the green electricity, the term "non-green electricity" means electricity generated in association with direct emission of $CO_2$, for example by thermal power generation, gas power generation.

"Life cycle $CO_2$ emission amount"...the term "life cycle $CO_2$ emission amount" indicates an amount of $CO_2$ emission throughout power generation per unit of electricity generated by the power generation. For example, the life cycle $CO_2$ emission amount encompasses a $CO_2$ emission amount calculated by converting, into $CO_2$ emission amount, energies consumed in production, installation, and management of a solar power generating device.

Citation List

Patent Literatures
Patent Literature 1
Japanese Patent Application Publication, Tokukai, No. 2001-177990 (published on June 29, 2001)
Patent Literature 2
Japanese Patent Application Publication, Tokukai, No. 2001-184406 (published on July 6, 2001)
Patent Literature 3
Japanese Patent Application Publication, Tokukai, No. 2005-185016 (published on July 7, 2005)
Patent Literature 4
Japanese Patent Application Publication, Tokukai, No. 2007-164397 (published on June 28, 2007)
Patent Literature 5
Japanese Patent Application Publication, Tokukai, No. 2008-306827 (published on December 18, 2008)
Non-Patent Literatures

Non-Patent Literature 1

Japan Natural Energy Company Limited, "Green Electricity Certificate system / Japan Natural Energy Company Limited ", [on line], [browsed on January 7, 2010], Internet <URL: http: //www.natural-e.co.jp/green/how_about.html>

Summary of Invention

Technical Problem

However, it is expected that the conventional green electricity certificate system cannot cope with price reduction in the green electricity in the future, whereby the conventional green electricity certificate system would be unsustainable.

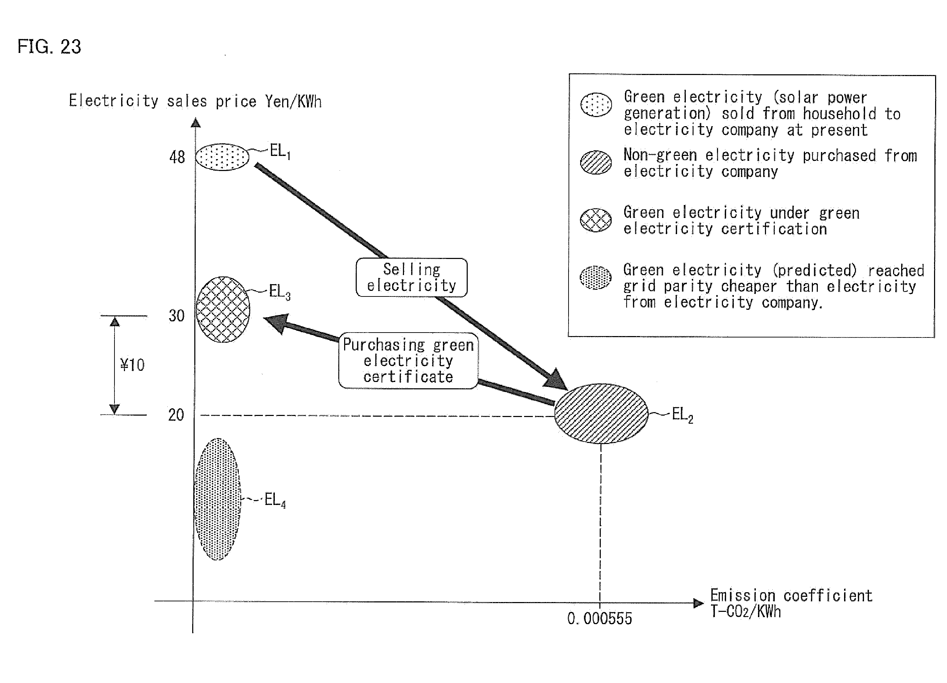

Fig. 23 is a view illustrating positional relationship of a green electricity price in the conventional green electricity certificate system, and a predicted future green electricity price, and non-green electricity price, etc.

In the graph illustrated in Fig. 23, the vertical axis is a selling price of electricity per unit power, and the horizontal axis is $CO_2$ emission coefficient (unit: $CO_2$ emission weight per unit electricity amount). An area $EL_1$ represents a surplus electricity (green electricity generated by solar power generation etc.) to be sold from household to an electricity company. In the conventional green electricity supply and purchase system, the green electricity is sold to an electricity company etc. and then is sold to public together with non-green electricity (area $EL_2$).

So, the conventional green electricity certificate system is as follows.

That is, the solar-power generated green electricity is sold from a company A to an electricity company (for a corporation like the company A, the electricity company can buy the electricity at a price lower than that of a private household, but the price is still within the area $EL_1$, basically). The company A provides green electricity generation-proving data to a green electricity certificate issuing company, which issues a green electricity certificate according to the green electricity generation-proving data thus provided.

A company B, which wants to be supplied with green electricity, purchases electricity from the electricity company, but the electricity is a mixture of the green electricity and the non-green electricity (area $EL_2$). Therefore, without purchasing a green electricity certificate from the green electricity certificate company for the amount of electricity which the company B wants to be deemed as green electricity, the company B cannot enjoy the benefit which the company B can receive when the electricity the company B purchased is deemed as green electricity. That is, it is necessary to purchase non-green electricity (area $EL_2$) from the electricity company and a green electricity certificate for converting the non-green electricity (area $EL_2$) into the green electricity (area $EL_3$).

However, it is expected that the solar power generation can be performed at a lower cost in the future due to fast increase in provision of solar power generating facilities, availability of lower-cost and highly efficient solar power generation facilities, completion of depreciation, use of inherited solar power generation facility to generate electricity, etc. Therefore, it is predicted that, within few years, the surplus green electricity generated by the solar power generation in the area $EL_1$ at present will reach a grid parity (area $EL_4$), which is cheaper than electricity generated systematically.

In such a case, a supplier becomes able to sell the green electricity at a lower cost, but cannot do so because the supplier sell the green electricity via the electricity company. On the other hand, the purchaser should irrationally purchase the "deeded-as-green" electricity (area $EL_2$) at a price higher than the green electricity in the area $EL_4$, even though the purchaser could purchase the green electricity (area $EL_4$) at a lower price if the purchaser purchase the green electricity directly from the supplier.

When the price of the green electricity becomes cheaper than that of the non-green electricity from the electricity company, there will be no purchaser purchasing the high-priced green electricity associated with a green electricity certificate, and there will be no supplier selling the green electricity together with an additional cost of obtaining a green electricity certificate. As a result, the conventional green electricity certificate system mediated by an electricity company will be unsustainable.

However, without the green electricity certificate system, there will be no mean to certify that the green electricity is traded between the supplier and the purchaser, thereby causing such a problem that a corporation or an association become unable to prove the $CO_2$ emission reduction to a third party.

Therefore, in order to avoid the problem, there is an increasing demand from the society to establish a system for realizing a green electricity network.

In view of the aforementioned problem, a first object of the present invention is to realize a system for making it possible to directly or indirectly transmit and receive green electricity between a supplier of the green electricity and a purchaser of the green electricity, and to making it possible to certify this green electricity transaction.

Further, a fast increase in household etc. facilitated with a green electricity power generating device for solar power generation, for example, will generate a large amount of surplus electricity in solar-power generating houses etc. It is expected that an existing electricity distributing network will be oversaturated (exceed a system limit) if such green surplus electricity is sold via the existing electricity distributing network. Reinforcement and expansion of the existing electricity distributing network cannot catch up the fast increase in the provision of the green electricity generating device. Thus, there is a demand to distribute the green electricity from the supplier to the purchaser without using the existing electricity distributing network.

A second object of the present invention is to establish a green electricity supply and purchase system in which a moving object for transporting the green electricity from the supplier to the purchaser, so as to avoid putting load on the existing electricity distributing network.

Further, the conventional green electricity supply and purchase system adopts a "supposing" system in which a supplier or a purchaser is "deemed" as having contributing to generation (supply) of the green electricity, or use (purchase) of the green electricity by use of the green electricity certificate. Therefore, there is a risk that the electricity is supplied without accurately reflecting the purchased amount of the green electricity, the purchase and the supply are not timely with each other so as to cause various wastes (over-purchasing of the green electricity certificate, scaling up of an electricity storage facility of the green electricity, etc.).

In order to solve this problem, it is necessary to establish a system for tracing, recording, and certifying actual supply and purchase of green electricity from generation to reception of the green electricity.

Thus, in view of the aforementioned problem, one object of the present invention is to realize a green electricity supply control device, a green electricity reception control device, a green electricity supply/purchase certifying device, an electricity composition control device, a green electricity transaction settling device, a moving object, a building, a green electricity supply and purchase system, a green electricity transmitting and receiving method, and a green electricity supply/purchase certifying method, in each of which traceability of the green electricity is realized without allowing false statement.

Solution to Problem

In order to attain the object, an electricity supply and purchase system according to the present invention is an electricity supply and purchase system for transmitting electricity via an electric line from an electricity transmission sender to an electricity transmission receiver, comprising: electricity transmission deciding means for deciding an electricity transmission content including an electricity amount of the electricity transmission to be transmitted from the electricity transmission sender; electricity reception deciding means for deciding an electricity reception content including an electricity amount of electricity reception at the electricity transmission receiver; a communication system for communication between the electricity transmission sender and the electricity transmission receiver, the communication being carried out for matching consistency between the electricity transmission content and the electricity reception content; electricity transmission flow control means for performing the electricity transmission from the electricity transmission sender to the electricity line based on the electricity transmission content for which the consistency is confirmed by the communication performed via the communication system; electricity reception flow control means for performing the electricity reception at the electricity transmission receiver from the electricity line based on the electricity reception content for which the consistency is confirmed by the communication performed via the communication system.

In order to attain the object, an electricity supply control device according to the present invention is an electricity supply control device for use at an electricity transmission sender in an electricity supply and purchase system for transmitting electricity via an electric line from the electricity transmission sender to an electricity transmission receiver, the electricity supply control device comprising: electricity transmission deciding means for deciding an electricity transmission content in case of performing the electricity transmission of the green electricity to the electricity transmission receiver, the electricity transmission deciding means deciding the electricity transmission content by communication with the electricity transmission receiver via a communication section in order to match consistency between the electricity transmission content and an electricity reception content of the electricity transmission receiver; and electricity transmission flow control means for performing the electricity transmission from the electricity transmission sender to the electricity line based on the electricity transmission content for which the consistency is confirmed by the electricity transmission deciding means.

In order to attain the object, an electricity reception control device according to the present invention is an electricity reception control device for use at an electricity transmission receiver in an electricity supply and purchase system for transmitting electricity via an electric line from an electricity transmission sender to the electricity transmission receiver, the electricity reception control device comprising: electricity reception deciding means for deciding an electricity reception content in case of performing the electricity transmission of the green electricity to the electricity transmission receiver, the electricity reception deciding means deciding the electricity reception content by communication with the electricity transmission sender via a communication section in order to match consistency between the electricity reception content and an electricity transmission content of the electricity transmission receiver; and electricity reception flow control means for performing the electricity reception at the electricity transmission receiver from the electricity line based on the electricity reception content for which the consistency is confirmed by the electricity reception deciding means.

In order to attain the object, a green electricity supply control device according to the present invention is a green electricity supply control device, comprising: a communication section for communicating with an electricity transmission receiver via a communication network, the electricity transmission receiver being a counterpart to which the green electricity supply control device is to transmit green electricity; electricity transmission deciding means for deciding an electricity transmission content by communicating with the electricity transmission receiver via the communication section in case of performing the electricity transmission of the green electricity to the electricity transmission receiver; electricity transmission flow control means for performing the electricity transmission of the green electricity to the electricity transmission receiver based on the electricity transmission content decided by the electricity transmission deciding means; and performed electricity transmission information notifying means for notifying a predetermined notification receiving party of performed electricity transmission information after the electricity transmission is completed by the electricity transmission flow control means, the performed electricity transmission information including the electricity transmission receiver and an electricity amount of the electricity transmission.

With this configuration, the communication section of the green electricity supply control device communicates with the electricity transmission receiver (for example, a green electricity reception control device) by using a communication protocol for transmitting and receiving green electricity. Via this communication, the electricity transmission deciding means decides the electricity transmission content. Based on the transmission content thus decided by the electricity transmission deciding means, the electricity transmission flow control means performs the electricity transmission of the green electricity to the electricity transmission receiver. That is, the green electricity will not be transmitted before the electricity transmission content and the electricity reception content are decided between the electricity transmission sender and the electricity transmission receiver. Moreover, after the electricity transmission is completed, the performed electricity transmission information notifying means creates performed electricity transmission information for notifying that the electricity transmission is completed (the performed electricity transmission information includes the electricity transmission receiver and the electricity amount transmitted by the electricity transmission).

Because of this, the green electricity is transferred from the supplier to the purchaser after it is decided between the supplier and the purchaser to perform the green electricity transmission and reception. This eliminates a risk that the green electricity transmission and reception are carried out without knowing any of the supplying device and the receiving device. Further, the performed electricity transmission information is created, thereby allowing the notified party (for example, the green electricity supply/purchase certifying device) to store the record on the electricity transmission and reception. Therefore, it becomes possible to realize exact traceability of green electricity while well separating the supply and purchase of green electricity from those of non-green electricity. Further, this makes it possible to perform direct green electricity transmission between the electricity transmission sender and the electricity transmission receiver and to realize a system for certifying the green electricity transmission.

One example of deciding the electricity transmission content is to establish an agreement on the transmission and reception of the green electricity between the electricity transmission sender and the electricity transmission receiver, wherein the establishing the agreement may include establishing an agreement on the electricity amount to be transmitted and received. For example, the agreement may be established by the electricity transmission deciding means in response to receiving from the electricity transmission receiver a supply offer acceptance for accepting supply offer presented by the green electricity supply control device, or in response to receiving from the electricity transmission receiver an supply request for requesting supply of electricity.

In order to attain the object, a green electricity reception control device according to the present invention is a green electricity reception control device, comprising: a communication section for communicating with an electricity transmission sender via a communication network, the electricity transmission sender being for transmitting green electricity; electricity reception deciding means for deciding an electricity reception content by communicating with the electricity transmission sender via the communication section in case of performing the electricity reception of the green electricity from the electricity transmission sender; electricity reception flow control means for performing the electricity reception of the green electricity from the electricity transmission sender based on the electricity reception content decided by the electricity reception deciding means; and performed electricity reception information notifying means for notifying a predetermined notification receiving party of performed electricity reception information after the electricity reception is completed by the electricity reception flow control means, the performed electricity reception information including the electricity transmission sender and an electricity amount of the electricity reception.

With this configuration, the communication section of the green electricity reception control device communicates with the electricity transmission sender (for example, a green electricity reception control device) by using a communication protocol for transmitting and receiving green electricity. Via this communication, the electricity reception deciding means decides the electricity reception content. Based on the reception content thus decided by the electricity reception deciding means, the electricity reception flow control means performs the electricity reception of the green electricity from the electricity transmission sender. That is, the green electricity will not be transmitted before the electricity transmission content and the electricity reception content are decided between the electricity transmission sender and the electricity transmission receiver. Moreover, after the electricity reception is completed, the performed electricity reception information notifying means creates performed electricity reception information for notifying that the electricity reception is completed (the performed electricity reception information includes the electricity reception sender and the electricity amount received by the electricity reception).

Because of this, the green electricity is transferred from the supplier to the purchaser after it is decided between the supplier and the purchaser to perform the green electricity transmission and reception. This eliminates a risk that the green electricity transmission and reception are carried out without knowing any of the supplying device and the receiving device. Further, the performed electricity reception information is created, thereby allowing the notified party (for example, the green electricity supply/purchase certifying device) to store the record on the electricity transmission and reception. Therefore, it becomes possible to realize exact traceability of green electricity while well separating the supply and purchase of green electricity from those of non-green electricity. Further, this makes it possible to perform direct green electricity transmission between the electricity transmission sender and the electricity transmission receiver and to realize a system for certifying the green electricity transmission.

One example of deciding the electricity reception content is to establish an agreement on the transmission and reception of the green electricity between the electricity transmission sender and the electricity transmission receiver, wherein the establishing the agreement may include establishing an agreement on the electricity amount to be transmitted and received. For example, the agreement may be established by the electricity reception deciding means in response to receiving from the electricity transmission sender a supply request acceptance for accepting supply request presented by the green electricity reception control device, or in response to receiving from the electricity transmission sender an supply offer for offering supply of electricity.

In order to attain the object, a green electricity supply/purchase certifying device according to the present invention is a green electricity supply/purchase certifying device, comprising: performed electricity transmission/reception checking means for comparing (i) performed electricity transmission information transmitted from an electricity transmission sender for transmitting green electricity and (ii) performed electricity reception information transmitted from an electricity transmission receiver for receiving green electricity from the electricity transmission sender, so as to check whether or not the performed electricity transmission information and the performed electricity reception information are consistent with each other; and supply and purchase information creating means for creating supply and purchase information in which (i) the performed electricity transmission information and the performed electricity reception information, which the performed electricity transmission/reception checking means judges as being consistent with each other, are paired, and (ii) the electricity transmission sender, the electricity transmission receiver, and an electricity amount of the green electricity transmitted/received are included.

When green electricity transmission and reception occur between an electricity transmission sender (for example, a green electricity supply control device) for transmitting green electricity and an electricity transmission receiver

**EP 2 533 189 A1**

(for example, a green electricity reception control device) for receiving green electricity, the green electricity supply/ purchase certifying device with this configuration, receives an electricity transmission report in the form of the performed electricity transmission information from the electricity transmission sender, and receives an electricity reception report in the form of the performed electricity reception information from the electricity transmission receiver, the reports regarding the event of the electricity transmission and reception.

Then, the performed electricity transmission/reception checking means compares the performed electricity transmission information and the performed electricity reception information with each other, thereby checking whether the performed electricity transmission information and the performed electricity reception information are consistent with each other.

Finally, the supply and purchase information creating means creates supply and purchase information in which the performed electricity transmission information and the performed electricity reception information judged as being consistent with each other is paired. The supply and purchase information at least includes information for identifying the electricity transmission sender for supplying the green electricity, the electricity transmission receiver for receiving the green electricity, the electricity amount of the green electricity transmitted, and the electricity amount of the green electricity received.

As described above, because the performed electricity transmission/reception checking means compares the performed transmission information and the performed reception information received from the respective parties, and checks consistency therebetween, it is possible to detect false statement in the performed transmission information or the performed reception information, even if the supplying party or the purchasing party modifies the statement in favor of themselves. Moreover, the supply and purchase information creating means processes the pair of the performed transmission information and the performed reception information in consistency, thereby preparing the supply and purchase information. Therefore, if there is any false statement, no supply and purchase information will be created, thereby leaving no false record.

By this, it is possible to realize an exact traceability of green electricity without allowing false statement. As a result, this configuration makes it possible for the supplier and purchaser of green electricity to directly supply the green electricity from the supplier to the purchaser and this configuration also makes it possible to certify this transaction.

In order to attain the object, a electricity composition control device according to the present invention is a electricity composition control device, comprising: emission amount calculating means for calculating out a warm-house effect gas emission amount of green electricity in use of the green electricity to prepare a necessary electricity amount, and a warm-house effect gas emission amount of non-green electricity in use of the non-green electricity to prepare the necessary electricity amount; emission amount comparing means for comparing (i) a remaining amount to a warm-house gas emission limit with (ii) the warm-house effect gas emission amount of the green electricity and with (iii) the warm-house effect gas emission amount of the non-green electricity, where the remaining amount to the warm-house gas emission limit indicates a preset limit in a warm-house gas emission allowed; and electricity type-distinguished electricity amount deciding means for deciding electricity amounts of the green electricity and the non-green electricity to be received to prepare the necessary electricity amount, if the emission amount comparing means judges that the warm-house effect gas emission amount of the green electricity $\leq$ the remaining amount to the warm-house gas emission limit < the warm-house effect gas emission amount of the non-green electricity, the electricity type-distinguished electricity amount deciding means deciding the electricity amounts of the green electricity and the non-green electricity in such a way that the warm-house effect gas emission amount will not exceed the remaining amount to the warm-house gas emission limit.

With this configuration, the electricity composition control device can decide an optimal ratio of the green electricity and the non-green electricity in the receiving electricity amount, when electricity certified as green electricity and non-green electricity distinguished from the green electricity are to be received in distinct manner. More specifically, in case where it is obligated to reduce the warm-house effect gas ($CO_2$) emission amount, the electricity amount of the non-green electricity to receive and the electricity amount of the green electricity to receive are set in such a manner that the necessary electricity amount is prepared while keeping the warm-house effect gas emission amount below the allowed gas emission limit.

For example, it is possible to set the electricity amount of the green electricity and the non-green electricity in such a manner that the necessary electricity amount is prepared at a cost as low as possible by receiving the cheap non-green electricity as much as possible, provided that the warm-house effect gas emission amount is still kept below the allowed gas emission limit.

In order to attain the object, a green electricity transaction settling device according to the present invention is a green electricity transaction settling device, comprising: supply and purchase information acquiring means for acquiring supply and purchase information from a supply and purchase management database in which the supply and purchase information is stored, the supply and purchase information including an electricity transmission sender for supplying green electricity, an electricity transmission receiver for receiving the green electricity from the electricity transmission sender, and an electricity amount of the green electricity supplied/received; and transaction settling processing means for calculating out payment to pay and to be paid for the supplied and received electricity amount of the green electricity based on the supply and purchase information acquired by the supply and purchase information acquiring means.

With this configuration, it is possible to settle balances of the supplier and purchaser of the green electricity based on exact supply and purchase information certified to concern the green electricity and stored in a manner falsification thereof is impossible. Thus, it is possible to realize a green electricity supply and purchase system capable of rightly managing both of the profit of the supplier and the environmental additional value of the purchase.

In order to attain a moving object according to the present invention is a moving object, comprising: a communication section for communicating with an external device via a communication network; a green electricity reception control device for receiving green electricity from an electricity transmission sender for sending the green electricity; a green electricity storage device for storing the green electricity received by the green electricity reception control device; a green electricity supply control device for transmitting the green electricity in the green electricity storage device to an electricity transmission receiver to which the green electricity is to be transmitted, the green electricity reception control device including: electricity reception deciding means for deciding an electricity reception content in case of performing the electricity reception of the green electricity from the electricity transmission sender, the electricity reception deciding means deciding the electricity reception content by communication with the electricity transmission sender via a communication section; electricity reception flow control means for performing the electricity reception from the electricity transmission sender based on the electricity reception content decided by electricity reception deciding means; and performed electricity reception information notifying means for notifying a predetermined notification receiving party of performed electricity reception information after the electricity reception is completed by the electricity reception flow control means, the performed electricity reception information including the electricity transmission sender and an electricity amount of the electricity reception, and the green electricity supply control device including: electricity transmission deciding means for deciding an electricity transmission content in case of performing the electricity transmission of the green electricity to the electricity transmission receiver, the electricity transmission deciding means deciding the electricity transmission content by communication with the electricity transmission receiver via a communication section; electricity transmission flow control means for performing the electricity transmission to the electricity transmission receiver based on the electricity transmission content decided by the electricity transmission deciding means; and performed electricity transmission information notifying means for notifying a predetermined notification receiving party of performed electricity transmission information after the electricity transmission is completed by the electricity transmission flow control means, the performed electricity transmission information including the electricity transmission receiver and an electricity amount of the electricity transmission.

With this configuration, the moving object is capable of storing green electricity received from an external device (electricity transmission sender) in the green electricity storage device for exclusive use for green electricity, so that the green electricity will not be mixed with non-green electricity, and supplying the green electricity to an external device (electricity transmission receiver). The moving object is capable of transporting the green electricity thus stored, therefore the moving object can mediate the supply and purchase of the green electricity between an electricity transmission sender device and an electricity transmission receiver device, where are relatively distanced from each other. Because the moving object can realize the transmission and reception of the green electricity without using the existing electricity transmission and distribution facility, this can prevent oversaturation of the electricity transmission and distribution network.

In order to attain the object, a building for electricity supply according to the present invention is a building, comprising: a green electricity generating device for generating green electricity; a green electricity supply control device for transmitting the green electricity generated by the green electricity generating device to an electricity transmission receiver to which the green electricity is to be transmitted, the green electricity supply control device including: a communication section for communicating with an electricity transmission receiver via a communication network, the electricity transmission receiver being a counterpart to which the green electricity supply control device is to transmit green electricity; electricity transmission deciding means for deciding an electricity transmission content by communicating with the electricity transmission receiver via the communication section in case of performing the electricity transmission of the green electricity to the electricity transmission receiver; electricity transmission flow control means for performing the electricity transmission of the green electricity to the electricity transmission receiver based on the electricity transmission content decided by the electricity transmission deciding means; and performed electricity transmission information notifying means for notifying a predetermined notification receiving party of performed electricity transmission information after the electricity transmission is completed by the electricity transmission flow control means, the performed electricity transmission information including the electricity transmission receiver and an electricity amount of the electricity transmission.

For example, by applying the building of the present invention to a household, it is possible to establish a green electricity supply and purchase system, which allow free green electricity trading in general household.

A building for electricity reception according to the present invention is a building, comparing: a green electricity reception control device, the green electricity reception control device including: a communication section for communicating with an electricity transmission sender via a communication network, the electricity transmission sender being for transmitting green electricity; electricity reception deciding means for deciding an electricity reception content by communicating with the electricity transmission sender via the communication section in case of performing the electricity reception of the green electricity from the electricity transmission sender; electricity reception flow control means for performing the electricity reception of the green electricity from the electricity transmission sender based on the electricity reception content decided by the electricity reception deciding means; and performed electricity reception information notifying means for notifying a predetermined notification receiving party of performed electricity reception information after the electricity reception is completed by the electricity reception flow control means, the performed electricity reception information including the electricity transmission sender and an electricity amount of the electricity reception.

For example, by applying the building according to the present invention to a corporation facility (shop, company facility etc.), it is possible to establish a green electricity supply and purchase system allowing a company and an individual to transmit and receive green electricity by free trading.

In order to attain the object, a green electricity supply and purchase system according to the present invention is a green electricity supply and purchase system, comprising: a green electricity supply control device for transmitting green electricity; a green electricity reception control device for receiving green electricity; and a green electricity supply/purchase certifying device for certifying supply and purchase of the green electricity, the green electricity supply control device including: a communication section for communicating with an electricity transmission receiver via a communication network, the electricity transmission receiver being a counterpart to which the green electricity supply control device is to transmit green electricity; electricity transmission deciding means for deciding an electricity transmission content by communicating with the electricity transmission receiver via the communication section in case of performing the electricity transmission of the green electricity to the electricity transmission receiver; electricity transmission flow control means for performing the electricity transmission of the green electricity to the electricity transmission receiver based on the electricity transmission content decided by the electricity transmission deciding means; and performed electricity transmission information notifying means for notifying a predetermined notification receiving party of performed electricity transmission information after the electricity transmission is completed by the electricity transmission flow control means, the performed electricity transmission information including the electricity transmission receiver and an electricity amount of the electricity transmission, the green electricity reception control device including: a communication section for communicating with an electricity transmission sender via a communication network, the electricity transmission sender being for transmitting green electricity; electricity reception deciding means for deciding an electricity reception content by communicating with the electricity transmission sender via the communication section in case of performing the electricity reception of the green electricity from the electricity transmission sender; electricity reception flow control means for performing the electricity reception of the green electricity from the electricity transmission sender based on the electricity reception content decided by the electricity reception deciding means; and performed electricity reception information notifying means for notifying a predetermined notification receiving party of performed electricity reception information after the electricity reception is completed by the electricity reception flow control means, the performed electricity reception information including the electricity transmission sender and an electricity amount of the electricity reception, and green electricity supply/purchase certifying device including: performed electricity transmission/ reception checking means for comparing (i) performed electricity transmission information transmitted from an electricity transmission sender for transmitting green electricity and (ii) performed electricity reception information transmitted from an electricity transmission receiver for receiving green electricity from the electricity transmission sender, so as to check whether or not the performed electricity transmission information and the performed electricity reception information are consistent with each other; and supply and purchase information creating means for creating supply and purchase information in which (i) the performed electricity transmission information and the performed electricity reception information, which the performed electricity transmission/reception checking means judges as being consistent with each other, are paired, and (ii) the electricity transmission sender, the electricity transmission receiver, and an electricity amount of the green electricity transmitted/received are included.

With this configuration, it is possible to realize the traceability of the green electricity in an electricity supply and purchase system without allowing false statement.

In order to attain the object, a green electricity transmitting and receiving method according to the present invention is a green electricity transmitting and receiving method, comprising: deciding electricity transmission, including deciding an electricity transmission content of the electricity transmission by an electricity transmission sender for transmitting green electricity, wherein the electricity transmission sender decides the electricity transmission content by communicating with an electricity transmission receiver being a counterpart for receiving the green electricity; deciding electricity reception, including deciding an electricity reception content by the electricity transmission receiver, wherein the electricity transmission receiver decides the electricity reception content by communicating with the electricity transmission sender; performing an electricity transmission flow control in which the electricity transmission sender performs the electricity transmission based on the electricity transmission content decided in the step of deciding the electricity transmission; notifying performed electricity transmission information from the electricity transmission sender to a predetermined notified party after the electricity transmission in the step of performing the electricity transmission flow control is completed, the performed electricity transmission information including the electricity transmission receiver and an electricity amount of the electricity transmission; performing electricity reception flow control in which the electricity transmission receiver performs the electricity reception based on the electricity reception content decided in the step of deciding the electricity reception; and notifying performed electricity reception information from the electricity transmission receiver to the notified party after the electricity reception in the step of performing the electricity reception flow control completed, the performed electricity reception information including the electricity transmission sender and an electricity amount of the electricity reception.

In order to attain the object, a green electricity supply/purchase certifying method according to the present invention is a green electricity supply/purchase certifying method, comprising: checking performed electricity transmission/reception by comparing (i) performed electricity transmission information transmitted from an electricity transmission sender for transmitting green electricity and (ii) performed electricity reception information transmitted from an electricity transmission receiver for receiving green electricity from the electricity transmission sender, so as to check whether or not the performed electricity transmission information and the performed electricity reception information are consistent with each other; and creating supply and purchase information in which (i) the performed electricity transmission information and the performed electricity reception information, which are judged as being consistent with each other in the step of checking, are paired, and (ii) the electricity transmission sender, the electricity transmission receiver, and an electricity amount of the green electricity transmitted/received are included.

In order to attain the object, an electricity composition controlling method according to the present invention is an electricity composition controlling method, comprising: calculating out a warm-house effect gas emission amount of green electricity in use of the green electricity to prepare a necessary electricity amount, and a warm-house effect gas emission amount of non-green electricity in use of the non-green electricity to prepare the necessary electricity amount; comparing (i) a remaining amount to a warm-house gas emission limit with (ii) the warm-house effect gas emission amount of the green electricity and with (iii) the warm-house effect gas emission amount of the non-green electricity, where the remaining amount to the warm-house gas emission limit indicates a preset limit in a warm-house gas emission allowed; and deciding electricity amounts of the green electricity and the non-green electricity to be received to prepare the necessary electricity amount, wherein, if it is judged in the step of comparing that the warm-house effect gas emission amount of the green electricity $\leq$ the remaining amount to the warm-house gas emission limit < the warm-house effect gas emission amount of the non-green electricity, the electricity amounts of the green electricity and the non-green electricity are judged in such a way that the warm-house effect gas emission amount will not exceed the remaining amount to the warm-house gas emission limit.

In order to attain the object, a transaction settling method according to the present invention is a transaction settling method, comprising: acquiring supply and purchase information from a supply and purchase management database in which the supply and purchase information is stored, the supply and purchase information including an electricity transmission sender for supplying green electricity, an electricity transmission receiver for receiving the green electricity from the electricity transmission sender, and an electricity amount of the green electricity supplied/received; and performing a transaction settling process for calculating out payment to pay and to be paid for the supplied and received electricity amount of the green electricity based on the supply and purchase information acquired by the step of acquiring.

In order to attain the object, an electricity composition controlling program according to the present invention is an electricity composition controlling program for causing a computer to perform: calculating out a warm-house effect gas emission amount of green electricity in use of the green electricity to prepare a necessary electricity amount, and a warm-house effect gas emission amount of non-green electricity in use of the non-green electricity to prepare the necessary electricity amount; comparing (i) a remaining amount to a warm-house gas emission limit with (ii) the warm-house effect gas emission amount of the green electricity and with (iii) the warm-house effect gas emission amount of the non-green electricity, where the remaining amount to the warm-house gas emission limit indicates a preset limit in a warm-house gas emission allowed; and deciding electricity amounts of the green electricity and the non-green electricity to be received to prepare the necessary electricity amount, wherein, if it is judged in the step of comparing that the warm-house effect gas emission amount of the green electricity $\leq$ the remaining amount to the warm-house gas emission limit < the warm-house effect gas emission amount of the non-green electricity, the electricity amounts of the green electricity and the non-green electricity are judged in such a way that the warm-house effect gas emission amount will not exceed the remaining amount to the warm-house gas emission limit.

Note that the green electricity supply/purchase certifying device, the green electricity supply control device, the green electricity reception control device, the green electricity transaction settling device, and the electricity composition control device may be realized by using a computer. In this case, the present invention encompasses control programs for the respective devices, which programs cause an computer to operate as the means so as to realize the respective devices by using the computer, and a computer-readable recording medium in which any of the programs is stored.

Advantageous Effects of Invention

In order to attain the object, a green electricity supply control device according to the present invention is a green electricity supply control device, comprising: a communication section for communicating with an electricity transmission receiver via a communication network, the electricity transmission receiver being a counterpart to which the green electricity supply control device is to transmit green electricity; electricity transmission deciding means for deciding an electricity transmission content by communicating with the electricity transmission receiver via the communication section in case of performing the electricity transmission of the green electricity to the electricity transmission receiver; electricity transmission flow control means for performing the electricity transmission of the green electricity to the electricity transmission receiver based on the electricity transmission content decided by the electricity transmission deciding means; and performed electricity transmission information notifying means for notifying a predetermined notification receiving party of performed electricity transmission information after the electricity transmission is completed by the electricity transmission flow control means, the performed electricity transmission information including the electricity transmission receiver and an electricity amount of the electricity transmission.

In order to attain the object, a green electricity reception control device according to the present invention is a green electricity reception control device, comprising: a communication section for communicating with an electricity transmission sender via a communication network, the electricity transmission sender being for transmitting green electricity; electricity reception deciding means for deciding an electricity reception content by communicating with the electricity transmission sender via the communication section in case of performing the electricity reception of the green electricity from the electricity transmission sender; electricity reception flow control means for performing the electricity reception of the green electricity from the electricity transmission sender based on the electricity reception content decided by the electricity reception deciding means; and performed electricity reception information notifying means for notifying a predetermined notification receiving party of performed electricity reception information after the electricity reception is completed by the electricity reception flow control means, the performed electricity reception information including the electricity transmission sender and an electricity amount of the electricity reception.

In order to attain the object, a green electricity supply/purchase certifying device according to the present invention is a green electricity supply/purchase certifying device, comprising: performed electricity transmission/reception checking means for comparing (i) performed electricity transmission information transmitted from an electricity transmission sender for transmitting green electricity and (ii) performed electricity reception information transmitted from an electricity transmission receiver for receiving green electricity from the electricity transmission sender, so as to check whether or not the performed electricity transmission information and the performed electricity reception information are consistent with each other; and supply and purchase information creating means for creating supply and purchase information in which (i) the performed electricity transmission information and the performed electricity reception information, which the performed electricity transmission/reception checking means judges as being consistent with each other, are paired, and (ii) the electricity transmission sender, the electricity transmission receiver, and an electricity amount of the green electricity transmitted/received are included.

Therefore, the present invention makes it possible to realize traceability of green electricity in an electrical supply and purchase system without allowing false statement.

Brief Description of Drawings

Fig. 1

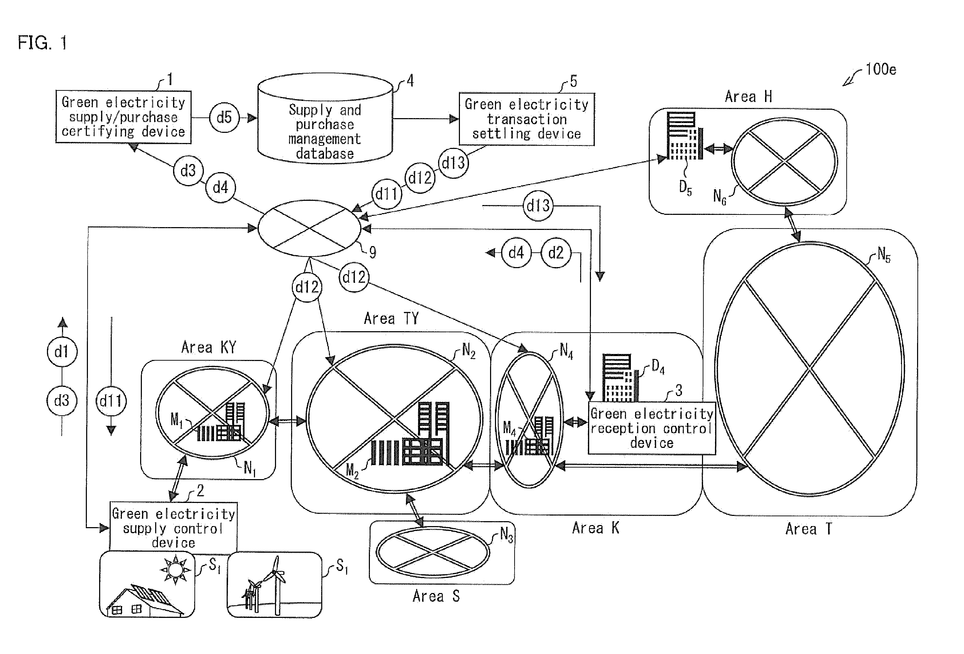

Fig. 1 is a view schematically illustrating a green electricity supply and purchase system according to one embodiment of the present invention.
Fig. 2

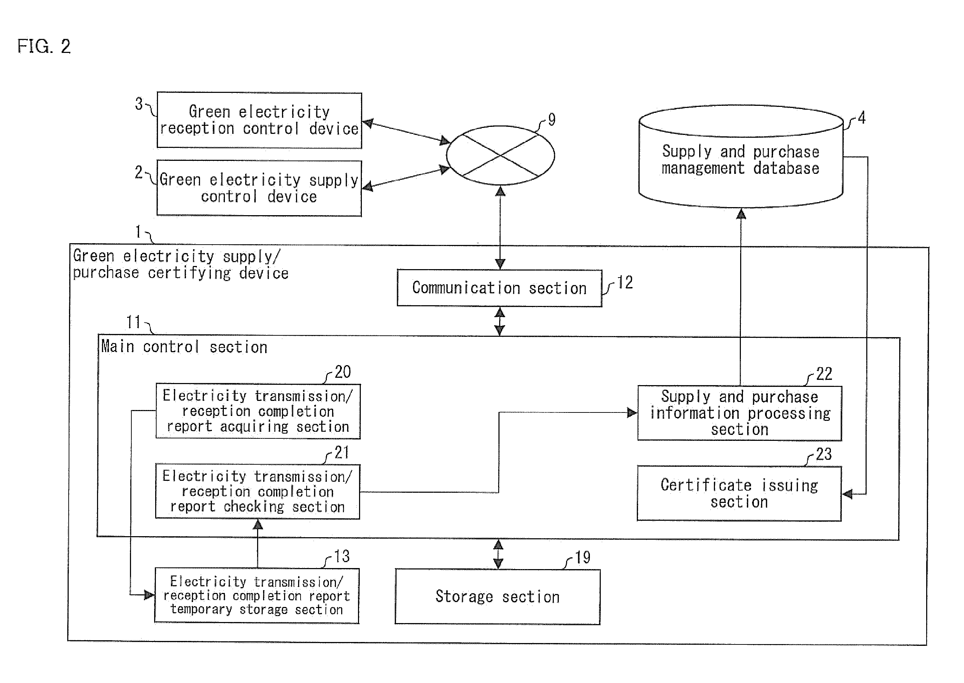

Fig. 2 is a block diagram illustrating main sections of a green electricity supply/purchase certifying device according to the present invention.
Fig. 3

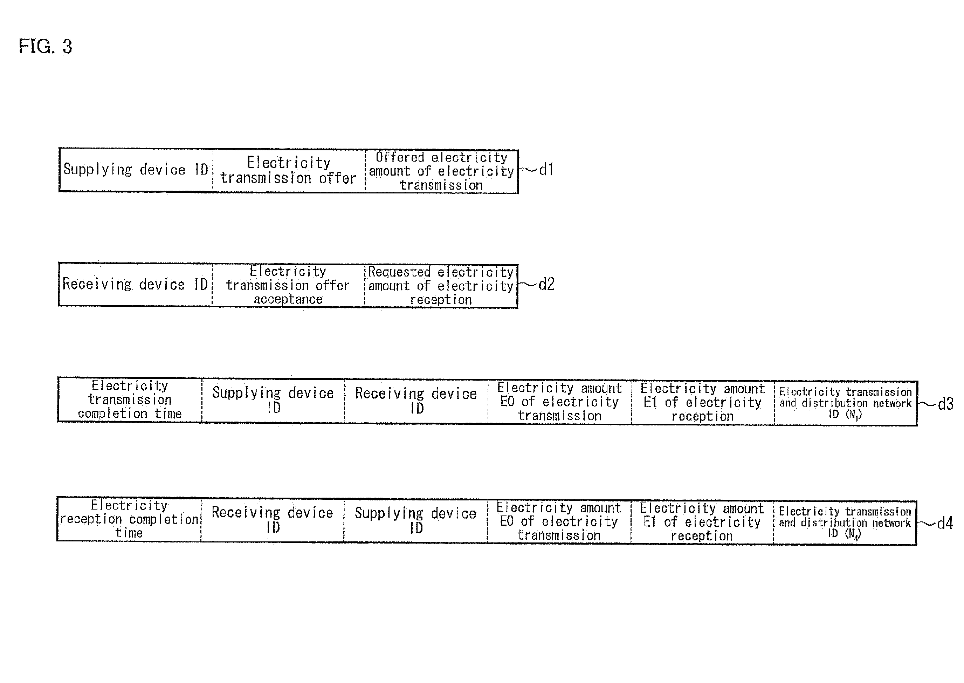

Fig. 3 is a view schematically illustrating a data structure sent or received by a green electricity supply control device or green electricity reception control device according to the embodiment of the present invention, the data structure being for a supply offer, a supply offer acceptance, an electricity transmission completion report, and an electricity reception completion report.
Fig. 4

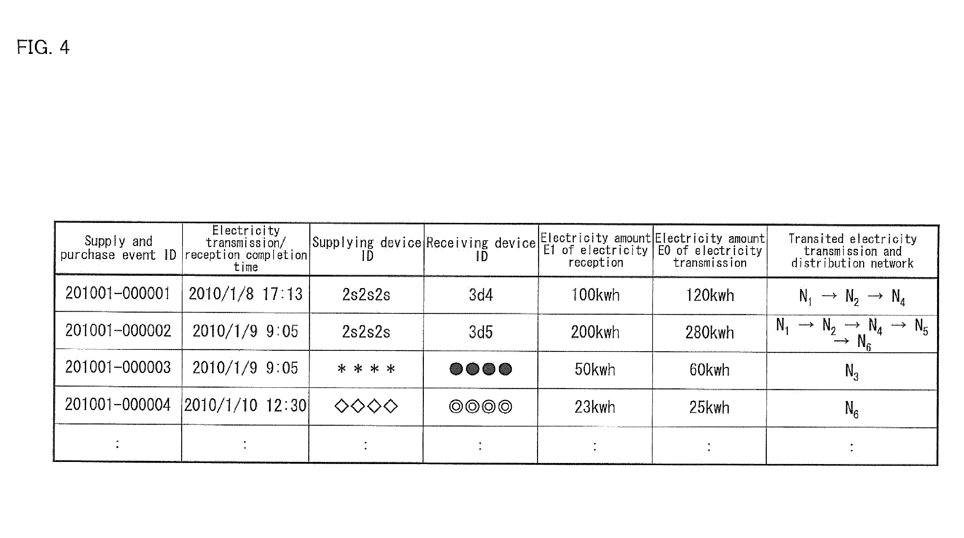

Fig. 4 is a view schematically illustrating a data structure of a supply and purchase management database in which records of supply and purchase information created by the green electricity supply/purchase certifying device according to one embodiment of the present invention.

Fig. 5

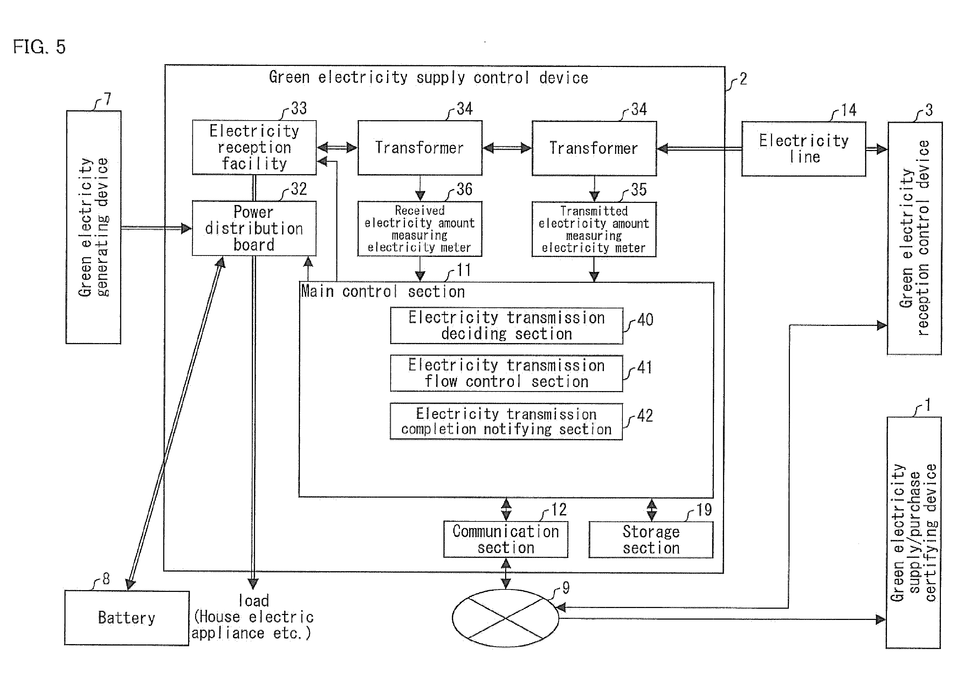

Fig. 5 is a block illustrating main sections of a green electricity supply control device according to the present invention.

Fig. 6

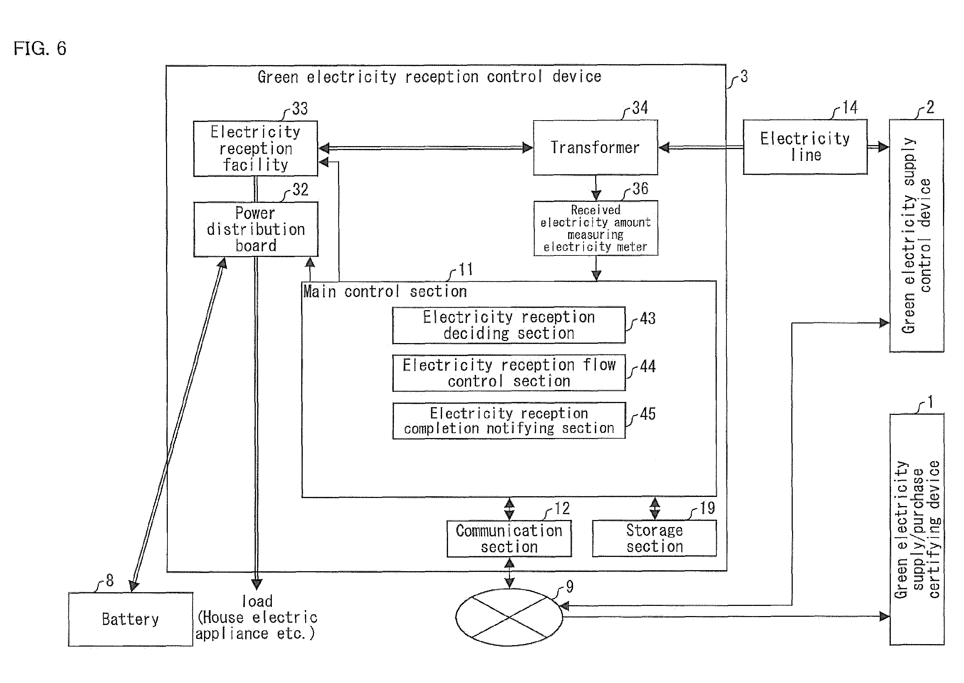

Fig. 6 is a block illustrating main sections of a green electricity reception control device according to the present invention.

Fig. 7

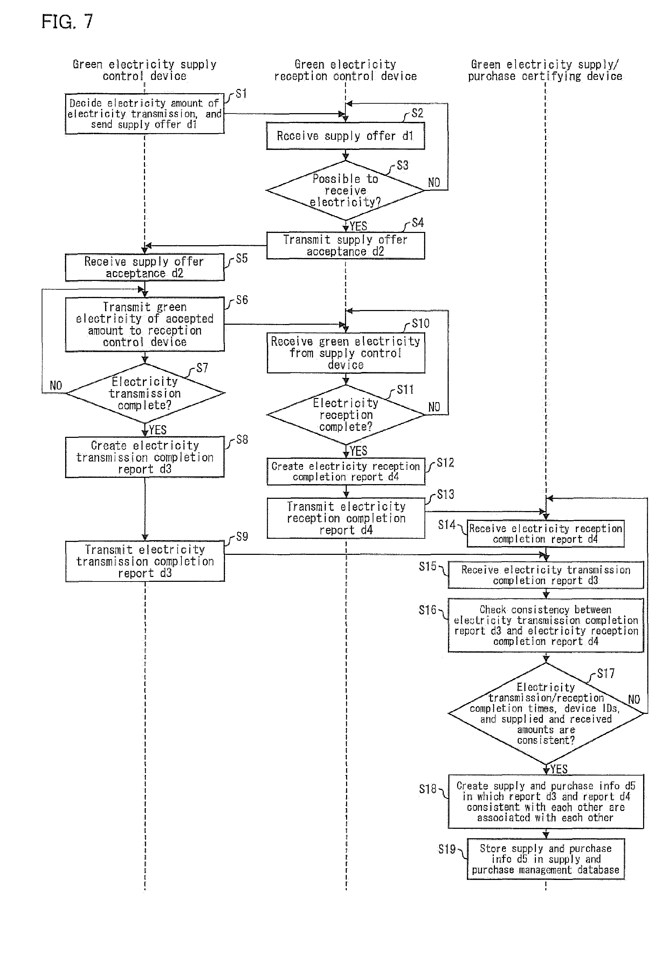

Fig. 7 is a sequence illustrating a flow of process performed by devices in the green electricity supply and purchase system according to the present invention, when a green electricity supply and purchase event occurs.

Fig. 8

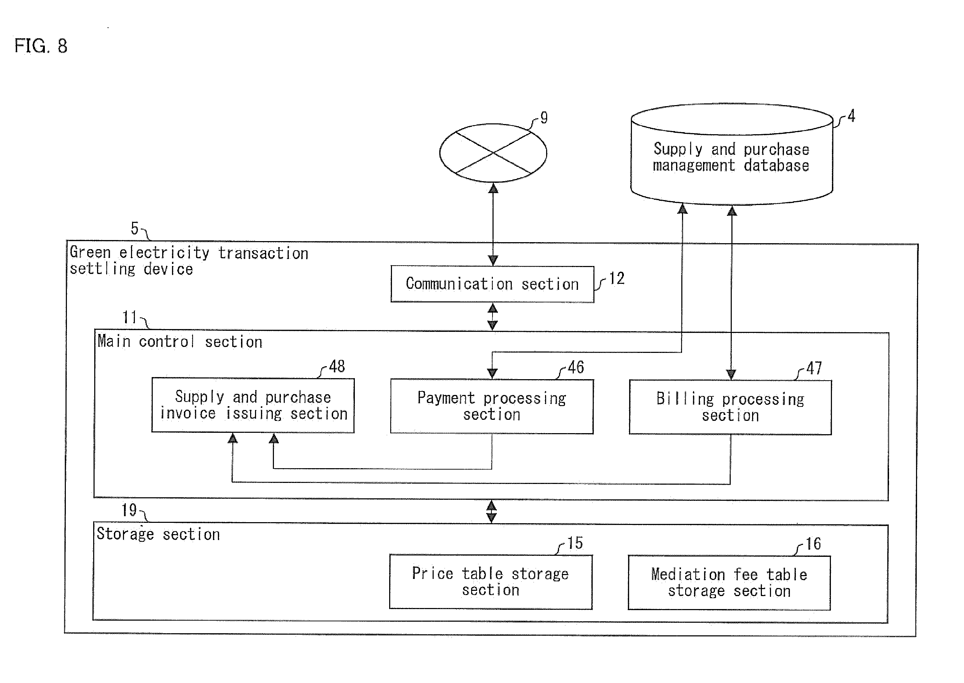

Fig. 8 is a block diagram illustrating main sections of a green electricity transaction settling device according to one embodiment of the present invention.

Fig. 9

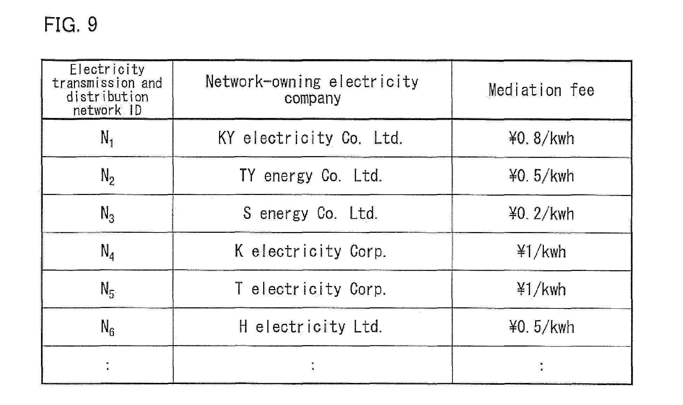

Fig. 9 is a view illustrating a specific example of a mediation fee table, which a mediation fee table storage section of the green electricity transaction settling device stores therein.

Fig. 10

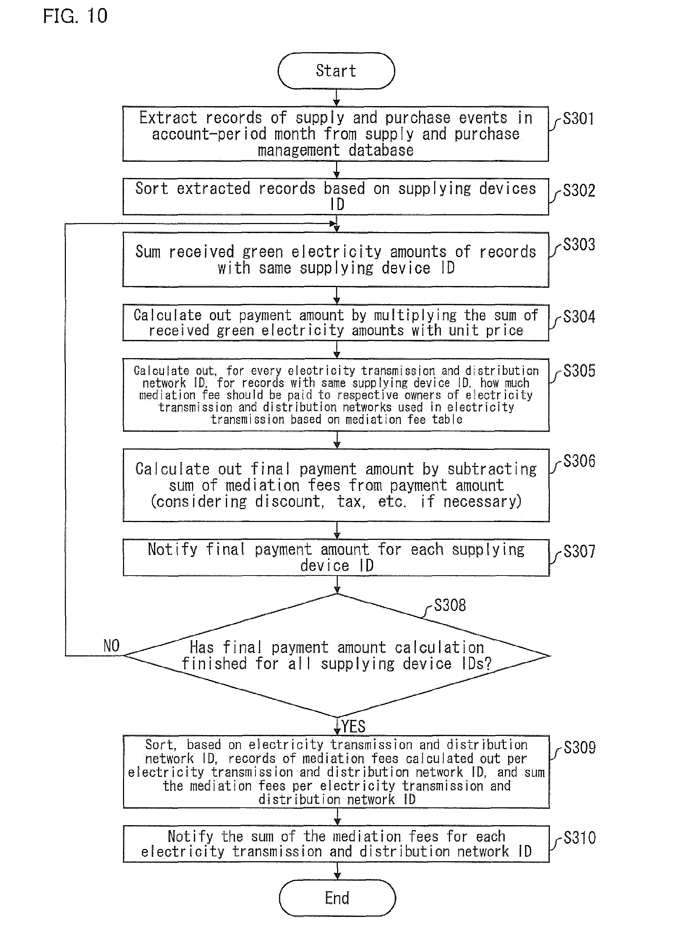

Fig. 10 is a flowchart illustrating a payment process among settling processes performed by the green electricity transaction settling device.

Fig. 11

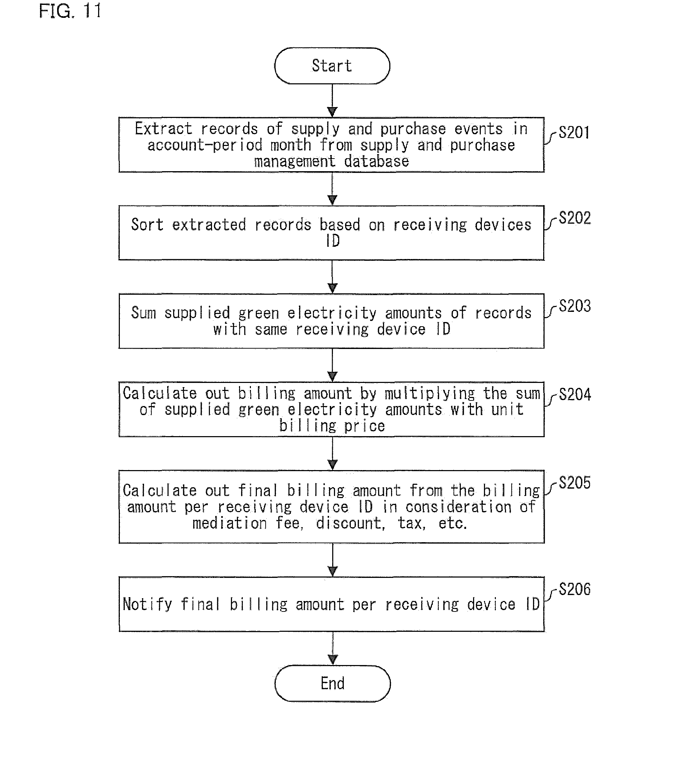

Fig. 11 is a flowchart illustrating a billing process among the settling processes performed by the green electricity transaction settling device.

Fig. 12

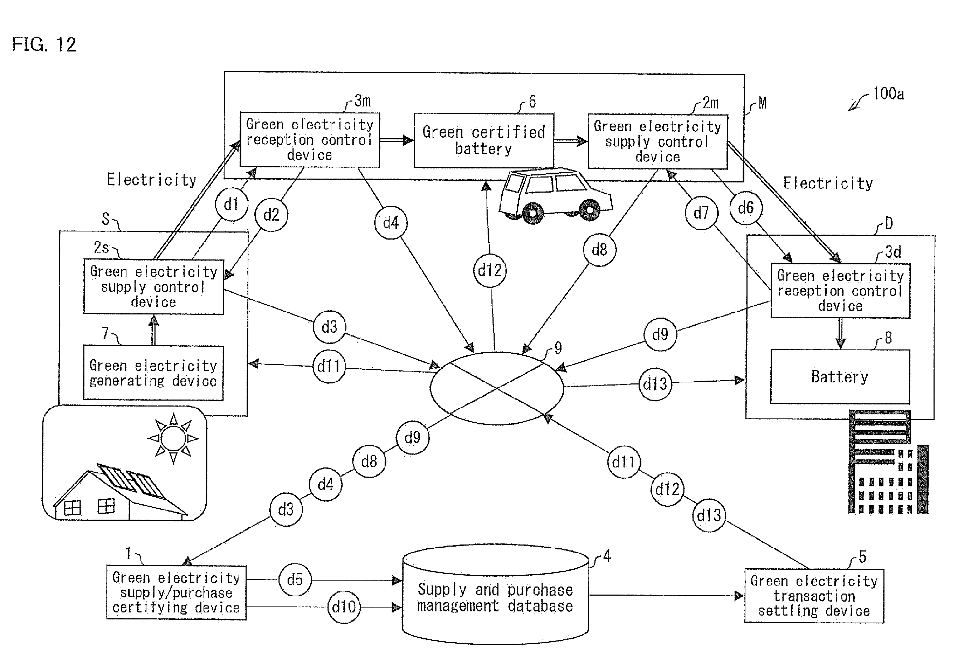

Fig. 12 is a schematically illustrating a green electricity supply and purchase system according to another embodiment according to the present invention.

Fig. 13

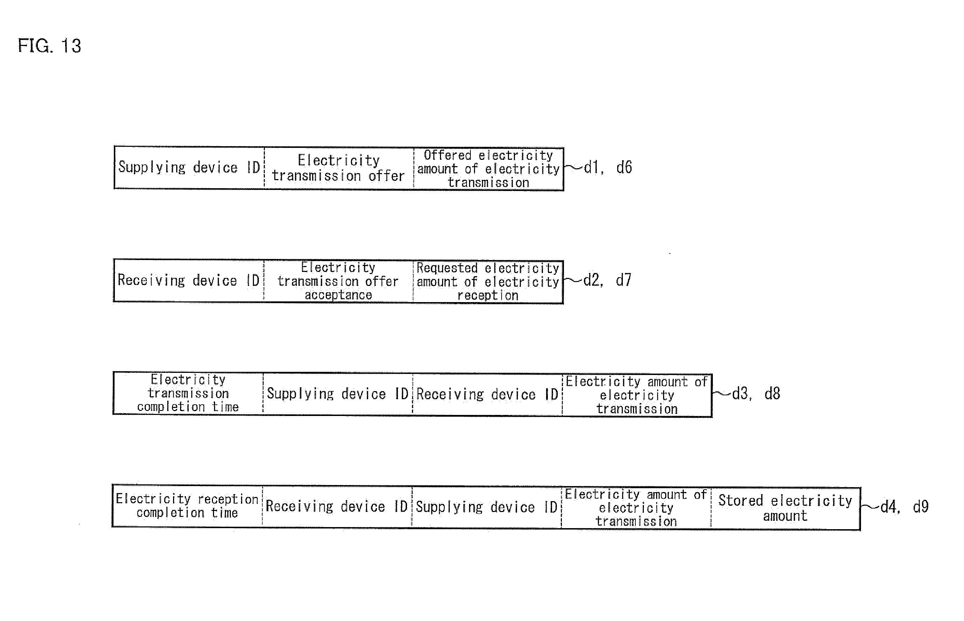

Fig. 13 is a view schematically illustrating a data structure transmitted or received by a green electricity supply control device or green electricity reception control device according to the another embodiment of the present invention, the data structure being for a supply offer, a supply offer acceptance, an electricity transmission completion report, and an electricity reception completion report.

Fig. 14

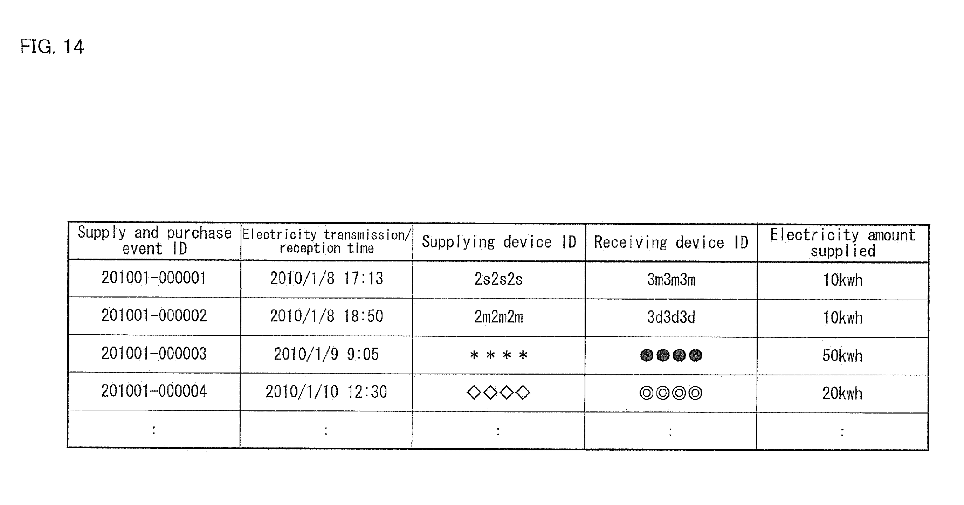

Fig. 14 is a view schematically illustrating a data structure of a supply and purchase management database in which records of supply and purchase information created by the green electricity supply/purchase certifying device according to one embodiment of the present invention.

Fig. 15

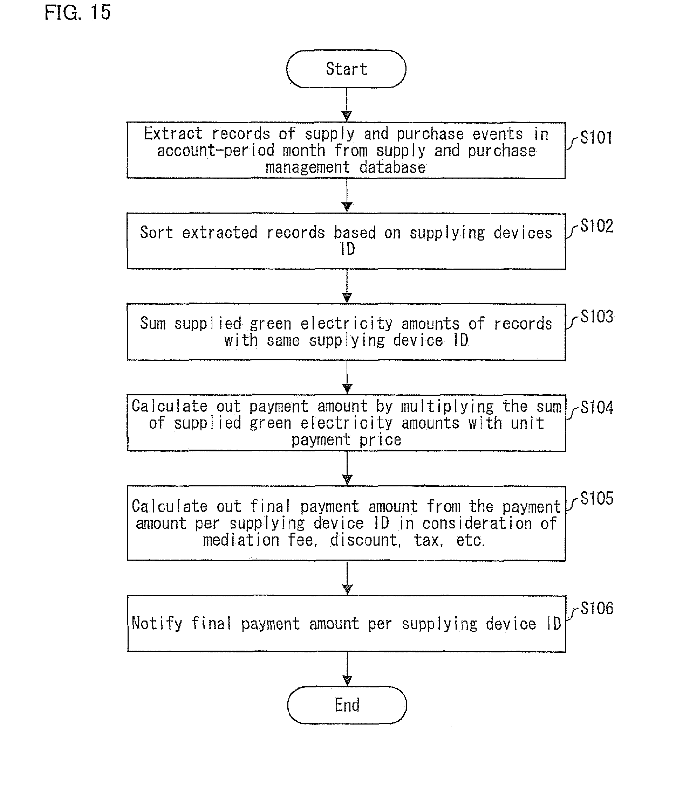

Fig. 15 is a flowchart illustrating a payment process among settling processes performed by the green electricity transaction settling device according to another embodiment of the present invention.

Fig. 16

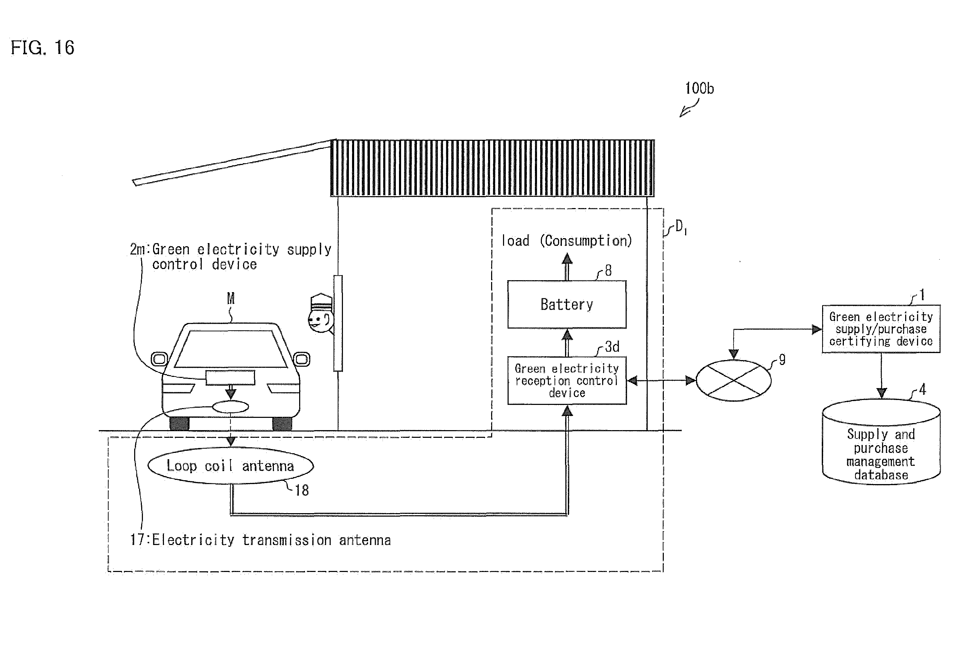

Fig. 16 is a view schematically illustrating a green electricity supply and purchase system for drive-through type.

Fig. 17

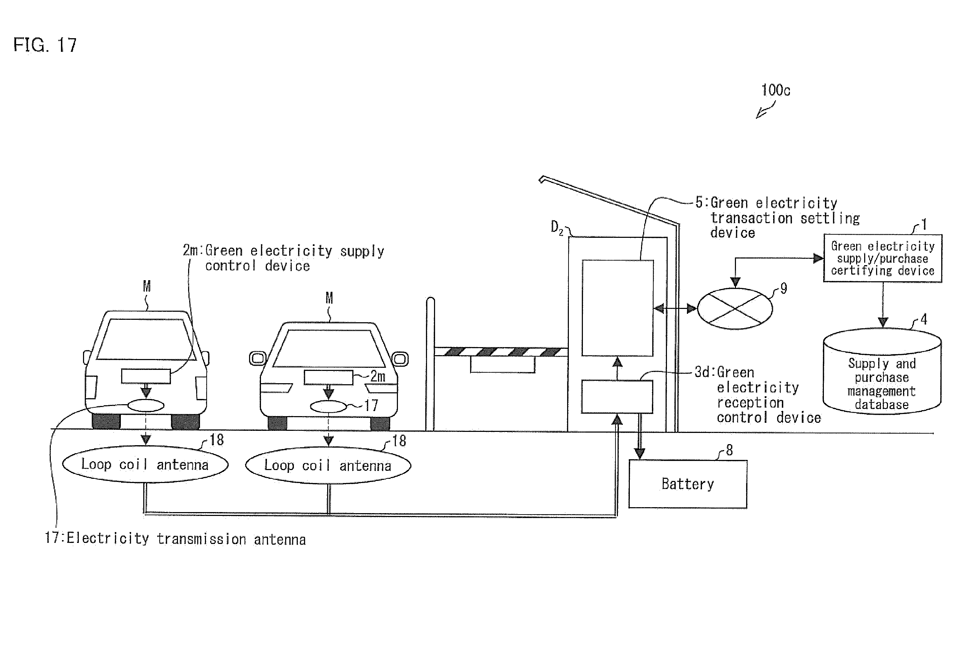

Fig. 17 is a view schematically illustrating a green electricity supply and purchase system for parking type.

Fig. 18

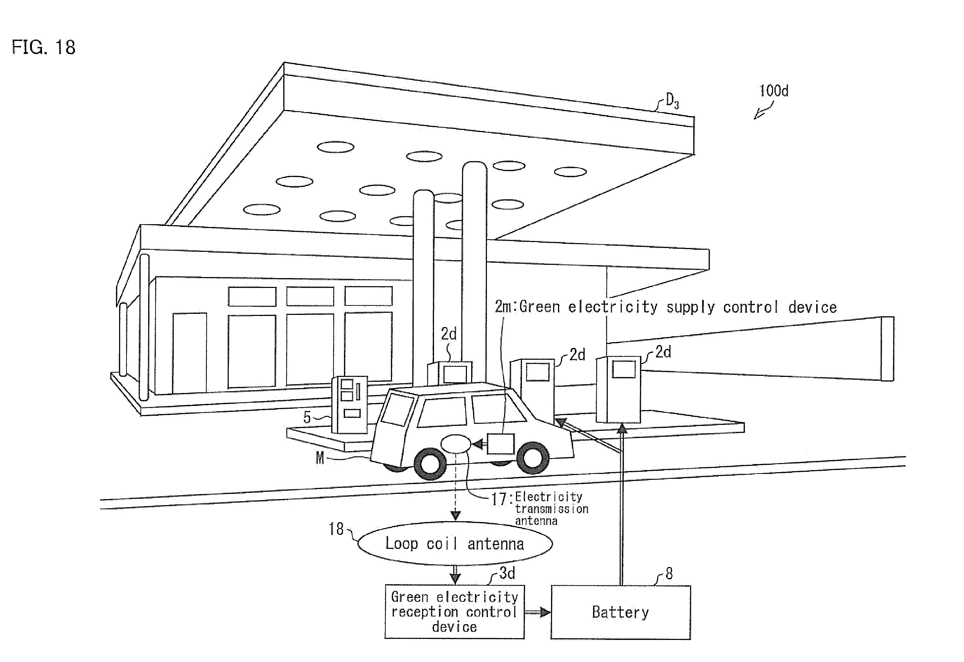

Fig. 18 is a view schematically illustrating a green electricity supply and purchase system for fuel station type.

Fig. 19

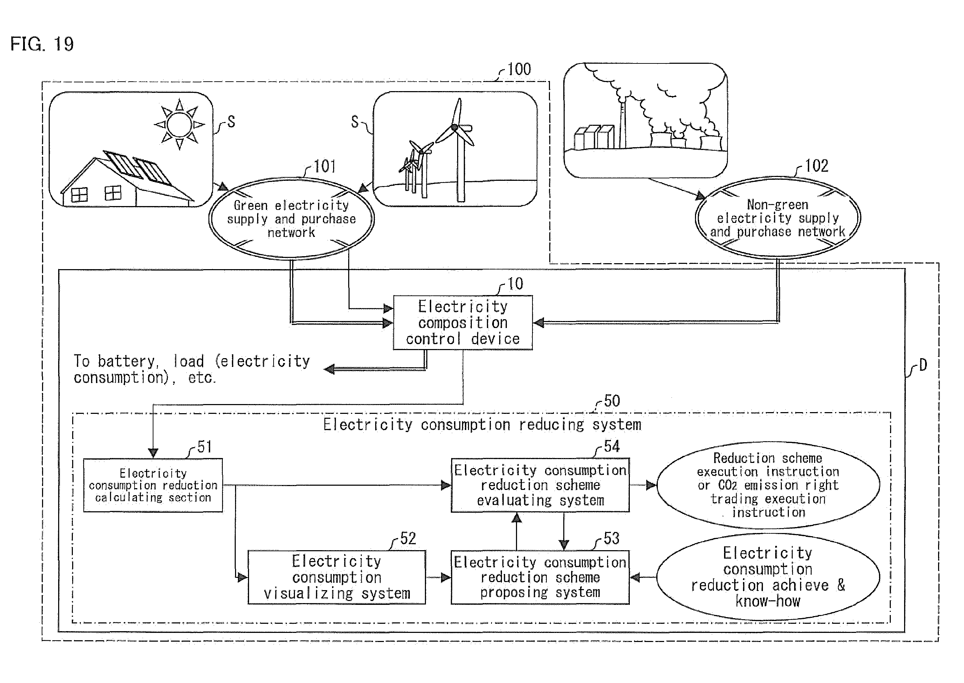

Fig. 19 is a schematically illustrating a green electricity supply and purchase system according to still another embodiment according to the present invention.

Fig. 20

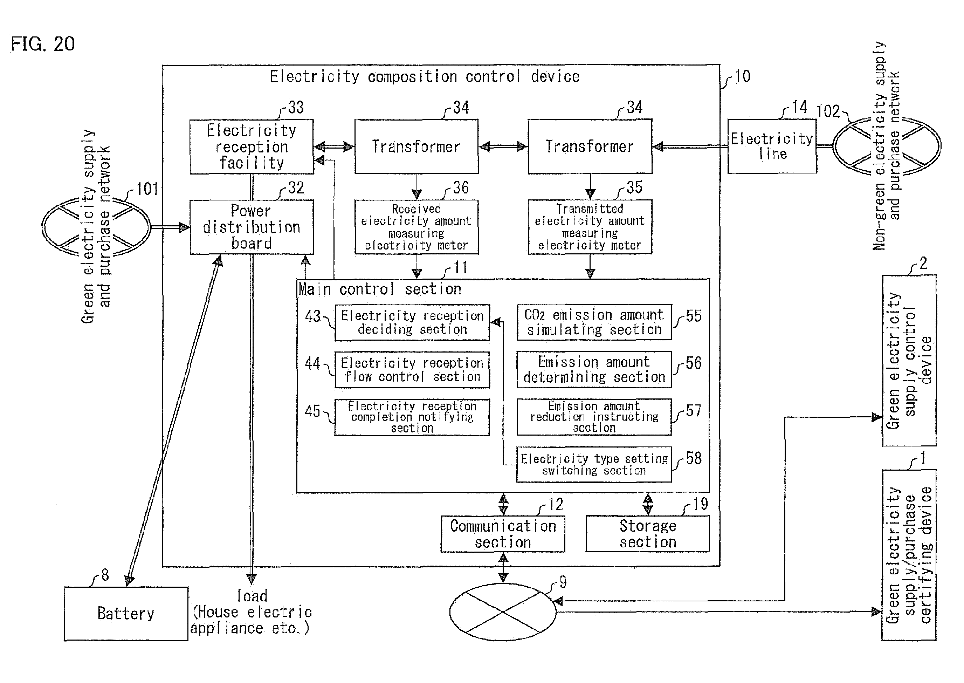

Fig. 20 is a block diagram illustrating main sections of an electricity composition control device according to the present invention.

Fig. 21

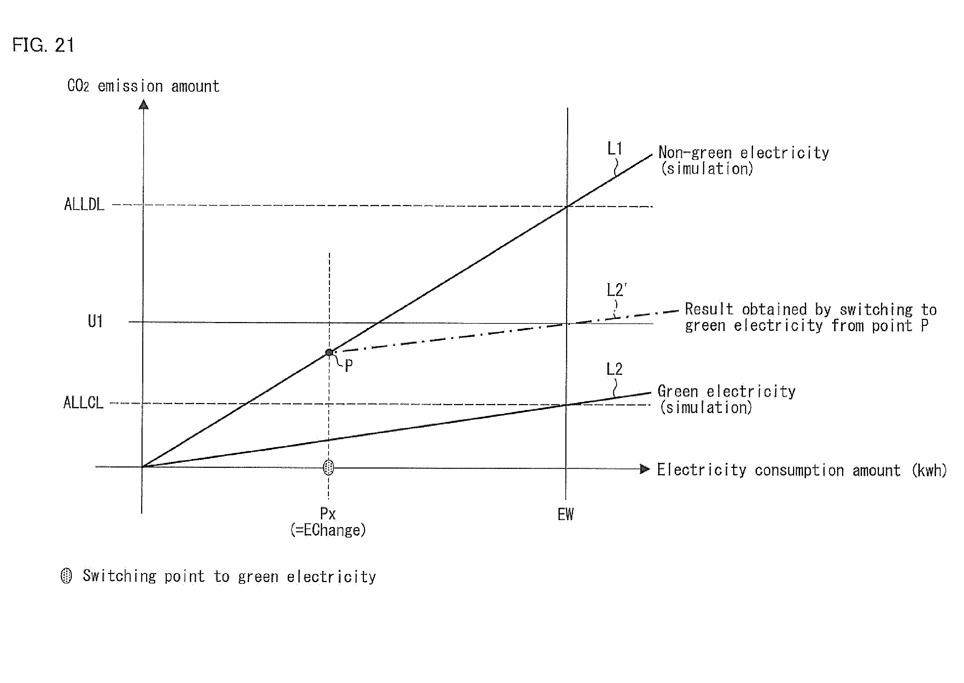

Fig. 21 is a graph illustrating a flow of a process performed by an electricity type setting switching section of the electricity composition control device according to the present invention in order to calculate out a switching point.

Fig. 22

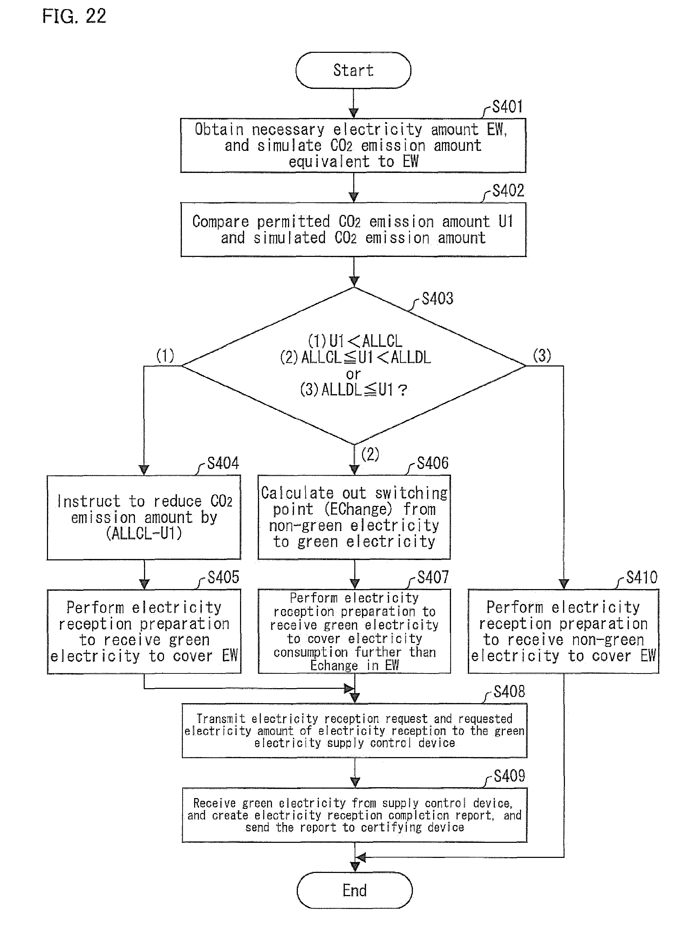

Fig. 22 is a flowchart illustrating a flow of an electricity mixing process performed by the electricity composition control device according to the present invention.

Fig. 23

Fig. 23 is a graph illustrating a price of green electricity and a predicted change in the price of green electricity in the future in a conventional green electricity certificate system.

Description of Embodiments

<<Embodiment 1>>

One embodiment according to the present invention is described below, referring to drawings.

A green electricity supply and purchase system according to the present embodiment is one for realizing direct supply and purchase of green electricity between a supplier and a purchaser by utilizing a large-scale electricity supply and distribution network of an electricity company (serving as a mediator and having large-scale electricity supply and distribution network and facilities, etc. in various places) in consideration of a transmission loss ratio of the large-scale electricity supply and distribution network, and for certifying that the electricity thus supplied and purchased is green electricity and realizing traceability of the green electricity.

[Green electricity supply and purchase system (1)]

Fig. 1 is a view schematically illustrating a green electricity supply and purchase system according to the present embodiment of the present invention.

The green electricity supply and purchase system according to the present invention includes a green electricity supply control device 2 belonging to a supplier (for example, $S_1$) for supplying green electricity, a green electricity reception control device 3 for receiving the green electricity, and a green electricity supply/purchase certifying device 1 for controlling and certifying supply and purchasing of the green electricity of these devices.

As one example, the present embodiment explains a green electricity supply and purchase system 100e in which green electricity generated at a facility (building) of a supplier (S) by wind power generation or solar power generation is transmitted via an electricity transmitting and distributing network N of an electricity company as a mediator (M), and is supplied to a company facility (D) of a purchaser. In the green electricity supply and purchase system 100e according to the present invention, the supplier (S) is $S_1$, which is a farm having a wind power generating device, or a house (building) having a solar power generating device (hereinafter, a house etc. $S_1$). The purchaser (D) is a company facility (building) $D_4$ or a corporation facility (building) $D_5$ in an area far from the house etc. $S_1$ (hereinafter, the explanation proceeds based on the company facility $D_4$). The mediators (M) are electricity companies $M_{1-6}$, having electricity transmission and distribution networks $N_{1-6}$ in respective areas (only the electricity companies $M_{1,2,}$ and $_4$, are illustrated in Fig. 1).

As illustrated in Fig. 1, the green electricity supply and purchase system 100e according to the present embodiment includes the green electricity supply control device 2 installed on the house etc. $S_1$ of the supplier, the green electricity reception control device 3 installed on a corporation facility $D_4$ of the purchaser, the green electricity supply/purchase certifying device 1 for tracing and managing green electricity transmitted and received between these entities, a supply and purchase management database 4 for storing events in the supply and purchase. The green electricity supply and purchase system 100e may further include a green electricity transaction settling device 5 for performing payment and billing processes (hereinafter, these processes are collectively referred to as transaction settling process) occurred in associated with the supply and the purchase of the green electricity.

In the present embodiment, the house etc. $S_1$ of the supplier is located in an "area KY", and is provided at least with a green electricity generating device 7 (not illustrated in Fig. 1, see Fig. 12), which is a wind power generating device or a solar power generating device, and the green electricity supply control device 2. The company facility $D_4$ of the purchaser is located in an "area K" is provided at least with the green electricity reception control device 3. The green electricity supply control device 2 and the green electricity reception control device 3 are connected via a communication network 9 such as the Internet, and capable of communicating and performing data transmission/reception with each other via the communication network 9.

The green electricity supply control device 2 is configured to supply green electricity to the green electricity reception control device 3. The green electricity supply control device 2 is configured (i) to communicate with the green electricity reception control device 3 so as to establish agreement in supplying and purchasing the green electricity and (ii) to transmit the green electricity after the agreement in supplying and purchasing the green electricity is established. The green electricity supply control device 2 is configured to report the green electricity supply/purchase certifying device 1 after completion of this green electricity supply that this green electricity supply and purchase event has occurred.

The green electricity power generating device 7 is a device for generating green electricity, and for example can be realized as a wind power generating device for performing electricity generation by use of wind power, or a solar panel for generating electricity from sun light.

The green electricity reception control device 3 is configured to receive green electricity supplied from the green electricity supply control device 2. The green electricity received by the green electricity reception control device 3 may be further transmitted to another green electricity reception control device 3, or may be consumed for operation and management in the company facility $D_4$. The green electricity reception control device 3 is configured (i) to communicate with the green electricity supply control device 2 so as to establish the agreement in supplying and purchasing the green electricity and (ii) to receive the green electricity after the agreement in supplying and purchasing the green electricity is established. The green electricity reception control device 3 is configured to report the green electricity supply/purchase certifying device 1 after completion of this green electricity reception that this green electricity supply and purchase event has occurred.

Each of the green electricity supply control device 2 and the green electricity reception control device 3 are connectable with the electricity transmitting and distributing networks N in their areas, respectively, via wired or wireless electrical connection means such as power cable, electricity transmitting/receiving antenna, etc. By this, the green electricity supply control device 2 and the green electricity reception control device 3 are capable of transmitting or receiving green electricity. Moreover, each of the green electricity supply control device 2 and the green electricity reception control device 3 is given a device ID to identify itself uniquely. The device ID is acceptable for the green electricity supply/purchase certifying device 1. The device ID is sent to the green electricity supply/ purchase certifying device 1 together with the information on the green electricity supply and purchase event, so that the green electricity supply/purchase certifying device 1 can identify the devices.

The green electricity supply/purchase certifying device 1 is configured to carry out registration and uniform management of the devices participating the supply and purchase of the green electricity, and to store and manage the green electricity supply and purchase event. By this, the green electricity supply/purchase certifying device 1 is capable of performing various certification, such as certifying how much green electricity is supplied from which supplier to which purchaser in a certain period of time, certifying which supplier supplies how much green electricity for a purchaser(s), certifying which purchaser received how much green electricity.

Moreover, the green electricity supply/purchase certifying device 1 also has a function of issuing, at a request of the supplier or the purchaser, a green electricity supply/purchase certificate on which a matter to be certified as above is certified.

Every time a supply and purchase event occurs, the green electricity supply/purchase certifying device 1 receives reports on the occurrence and completion of the event from the green electricity supply control device 2 and the green electricity reception control device 3, which participate in the event. The green electricity supply/purchase certifying device 1 checks whether the information from the green electricity supply control device 2 on this event and the information from and the green electricity reception control device 3 on this event are consistent with each other. If yes, the green electricity supply/purchase certifying device 1 stores a record of the supply and purchase event into the database 4. This prevents the green electricity supply control device 2 and the green electricity reception control device 3 from making false statement on the amount of the green electricity in favor of themselves. Thus, the supply and purchase management database 4 stores undoubtful accurate information in association with the supply and purchase (transfer) of the green electricity.

The green electricity transaction settling device 5 is configured to perform the transaction settling process. The transaction settling process encompass (i) calculating a charged amount to be paid or billed from/to the entities participating the supply and purchase of the green electricity according to the amount of the green electricity supplied or purchased, (ii) performing the payment (or billing), for example.

The green electricity transaction settling device 5 reads out the data on the supply and purchase event from the supply and purchase management database 4 where the data is stored. Then, the green electricity transaction settling device 5 calculates out the amount of payment, the amount to be billed, etc. based on the information on the purchaser and the amount of the green electricity supplied, which information is contained in the data thus read out.

It is preferable that the supply and purchase management database 4 be connected with the green electricity supply/purchase certifying device 1 and the green electricity transaction settling device 5 in such a way that the supply and purchase management database 4 is writable and readable by the green electricity supply/purchase certifying device 1, but is only readable for the green electricity transaction settling device 5. In the present embodiment, it is preferable that the supply and purchase management database 4 be accessed, via a fire wall or via an access-controlled communication network (not illustrated), from the green electricity supply/purchase certifying device 1 or from the green electricity transaction settling device 5, rather than being directly connected to the communication network 9. This prevents accessing to the supply and purchase management database 4 from the green electricity supply control device 2 or the green electricity reception control device 3 directly.

With this configuration, the green electricity generated by the green electricity generating device 7 of the house etc. $S_1$ of the supplier is transmitted to the electricity transmitting and distributing network $N_1$ of the electricity company $M_1$ in the same area as the house etc. $S_1$. Then, via the electricity transmitting and distributing network $N_2$, the green electricity is transmitted to the company facility $D_4$ from the electricity transmitting and distributing network $N_4$ of the electricity company $M_4$ located in the same area as the company, which is the purchaser. By this, the green electricity is supplied directly from the green electricity supply control device 2 of the supplier to the green electricity reception control device 3 of the purchaser.

The green electricity supply and purchase system 100e according to the present invention is configured such that the green electricity supply and purchase is associated with the transmission and reception of the data on the supply and purchase event. In the example of the green electricity transmission, the transmission and reception of the data associated with the green electricity transmission is as follows, substantially.

The green electricity supply control device 2 of the house etc. $S_1$ sends a supply offer (supply offer d1) to the green electricity reception control device 3 of the company facility $D_4$ via the communication network 9. In response to this, the green electricity reception control device 3 transmits an offer acceptance (supply offer acceptance d2) to the green electricity supply control device 2 via the communication network 9. By this, the agreement on the green electricity supply and purchase is established.

If the green electricity supply control device 2 receives the supply offer acceptance d2, the green electricity supply control device 2 transmits the green electricity to the green electricity reception control device 3 in an amount determined in transmitting the supply offer d1. The green electricity thus transmitted is supplied to the green electricity reception control device 3 via the transmitting and distributing networks $N_1$, $N_2$, and $N_4$ in this example illustrated in Fig. 1. The green electricity reception control device 3 stores the received green electricity in a battery 8 (not illustrate) or the like. At an arbitrary timing after the completion of the transmission and reception of the green electricity, the green electricity supply control device 2 transmits the an electricity transmission completion report d3 (electricity transmission track record information) to the green electricity supply/purchase certifying device 1 via the communication network 9. On the other hand, at an arbitrary timing, the green electricity reception control device 3 transmits an electricity reception completion report d4 (electricity reception track record information) to the green electricity supply/purchase certifying device 1 via the communication network 9.

The green electricity supply/purchase certifying device 1 checks the electricity transmission completion report d3 and the electricity reception completion report d4, so as to confirm that one supply and purchase event to supply the green electricity from the green electricity supply control device 2 to the green electricity reception control device 3 has occurred. Then, the green electricity supply/purchase certifying device 1 stores, as one record, supply and purchase information d5 on the supply and purchase event in the supply and purchase management database 4.

After that, at an arbitrary timing (for example, on a monthly accounting date), the green electricity transaction settling device 5 extracts a necessary record(s) on the supply and purchase information from the supply and purchase management database 4, and performs the transaction settling process with the record(s). For example, the green electricity transaction settling device 5 may inform, to the entity(ies), an amount of payment (bill) for the amount of the green electricity transmitted and received. For example, the green electricity transaction settling device 5 may inform a for-supply amount payment amount d11 to the supplier having the green electricity supply control device 2, a for-mediation amount payment amount d12 to the mediators (the electricity companies $M_1$, $M_2$, and $M_4$) having the electricity transmitting and distributing network $N_1$, $N_2$, and $N_4$, and a for-received amount billed amount d13 the purchaser having the company facility $D_4$.

As described above, according to the green electricity supply and purchase system 100e of the present invention, the green electricity is supplied, transported, and received by the green electricity supply control device 2, the green electricity reception control device 3, and the electricity transmitting and distributing network(s) N, each of which are identifiable by the green electricity supply/purchase certifying device 1. The green electricity supply/purchase certifying device 1 manages the direct supply and purchase of the green electricity between the identifiable green electricity supply control device 2 and the identifiable green electricity reception control device 3 in such a way that the supply and purchase of the green electricity can be certified. This avoids a risk that the green electricity is mixed in the supply and purchase of the non-green electricity. Moreover, the green electricity is supplied and purchased between the devices identifiable by the green electricity supply/purchase certifying device 1, and every green electricity supply and purchase event is stored and managed by the green electricity supply/purchase certifying device 1, thereby realizing traceability of the green electricity.

That is, it is guaranteed by the green electricity supply/purchase certifying device 1 that the electricity transmitted between the devices is certainly green electricity. In association of the transmission of the green electricity, the devices perform communication by which the data on the supply and purchase event is transmitted and received. By this, the green electricity supply/purchase certifying device 1 can trace the green electricity. Moreover, the green electricity supply/purchase certifying device 1 has the function of checking whether or not the data from the supplier and the data from the purchaser contradict with each other. This makes it possible to detect false data and to discourage against making such false data.

This makes it possible to establish an electricity supply and purchase system, which realizes traceability of the green electricity without allowing false statement.

Next, structures of the devices provided in the green electricity supply and purchase system 100e are described in more details.

[Structure of Green electricity supply/purchase certifying device]

Fig. 2 is a block diagram illustrating a main structure of a green electricity supply/purchase certifying device 1 according the present invention. As illustrated in Fig. 2, the green electricity supply/purchase certifying device 1 according to the present embodiment includes a main control section 11, a communication section 12, an electricity transmission/reception completion report temporary storage section 13, and a storage section 19.

The communication section 12 is configured to communicate with an external device via the communication network 9. The communication section 12 receives the electricity transmission completion report from the green electricity supply control device 2 via communication, and receives the electricity reception completion report from the green electricity reception control device 3 via communication.

The electricity transmission/reception completion report temporary storage section 13 is configured to temporally store the electricity transmission completion report and the electricity reception completion report. The electricity transmission/reception completion report temporary storage section 13 is a so-called working memory, and may be a RAM or the like.

The storage section 19 is configured to store a control program and an OS program, which the main control section 11 executes, and various data, which the main control section 11 performs any one of various functions of the green electricity supply/purchase certifying device 1. For example, information on the devices and green-certified batteries 6, which are registered or approved, and information necessary to issue a green electricity supply and purchase certificate are stored in the storage section 19.

The main control section 11 is configured to perform integral control of sections that the green electricity supply/purchase certifying device 1 includes. The main control section 11 includes, as its functional block, an electricity transmission/reception completion report acquiring section 20, an electricity transmission/reception completion report checking section 21, a supply and purchase information processing section 22, and a certificate issuing section 23.

The electricity transmission/reception completion report acquiring section 20 receives the electricity transmission completion report and the electricity reception completion report received by the communication section 12, and store the electricity transmission completion report and electricity reception completion report in the electricity transmission/reception completion report temporary storage section 13. Moreover, the electricity transmission/reception completion report acquiring section 20 also has a function of deleting a pair of the electricity transmission completion report and the electricity reception completion report from the electricity transmission/reception completion report temporary storage section 13 after new supply and purchase information is generated for the pair of the electricity transmission completion report and the electricity reception completion report, so that the electricity transmission/reception completion report acquiring section 20 regards the pair as processed one.

The electricity transmission/reception completion report checking section 21 checks the electricity transmission completion report and the electricity reception completion report, which are received as a pair regarding one supply and purchase event. The electricity transmission/reception completion report checking section 21 checks whether or not the electricity transmission completion report and the electricity reception completion report are consistent with each other, so as to judge whether it is no problem to associate the electricity transmission completion report and the electricity reception completion report with each other as a pair.

The supply and purchase information processing section 22 processes the data pair of the electricity transmission completion report and the electricity reception completion report, which is judged as being consistent with each other by the electricity transmission/reception completion report checking section 21. The supply and purchase information processing section 22 processes the data pair into one record that is associated with the supply and purchase event by one-to-one correspondence, thereby generating supply and purchase information. The supply and purchase information created by the supply and purchase information processing section 22 is stored in the supply and purchase management database 4.

Operation performed by the electricity transmission/reception completion report checking section 21 and the supply and purchase information processing section 22 will be described later together with explanation on data structures of the electricity transmission completion report, the reception completion report, and the supply and purchase information.

The certificate issuing section 23 is configured to issue a green electricity supply/purchase certificate at a request of the device on the supplier side (green electricity supply control device 2) or on the purchaser side (green electricity reception control device 3). In the present embodiment, the green electricity supply/purchase certificate is a certificate to certify, by showing the amount of the green electricity, that the owner of the device contributes to reduction in a warm-house effect gas ($CO_2$) emission by the green electricity generation (supply) and use (consumption).

For example, by a green electricity supply/purchase certificate showing a green electricity amount X kwh supplied from the green electricity supply control device 2s, it is proved that the supplier to which the house etc. $S_1$ belongs has generated the green electricity in the green electricity amount X kwh. The supplier can prove, to a third party, supplier's contribution as much as green electricity amount X kwh to the warm-house effect gas ($CO_2$) emission reduction by using the green electricity certificate. Meanwhile, by a green electricity supply/purchase certificate issued for a purchaser to which the company facility $D_4$ or the like belongs, it is proved that the purchaser to which the company facility $D_4$ or the like belongs has received (or purchased) green electricity of X kwh. By using the green electricity supply/purchase certificate, the company as the purchaser can show to a third party how much the company has reduced the warm-house effect gas ($CO_2$), compared with a case where the company uses non-green electricity of X kwh instead of the purchased amount of X kwh.

The certificate issuing section 23 extracts, from the supply and purchase management database 4, the supply and purchase information necessary for issuing the green electricity supply and purchase certificate. Here, as to a template part of the green electricity supply and purchase certificate, the template part of the green electricity supply and purchase certificate may be stored in the storage section 19 of the green electricity supply/purchase certifying device 1, and the certificate issuing section 23 may obtain it from the storage section 19. Moreover, the certificate issuing section 23 may be configured to issue the green electricity supply/purchase certificate in the form of electric data and transmit the electric data to the device, which requested the green electricity supply/purchase certificate. As one alternative, the certificate issuing section 23 may be configured to print out the green electricity supply/purchase certificate on a paper medium.

The functional blocks of the main control section 11 described above can be realized by a CPU (central processing unit) reading a program from a memory device (storage section 19) realized by a ROM (read only memory) or the like, and then running the program on a RAM (random access memory) or the like (not illustrated).

[Data Structure of Various Data]

Fig. 3 is a view schematically illustrating data structures of various data transmitted or received by the green electricity supply control device 2 or the green electricity reception control device 3. Fig. 4 is a view schematically illustrating a data structure of the supply and purchase management database 4 in which the record of the supply and purchase information generated in the green electricity supply/purchase certifying device 1.

Among the data illustrated in Fig. 3, d3 is the electricity transmission completion report d3 transmitted from the green electricity supply control device 2.

As illustrated in Fig. 3, the electricity transmission completion report d3 includes, at least, fields of "transmission completion time", "supplying device ID (electricity transmission sender ID)", and "receiving device ID (electricity transmission receiver ID)" in a text (also called "body"). Furthermore, in the present embodiment, the electricity transmission completion report d3 includes, "electricity amount E0 of electricity transmission " actually transmitted from the supplying device, and "electricity amount E1 of electricity reception" in which a transmission loss is subtracted. Further, the electricity transmission completion report d3 may include an electricity transmission and distribution network ID of the first network the electricity passed through (for example, "$N_1$"). Even though it is not illustrated herein, the electricity transmission completion report d3 may have a header containing data type information indicating that this data is a electricity transmission completion report.

The "electricity transmission completion time" indicates a time at which the green electricity transmission in one supply and purchase event to transmit the green electricity from the green electricity supply control device 2 toward its counterpart is completed. For example "2010/1/8 17:13" is stored as electricity transmission completion time.

The "supplying device ID" indicates identification information of the green electricity supply control device 2 that performed the electricity transmission in the supply and purchase event. Here, every device has been given their unique identification information in advance, so that the green electricity supply/purchase certifying device 1 can integrally manage the devices. For example, "2s2s2s" or the like is stored.

The "recovering device ID" indicates identification information of the green electricity reception control device 3, which is the counterpart to which the green electricity supply control device 2 transmitted the green electricity in the supply and purchase event. For example, "3d4" or the like is stored.

The "electricity amount E0 of electricity transmission" indicates the amount of the green electricity transmitted from the green electricity supply control device 2 to the counterpart in the supply and purchase event. For example, "120 kwh" or the like is stored.

The "electricity amount E1 of electricity reception" indicates the amount of the green electricity that the green electricity reception control device 3 actually received via the electricity transmission and distribution network N of the mediator which is located in the same area as the green electricity reception control device 3. That is, the "electricity amount E1 of electricity reception" indicates the actually received amount of the electricity reduced by the transmission loss. For example, "100 kwh" or the like is stored. The information of the electricity amount E1 of electricity reception is notified to the green electricity supply control device 2 from the green electricity reception control device 3, for example, via the communication network 9.

Among the data illustrated in Fig. 3, d4 is the electricity reception completion report d4 transmitted from the green electricity reception control device 3.

As illustrated in Fig. 3, the electricity reception completion report includes, at least, fields of "electricity reception completion time", "receiving device ID", and "supplying device ID" in a digital text (also called "body"). Further, in the electricity reception completion report electricity completion report d4 includes the actual "electricity amount E0 of electricity transmission" having been notified from the green electricity supply control device 2, and the "electricity amount E1 of electricity reception" of the electricity that the supplying device actually received. Further, the electricity reception completion report d4 may include an electricity transmission and distribution network ID of the last network the electricity passed through (for example, "$N_4$"), which indicates from which electricity transmission and distribution network N the electricity was received. If the green electricity reception control device 3 is provided with an electrical storage device such as a battery or the like, the electricity reception completion report d4 may additionally include a field in which a "stored electricity amount" indicating an amount of the electricity finally stored in the electrical storage device (i.e., an electricity amount that can be actually used) in this supply and purchase event.

The "electricity reception completion time" indicates time at which the green electricity reception control device 3 completed the electricity reception of the green electricity from its counterpart in one supply and purchase event. This time is supposed to be coincident or almost coincident with the "electricity transmission completion time" for the same supply and purchase event. For example, "2010/1/8 17:13" is stored.

The "receiving device ID" indicates identification information of the green electricity reception control device 3 that performed the electricity reception. In case the electricity reception completion report d4 is paired with the electricity transmission completion report d3 above, "3d4" is stored.

The "supplying device ID" indicates the identification information of the green electricity supply control device 2 that performs the electricity transmission as the counterpart of the green electricity reception control device 3. In case the electricity reception completion report d4 is paired with the electricity transmission completion report d3 above, "2s2s2s" is stored.

The "electricity amount E0 of electricity transmission " indicates the amount of the green electricity transmitted from the green electricity supply control device 2 to its counterpart in the supply and purchase event. For example, "120 kwh" or the like is stored. The information of the electricity amount E0 of electricity transmission is transmitted from the green electricity supply control device 2 to the green electricity reception control device 3 for example via the communication network 9.

The "electricity amount E1 of electricity reception" indicates the amount of the green electricity actually received by the green electricity reception control device 3 from an electricity transmission and distribution network N nearest to the green electricity reception control device 3. That is, the electricity amount E1 of electricity reception indicates an amount of the received green electricity reduced by the transmission loss caused in the electricity transmission and distribution network(s) N, which the green electricity has passed through. For example, "100 kwh" etc. is stored.

By receiving the electricity transmission completion report d3 and the electricity reception completion report d4, the green electricity supply/purchase certifying device 1 can grasp "when green electricity of what kwh is transmitted from who to whom" for a supply and purchase event.

The electricity transmission/reception completion report checking section 21 is configured to read out, from the electricity transmission/reception completion report temporal storage section 13, the electricity transmission completion report d3 and the electricity reception completion report d4 thus received. The electricity transmission/reception completion report checking section 21 checks each field in the electricity transmission completion report d3 and the electricity reception completion report d4 so as to judge whether the electricity transmission completion report d3 and the electricity reception completion report d4 are consistent with each other.

More specifically, the electricity transmission/reception completion report checking section 21 checks (1) whether or not the "electricity transmission completion time" and the "electricity reception completion time" are consistent with each other without exceeding a predetermined allowance (for example, several minutes or less). If these times are temporally different from each other excessively, the electricity transmission/reception completion report checking section 21 judges that the "electricity transmission completion time" and the "electricity reception completion time" are inconsistent with each other, and cannot be paired.

Next, the electricity transmission/reception completion report checking section 21 checks (2) whether or not the "supplying device ID" in the electricity transmission completion report and the "supplying device ID" in the electricity reception completion report are identical with each other, and whether or not the "receiving device ID" in the electricity transmission completion report and the "receiving device ID" in the electricity reception completion report are identical with each other. If these IDs are not identical, the electricity transmission/reception completion report checking section 21 judges that the electricity transmission completion report and the electricity reception completion report cannot be a pair for one supply and purchase event.

Next, the electricity transmission/reception completion report checking section 21 checks (3) whether or not the "electricity amount E0 of electricity transmission " in the electricity transmission completion report and the "electricity amount E0 of electricity transmission " in the electricity reception completion report are consistent with each other without exceeding a predetermined allowance (for example, less than 1 kwh), and whether or not the "electricity amount E1 of electricity reception" in the electricity transmission completion report and the "electricity amount E1 of electricity reception" in the electricity reception completion report are consistent with each other without exceeding a predetermined allowance (for example, less than 1 kwh). If there is a significant difference in these amounts (collectively "supplied electricity amounts"), the electricity transmission/reception completion report checking section 21 judges that the electricity transmission completion report and the electricity reception completion report cannot be a pair for one supply and purchase event, on suspicion that there is any false statement in either the electricity transmission completion report and the electricity reception completion report, or that these reports are truly not a pair.

In this concrete example, it is consistent that the electricity transmission completion time and the electricity reception completion time are "2010/1/8 17:13" and the supplying device ID is "2s2s2s", and the receiving device ID is "3d4", and the electricity amount E0 of electricity transmission is "120 kwh", and the electricity amount E1 of electricity reception is "100 kwh". Thus, in this case, the electricity transmission/reception completion report checking section 21 judges that the electricity transmission completion report d3 and the electricity reception completion report d4 are paired data for one supply and purchase event.

The electricity transmission/reception completion report checking section 21 sends, to the supply and purchase information processing section 22, the electricity transmission completion report d3 and the electricity reception completion report d4 thus paired as the result of the checking. The electricity transmission/reception completion report checking section 21 may be configured such that, if the electricity transmission completion report d3 and the electricity reception completion report d4 could not be paired, the electricity transmission/reception completion report checking section 21 compares such an unpaired completion report with another data, or notifies the sender of the completion report that the completion report failed to be paired, and requests resending correct data.

The supply and purchase information processing section 22 create supply and purchase information d5 based on the electricity transmission completion report d3 and the electricity reception completion report d4 thus paired.

More specifically, in the present embodiment, the supply and purchase information processing section 22 creates data on the one supply and purchase event in such a way that duplication of the information in each field in the completion reports are eliminated. The supply and purchase information processing section 22 gives a "supply and purchase event ID" to the data, so that the data can be managed as one record. Thereby, the supply and purchase information processing section 22 creates supply and purchase information d5. For example, the supply and purchase information processing section 22 creates supply and purchase information d5 of the record labeled as "supply and purchase event ID; 201001-000001" as illustrated in Fig. 4.

As illustrated in Fig. 4, the supply and purchase information d5 is constituted in such that the "supply and receive completion time", "supplying device ID", "receiving device ID", "electricity amount E1 of electricity reception" , "transmitted amount E0", and "transited electricity transmission and distribution network" are associated with the "supply and purchase event ID" without duplication. In the above example, the supply and purchase information processing section 22 creates supply and purchase information d5 in which "2010/1/18 17:13", "2s2s2s", "3d4", "100 kwh", "120 kwh", and "$N_1 \rightarrow N_2 \rightarrow N_4$" are associated with the "201001-000001".

As illustrated in Fig. 4, in the present embodiment, the supply and purchase information processing device 22 gives the supply and purchase information d5 the "supply and purchase event ID" and solving the duplication of the field in creating the supply and purchase information d5. Further, the supply and purchase information processing device 22 identifies the mediating electricity transmission and distribution network route(s) (field name "transited electricity transmission and distribution network") based on where the supplier and the purchaser are.

The storage section 19 (Fig. 2) includes an electricity transmission and distribution network information storage section (not illustrated) for storing information on the electricity transmission and distribution network N of each mediator (electric company M). The electricity transmission and distribution network information may be association of (i) an electricity transmission and distribution network ID, (ii) information on the area covered by the electricity transmission and distribution network, and (iii) an approximate average transmission loss rate in the electricity transmission and distribution network. As one alternative, the electricity transmission and distribution network information may include nationwide map information of electricity and distribution network.

The supply and purchase information processing section 22 of the green electricity supply/ purchase certifying device 1 performs route identification in reference with the electricity transmission and distribution network information stored in the electricity transmission and distribution network information storage section, whereby the supply and purchase information processing section 22 identifies, based on the area (area KY) of the supplier and the area (area K) of the purchaser, a transit route through which the green electricity would be transmitted from the suppler to the purchaser. In this example, the supply and purchase information processing section 22 identifies the rough from the house etc. $S_1$ to the company facility $D_4$ as the electricity transmission and distribution network $N_1 \rightarrow$ the electricity transmission and distribution network $N_2 \rightarrow$ the electricity transmission and distribution network $N_4$. The supply and purchase information processing section 22 may perform the route identification by referring to the electricity transmission and distribution network ID of the first or last electricity transmission and distribution network N that the green electricity passed through, if the electricity transmission completion report d3 and the electricity reception completion report d4 contain the electricity transmission and distribution network ID. Moreover, if a plurality of routes are possible, the supply and purchase information processing section 22 may select a route lowest in the transmission loss, a route smallest in a number of the transit electricity transmission and distribution network, a route lowest in mediation fee, a route shortest in transmission distance, or the like.

The supply and purchase information d5 thus created is stored in the supply and purchase management database 4 in series. By reading out the supply and purchase information d5, the certificate issuing section 23 of the green electricity supply/purchase certifying device, or the green electricity transaction settling device 5 can grasp "when the green electricity of how much kwh is transmitted from who to whom" for one supply and purchase event.

This configuration makes it possible for the green electricity supply/purchase certifying device 1 using the existing electricity transmission and distribution networks N to (i) guarantee that the electricity is green electricity in the supply and purchase event happened between the house etc. $S_1$ and the company facility $D_4$, (ii) certify that green electricity is supplied and purchased in the event, and (iii) realize the traceability of the supply and purchase of the green electricity in the event,

[Configuration of Green Electricity Supply Control Device]

Fig. 5 is a block diagram illustrating a main part of a configuration of a green electricity supply control device according to the present invention. Note that the members labeled with the like reference numerals in Fig. 5 and the views referred above are one having the like function and like structures in terms of hardware. Therefore, their explanation is not be repeated here.

As illustrated in Fig. 5, the green electricity supply control device 2 in the present embodiment includes the main control section 11, the communication section 12, the storage section 19, a transmitted electricity measuring electricity meter 35, and a received electricity measuring electricity meter 36.

In the present embodiment, the green electricity supply control device 2 may have a section regarding the electricity supply or the electricity reception, in addition to these sections above. In this case, the green electricity supply control device 2 may include a power distribution board 32, an electricity receiving facility 33, and transformers 34 (a transformer 34 for electricity transmission and a transformer 34 for electricity reception), wherein the main control section 11 controls the power distribution board 32, the electricity receiving facility 33, and the transformers 34. These sections may be ones employing conventional techniques as appropriate, and therefore, their explanation is omitted here.

If the green electricity supply control device 2 illustrated in Fig. 5 is a green electricity supply control device 2 provided to the house etc. $S_1$, the green electricity generated by the wind power generating device or the solar power generating device (green electricity generating device 7) is temporally received by the electricity receiving facility 33 via the power distribution board 32. When performing the electricity transmission, the power distribution board 32 and the electricity receiving facility 33 operate under the control of the main control section 11, so as to transmit the green electricity from the electricity receiving facility 33 to an electricity transmission and distribution network N near the house etc. $S_1$, via the transformer 34, and an electricity line 14 (as an electrical connecting means). The amount of the green electricity thus transmitted is measured by the transmitted electricity meter 35, and is notified to the main control section 11.

The communication section 12 communicates with the green electricity reception control device 3 via the communication network 9, so as to send the supply offer d1 to the green electricity reception control device 3 for the purpose of establishing the agreement of green electricity supply and purchase, or so as to receive the supply offer acceptance d2 from the green electricity reception control device 3. Further, the communication section 12 communicates with the green electricity supply/purchase certifying device 1 in order to send the electricity transmission completion report d3.

The storage section 19 is configured to store a control program and an OS program, which the main control section 11. runs, and to store various data, which the main control section 11 reads out in executing various functions of the green electricity supply control device 2.

The main control section 11 is configured to perform overall control for the sections of the green electricity supply control device 2, and includes, as functional blocks, an electricity transmission deciding section 40, an electricity transmission flow control section 41, and an electricity transmission completion notifying section 42.

The electricity transmission determining section 40 is configured to establish an agreement on the supply and purchase of electricity with the green electricity reception control device 3 via the communication section 12 and decide how much electricity is to be transmitted.

For example, if a user instructs the green electricity supply control device 2 to supply green electricity to a green electricity reception control device 3, the instruction triggers the electricity transmission determining section 40 to create a supply offer d1 of the green electricity of an amount that the user desires, and to send the supply offer d1 to the green electricity reception control device 3 that the user specified. A data structure of the supply offer d1 is illustrated in Fig. 3. The example illustrated in Fig. 3, the electricity transmission deciding section 40 creates a supply offer d1 including a field of "supplying device ID" for storing the supplying device ID of the device the electricity transmission deciding section belongs, a filed of "electricity transmission offer" for storing a message telling this is an offer of electricity supply, and a field of "offered electricity amount to transmit" for storing an amount of electricity to be transmitted, which amount the user specified.

One alternative is such that if the green electricity supply control device 2 receives a request (supply request d1') from the green electricity reception control device 3, the electricity reception request d1' requesting supply of green electricity, the electricity transmission deciding section 40 creates an supply request acceptance d2' and transmits the supply request acceptance d2' to the green electricity reception control device 3 in response to the supply request d1'. In this case, the supply request acceptance d2' includes a field of "supply request acceptance" instead of the filed of "electricity transmission offer", and a suppliable electricity for the electricity transmission is newly stored in a "requested electricity amount" to transmit. As an alternative, the green electricity reception control device 3 may be configured such that, if the green electricity reception control device 3 agrees with the "requested electricity amount" to receive, the green electricity reception control device 3 replies to the supply request acceptance d2' without such information.

The agreement on the supply and purchase is established between the green electricity supply control device 2 and the green electricity reception control device 3 by the supply offer acceptance d2 is received from the green electricity reception control device 3 in response to the supply offer d1 transmitted by the electricity transmission deciding section 40, or by transmitting the supply request acceptance d2' in response to the supply request d1' transmitted from the green electricity reception control device 3.

If the agreement is established, the electricity transmission deciding section 40 notifies the electricity transmission flow control section 41 of a calculated electricity amount to be transmitted. Moreover, the electricity transmission deciding section 40 notifies the electricity transmission completion notifying section 42 of information of the receiver of the electricity transmission (here, receiving device ID), which information is obtained from the green electricity reception control device 3. In the present embodiment, if the agreement is established, the electricity transmission deciding section 40 decides the electricity amount E0 of electricity transmission in such a way that the electricity amount E0 of electricity transmission is in fact greater than the requested electricity amount of electricity reception (E1) in consideration of the electricity transmission ratio $\alpha$ of the electricity transmission and distribution network(s) the electricity will pass through, whereby it is ensured that the green electricity reception control device 3 of the company facility $D_4$ will be supplied and receive the green electricity of the requested electricity amount E1 of electricity reception in full measure. That is, the electricity transmission deciding section 40 calculates out E0 from an equation: E0 = E1/(1-$\alpha$).

The storage section 19 of the green electricity supply control device 2 includes a transmission loss ratio storage section for storing the transmission loss ratio $\alpha$. The transmission loss ratio $\alpha$ is an approximate average transmission loss of transmission losses in green electricity supply from the house etc. $S_1$ to any possible purchaser D in any possible area via any possible electricity transmission and distribution network N. The transmission loss ratio $\alpha$ has been calculated out in advance by the green electricity supply/purchase certifying device 1 managing the locations of all the devices and the electricity transmission and distribution networks, and then notified to the green electricity supply control device 2 by the green electricity supply/purchase certifying device 1 in advance.

The electricity transmission flow control section 41 is configured to control the sections for the green electricity transmission, so as to perform the green electricity transmission of the electricity amount E0, which is decided by the electricity transmission deciding section 40, to the receiving device of the agreement for the electricity transmission. In the present embodiment, the electricity transmission flow control section 41 transmits the green electricity to the electricity transmission and distribution network $N_1$, which belongs to the electricity company $M_1$ and which is the electricity transmission and distribution network closest to the green electricity supply control device 2. Referring to the transmitted electricity measuring electricity meter 35, the electricity transmission flow control section 41 notifies the electricity transmission completion notifying section 42 of the completion of the electricity transmission and the amount of the electricity transmitted by the electricity transmission when the amount of the green electricity thus transmitted reaches the amount thus decided.

The electricity transmission completion notifying section 42 creates an electricity transmission completion report d3 (for example, Fig. 3) so as to notify the green electricity supply/purchase certifying device 1 that the supply and purchase event has occurred and the electricity transmission of the supply and purchase event has been completed. More specifically, the electricity transmission completion notifying section 42 obtains (i) time at which the electricity transmission is completed (electricity transmission completion time), (ii) "supplying device ID" of the green electricity supply control device 2 to which the electricity transmission completion notifying section 42 belongs, (iii) "receiving device ID" and the "receiving electricity amount E1" notified from the electricity transmission deciding section 40, (iv) the "transmitted electricity amount E0" notified from the electricity transmission flow control section 41, and (v) ID (electricity transmission and distribution network ID) of the electricity transmission and distribution network(s) N used in the electricity transmission, and creates the electricity transmission completion report d3 therefrom, which is as illustrated in Fig. 3.

With this configuration, the agreement on the supply and purchase is established via communication protocol for the green electricity supply and purchase, and the green electricity will not be transmitted until the amount of the electricity to be transmitted is decided. Further, with this configuration, the information indicating "when the green electricity in what amount was transmitted from who from who" is notified to the green electricity supply/purchase certifying device 1 when the electricity transmission is completed.

With this, it becomes possible to realize exact traceability of green electricity while well separating the supply and purchase of green electricity from those of non-green electricity.

The functional blocks of the main control section 11 described above can be realized by a CPU (central processing unit) reading a program from a memory device (storage section 19) realized by a ROM (read only memory) or the like, and then running the program on a RAM (random access memory) or the like (not illustrated).

[Structure of Green Electricity Reception Control Device]

Fig. 6 is a block diagram illustrating a main structure of a green electricity reception control device according to the present invention. Note that the members labeled with the like reference numerals in Fig. 6 and the views referred above are one having the like function and like structures in terms of hardware. Therefore, their explanation is not be repeated here.

As illustrated in Fig. 6, a green electricity reception control device 3 has a main control section 11, a communication section 12, a storage section 19, and a electricity amount of electricity reception measuring electricity meter 36. In the present embodiment, the green electricity reception control device 3 further includes a power distribution board 32, an electricity receiving facility 33, and a transformer 34.

The transformer 34 and the electricity receiving facility 33 performs the electricity reception under the control of the main control section 11. The green electricity transmitted from the green electricity supply control device 2 via the electricity line 14 is received by the electricity receiving facility 33 via the transformer 34. The amount of the green electricity thus received is measured by the received electricity measuring electricity meter 36, and notified to the main control section 11. The green electricity thus temporally received in the electricity receiving facility 33 is distributed by the power distribution board 32 and may be stored in the battery 8 or may be used in a facility of the purchaser.

In order to establish agreement of the supply and purchase of green electricity, the communication section 12 communicates with a green electricity supply control device 2 via the communication network 9, so as to receive a supply offer d1 (electricity transmission request acceptance d2') or transmit a supply offer acceptance d2 (electricity reception request d1'). Further, the communication section 12 communicates with the green electricity supply/purchase certifying device 1 in order to transmit the electricity reception completion report d4 to the green electricity supply/purchase certifying device 1.

The storage section 19 is to configured to store a control program and an OS program, which the main control section 11 runs, and various data to be read out when the green electricity reception control device 3 performs any one of various functions it has.

The main control section 11 is configured to perform integral control of sections of the green electricity reception control device 3, and includes, as functional blocks, an electricity reception deciding section 43, an electricity reception flow control section 44, and an electricity reception completion notifying section 45.

The electricity reception deciding section 43 is configured to establish an agreement on the supply and purchase with the green electricity supply control device 2 via the communication section 12, and to decide an amount of electricity to be received.

For example, if the electricity reception deciding section 43 receives a supply offer d1 (see Fig. 3) including a requested electricity amount to supply, the electricity reception deciding section 43 is triggered to decide whether or not it is possible to receive the request electricity amount. If possible, the electricity reception deciding section 43 creates a supply offer acceptance d2 and sends it to the green electricity supply control device 2. Fig. 3 illustrates a data structure of the supply offer acceptance d2. In the example illustrated in Fig. 3, the electricity reception deciding section 43 creates a supply offer acceptance d2 including a field of "receiving device ID" for storing the receiving device ID of the green electricity reception control device 3 to which the electricity reception deciding section 43 belongs, and a field of "supply offer acceptance" for storing a message for accepting the supply offer. Further, the electricity reception deciding section 43 may make a counter offer in order to offer a requested electricity amount to receive, which is different from the requested electricity amount to supply, which the electricity reception deciding section 43 was offered, and it that case, the electricity reception deciding section 43 may create the supply offer acceptance d2 to further include a field of "requested electricity amount to receive" for storing the requested electricity amount to receive, which the electricity reception deciding section 43 counter-offers.

As one alternative, the electricity reception deciding section 43 may be configured such that, if a user or another device instructs the electricity reception deciding section 43 to receive green electricity from a certain green electricity supply control device 2, the electricity reception deciding section 43 is triggered to create an electricity reception offer d1' for green electricity in an instructed electricity amount as a requested electricity amount to receive, and send the electricity reception offer d1' to the green electricity supply control device 2 that the user or the another device specifies. In this case, the electricity reception offer acceptance d1' includes a field of "electricity reception offer" instead of the field of "supply offer acceptance".

An agreement on the supply and the purchase is established between the green electricity supply control device 2 and green electricity reception control device 3 by sending the supply offer acceptance d2 from the electricity reception deciding section 43 in response to the supply offer d1 transmitted from the green electricity supply control device 2, or by sending the supply request acceptance d2' from the green electricity supply control device 2 in response to the supply request d1' transmitted from the electricity reception deciding section 43 to the green electricity supply control device 2.

The electricity reception deciding section 43 decides to receive the green electricity of the electricity amount agreed on the agreement, and notifies the electricity reception flow control section 44 of the electricity amount to receive. Moreover, the electricity reception deciding section 43 notifies the electricity reception completion notifying section 45 of the information on the supplier (here, "supplying device ID"), which information was obtained from the green electricity supply control device 2. Here, the electricity reception deciding section 43 may be configured such that the electricity reception deciding section 43 further obtains, from the green electricity supply control device 2, information on the electricity amount of electricity reception E0 to be transmitted for the green electricity supply control device actually, and notifies the electricity reception completion notifying section 45 of the information thus obtained.

It is not particularly limited as to how the electricity reception deciding section 43 decide whether it is possible to receive the green electricity of the offered electricity amount to supply. For example, the electricity receiving section 43 may judge on a remaining amount to $CO_2$ emission limit of the purchaser, or a budget of the purchaser. The electricity reception deciding section 43 may request an electricity amount more than the offered electricity amount when the purchaser is intensively working on $CO_2$ emission reduction, or may decide to receive an electricity amount less than the offered electricity amount to supply, when budget is tight.

The electricity reception flow control section 44 controls the sections for receiving the green electricity, so as to receive the green electricity of the electricity amount decided by the electricity reception deciding section 43, from the counterpart of the agreement. In the present embodiment, the electricity reception flow control section 44 receives, from the electricity transmission and distribution network $N_4$, the green electricity of the electricity amount of E1 notified from the electricity reception deciding section 43, where the electricity transmission and distribution network $N_4$ is owned by the electricity company $M_4$ nearest from the green electricity reception control device 3. The electricity reception flow control section 44 refers to the electricity amount of electricity reception measuring electricity meter 36, and notifies the electricity reception completion notifying section 45 when the electricity amount of electricity reception reaches the decided electricity amount. Thereby, the electricity reception flow control section 44 notifies the electricity reception completion notifying section 45 of the completion of the electricity reception, and the electricity amount of electricity reception.

The electricity reception completion notifying section 45 is configured to create an electricity reception completion report d4 so as to notify the green electricity supply/purchase certifying device 1 that the supply and purchase event has occurred, and the electricity reception of the event has been completed. More specifically, the electricity reception completion notifying section 45 obtains (i) the time at which the electricity reception completed ("electricity reception completion time"), (ii) "receiving device ID" of the green electricity reception control device 3 to which the electricity reception completion notifying section 4-5 belongs, (iii) "supplying device ID" and "transmitted electricity amount E0" notified from the electricity reception deciding section 43, (iv) the electricity amount E1 of electricity reception notified from the electricity reception flow control section 44, (v) ID (electricity transmission and distribution network ID) of electricity transmission and distribution network N that is the nearest electricity transmission and distribution network actually used in the electricity transmission. Then, the electricity reception completion notifying section 45 creates the electricity reception completion report d4 from these information, as illustrated in Fig. 3. Further, the electricity reception completion notifying section 45 may be configured to create the electricity reception completion report d4 including an electricity amount actually stored and available, if the receive green electricity stored in the battery 8 is less than E1 due to transmission loss caused by resistance etc.

With this configuration, the green electricity is not received before the agreement on the supply and purchase is obtained via the communication protocol for the green electricity supply and purchase, and the electricity amount to receive is decided. And with this configuration, the green electricity supply/purchase certifying device 1 is notified of "when the green electricity of what amount is received from who by whom" when the electricity reception is completed.

With this, it becomes possible to realize exact traceability of green electricity while well separating the supply and purchase of green electricity from those of non-green electricity.

The functional blocks of the main control section 11 described above can be realized by a CPU (central processing unit) reading a program from a memory device (storage section 19) realized by a ROM (read only memory) or the like, and then running the program on a RAM (random access memory) or the like (not illustrated).

[Green electricity supply and purchase flow (1)]

Fig. 7 is a sequence diagram illustrating flows of processes performed by the devices at a green electricity supply and purchase event in the green electricity supply and purchase system 100e. A structure and an operation of the green electricity transaction settling device 5 will be later described, and is not explained here.

Here, described is one example in which green electricity is transferred from a green electricity supply control device 2 at a house etc. $S_1$ to a green electricity reception control device 3 at a company facility $D_4$.

Assume that a supplier, to which the house etc. $S_1$ belongs, instructs the green electricity supply control device 2 to supply green electricity of a certain amount (for example 100 kwh) to a company facility $D_4$.

In response to this, the electricity transmission deciding section 40 of the green electricity supply control device 2 decides that the electricity amount to be transmitted is 100 kwh. Accordingly, the electricity transmission deciding section 40 creates a supply offer d1 whose offered electricity amount of electricity transmission is 100 kwh, and sends the supply offer d1 to the green electricity reception control device 3 of the company facility $D_4$ via the communication network 9 (S1).

The green electricity reception control device 3 receives the supply offer d1 from the green electricity supply control device 2 via the communication network 9 (S2). Then, if the electricity reception deciding section 43 decides that it is possible to receive the offered electricity amount of electricity transmission (Yes at S3), the electricity reception deciding section 43 creates a supply offer acceptance d2 and sends the supply offer acceptance d2 to the green electricity supply control device 2 (S4). It may be configured such that, if it is not possible to receive the electricity amount offered to transmit (No at S3), the electricity reception deciding section 43 discards the supply offer d1 thus received, or the electricity reception deciding section 43 sends a notice that the electricity reception deciding section 43 decided not to receive.

The electricity transmission deciding section 40 of the green electricity supply control device 2 receives the supply offer acceptance d2 transmitted from the electricity reception deciding section 43 (S5). By this, an agreement on the green electricity supply and purchase is established, thereby making it possible for the green electricity supply control device 2 and the green electricity reception control device 3 to perform the transmission and reception of the green electricity. The electricity transmission deciding section 40 decides a electricity amount E0 of electricity transmission increased from the agreed electricity amount in consideration of the transmission loss in the electricity transmission and distribution network, so that the purchaser can receive an electricity amount not less than the agreed electricity amount. Then, the electricity transmission deciding section 40 notifies the transmission flow control section 41 of the decided electricity amount E0 of electricity transmission. For example, the electricity transmission deciding section 40 decides that the transmitted electricity amount E0 is 120 kwh, and notifies the transmission flow control section 41 of the transmitted electricity amount E0 of 120 kwh. For example, the electricity transmission deciding section 40 notifies the electricity transmission completion notifying section 42 of the receiving device ID "3d4" to which the green electricity is to be transmitted.

Next, the electricity transmission flow control section 41 controls the power distribution board 32, an electricity receiving facility 33, and a transformer 34, thereby transmitting the green electricity of the decided electricity amount to the green electricity reception control device 3 (S6). Here, actually, the electricity is transmitted to the electricity transmission and distribution network $N_1$ nearest to the green electricity supply control device 3. The electricity transmission flow control section 41 refers to the transmitted electricity amount measuring electricity meter 35. When the electricity transmission flow control section 41 judges that the electricity amount of electricity transmission reaches the predetermined amount (120 kwh) (Yes at S7), the electricity transmission flow control section 41 finishes the electricity transmission. Then, the electricity transmission flow control section 41 notifies the electricity transmission completion notifying section 42 that the electricity transmission is completed and the electricity amount of electricity transmission "120 kwh".

Finally, the electricity transmission completion notifying section 42 creates an electricity transmission completion report (such as d3 in Fig. 3) based on the various information notified from the electricity transmission deciding section 40 and the electricity transmission flow control section 41 (S8), and sends the electricity transmission completion report to the green electricity supply/purchase certifying device 1 at an arbitrary timing via the communication network 9 (S9).

When the agreement on the green electricity supply and purchase is established, the electricity reception deciding section 43 in the green electricity reception control device 3 notifies the electricity reception flow control section 44 of the electricity amount of electricity reception" 100 kwh" thus decided, and notifies the electricity reception completion notifying section 45 of the supplying device ID "2s2s2s" of the supplier. Here, it may be configured that the electricity reception deciding section 43 additionally notify the electricity reception completion notifying section 45 of the information on the electricity amount E0 to be actually transmitted, which electricity amount E0 has been notified from the green electricity supply control device 2 in advance.

The electricity reception flow control section 44 controls the power distribution board 32, the electricity receiving facility 33, and the transformer 34, thereby to receive the green electricity transmitted from the green electricity supply control device 2 (S10). Here, the green electricity is received from the electricity transmission and distribution network $N_4$ nearest from the green electricity reception control device 3. Here, when the electricity reception flow control section 44 judges that the electricity transmission from the green electricity supply control device 2 is finished (Yes at S11), the electricity reception is finished. Then, the electricity reception flow control section 44 notifies the electricity reception completion notifying section 45 that the electricity reception is completed, and the actually electricity amount of electricity reception is 100 kwh.

Finally, the electricity reception completion notifying section 45 creates an electricity reception completion report (such as d4 in Fig. 3) based on the various information notified from the electricity reception deciding section 43 and the electricity reception flow control section 44 (S12), and sends the electricity reception completion report to the green electricity supply/purchase certifying device 1 via the communication network 9 at an arbitrary timing (S13).

The communication section 12 of the green electricity supply/purchase certifying device 1 receives via the communication network 9 the electricity transmission completion report and the electricity reception completion report transmitted at S9 and S13, respectively (S14, S15). The order of receiving the completion reports may vary depending on the timing of transmitting the completion reports. The completion report thus received is temporally stored in the electricity transmission completion report temporary storage section 13 by the electricity transmission/reception completion report acquiring section 20.

Then, the electricity transmission/reception completion report checking section 21 compares each field of the completion reports, so as to check whether both the completion reports are consistent with each other (S16). If both the completion reports are consistent with each other in terms of the information stored in each field of the times when the supply and reception are completed, the supplying device ID, the receiving device ID, and the transmitted and electricity amount of electricity receptions (Yes at S17), the electricity transmission/reception completion report checking section 21 judges that both the completion reports are consistent with each other, and there is no contradiction therebetween. Then, the electricity transmission/reception completion report checking section 21 forwards the completion reports (d3 and d4) to the supply and purchase information processing section 22. In the present embodiment, the green electricity supply/purchase certifying device 1 is configured such that the electricity amount of electricity transmission and the electricity amount of electricity reception are managed in separate field in consideration of the transmission loss in actually transmitting the green electricity from the house etc. $S_1$ to the company facility $D_4$, and the electricity transmission and distribution network(s) N and the transited route through which the green electricity is actually transmitted from the house etc. $S_1$ to the company facility $D_4$ is grasped as the mediator(s).

More specifically, the electricity transmission/reception completion report checking section 21 checks the consistency in the electricity transmission/reception completion time, the supplying device ID, and the receiving device ID, and then checks the consistency between the electricity amount of electricity transmission and the received electricity amount. When these fields have consistency, the electricity transmission/reception completion report checking section 21 judges that the electricity transmission completion report d3 and the electricity reception completion report d4 can be a pair for one supply and purchase event, and notify the supply and purchase information processing section 22 of the two completion reports. The data structure of the supply and purchase management database 4 for this is illustrated in Fig. 4. The supply and purchase information processing section 22 performs process for pairing the electricity transmission completion report d3 and the electricity reception completion report d4 illustrated in Fig. 3. Then, the supply and purchase information processing section 22 creates supply and purchase information d5 shown in the record of "supply and purchase event ID; p201001-000001" in Fig. 4, for example (S18). The supply and purchase information processing section 22 stores the thus created supply and purchase information d5 as one record in the supply and purchase management database 4 (S19).

According to this method, the green electricity is not transmitted or received before the agreement on the supply and purchase is established via the communication protocol of the green electricity supply and purchase and the electricity amount to be supplied and purchased is decided. Further, after the supply and the purchase is completed, the information indicating "when the green electricity of what amount is transferred from who to whom is notified to the green electricity supply/purchase certifying device 1 from both of the green electricity supply control device 2 of the supplier and the green electricity reception control device 3 of the purchaser.

With this, it becomes possible to realize exact traceability of green electricity while well separating the supply and purchase of green electricity from those of non-green electricity. Further, the consistency of the green electricity supply and purchase can be checked based on the information reported from the both parties, so as to guarantee rightness in the supply and purchase event. This makes it possible to realize traceability of the supply and purchase of the green electricity without allowing false statement.

[Configuration of Green Electricity Transaction Settling Device]

Fig. 8 is a block diagram illustrating a main configuration of a green electricity transaction settling device according to the present invention. Note that the members labeled with the like reference numerals in Fig. 8 and the views referred above are one having the like function and like structures in terms of hardware. Therefore, their explanation is not be repeated here.

As illustrated in Fig. 8, the green electricity transaction settling device 5 in the present embodiment includes a main control section 11, a communication section 12, and a storage section 19.

The communication section 12 is configured to communication with the green electricity supply control device 2 or the green electricity reception control device 3 via the communication network 9, so as to notify the green electricity supply control device 2 or the green electricity reception control device 3 of a payment amount for the green electricity or billing amount (or both).

The storage section 19 is configured to store a control program and an OS program, which the main control section 11 executes, and various data, which the main control section 11 performs any one of various functions (especially transaction setting process) of green electricity transaction settling device 5. More specifically, the storage section 19 includes a price table storage section 15 and a mediation fee table storage section 16.

The main control section 11 performs integral control of the sections of the green electricity transaction settling device 5, and includes, as functional blocks, a payment processing section 46, a billing processing section 47, and a supply and purchase invoice issuing section 48.

The payment processing section 46 is configured to calculate out an amount (payment amount) to be paid to the green electricity supply control device 2 for the green electricity supplied by the green electricity supply control device 2 to another device. The payment processing section 46 calculates out a payment amount for every green electricity supply control device 2 based on the supply and purchase information d5 stored in the supply and purchase management database 4 constructed by the green electricity supply/purchase certifying device 1.

The billing processing section 47 is configured to calculate out a money amount (billing amount) to be billed to the green electricity reception control device 3 for the received green electricity that the green electricity reception control device 3 received from another device. The billing processing section 47 calculates out the billing amount for every green electricity reception control device 3 in reference with the supply and purchase information d5 stored in the supply and purchase management database 4.

The supply and purchase invoice issuing section 48 is configure to create and issue a supply and purchase invoice stating the payment amount and the billing amount thus calculated out by the payment processing section 46 and the billing processing section 47, respectively. The supply and purchase invoice may be a digital invoice and transmitted via the communication section 12, or may be outputted on a paper medium by a printer.

There is a case where one client owns plural devices, that is, a green electricity supply control device 2 and a green electricity reception control device 3. In such a case, invoices may be issued separately for the payment amount and the billing amount, or one invoice in which a difference between the payment amount and the billing amount is written may be issued.

The price table storage section 15 is configured to store unit price of green electricity. In the price table storage section 15 stores, for example, a price per kwh. The price table storage section 15 may store only one price, but stores a plurality of prices conditionally. The price table storage section 15 may separately store a price for payment for the green electricity supply control device 2, and a price for billing the green electricity reception control device 3. The price table storage section 15 may store a price table giving different prices for more detailed conditions, such as which area the client resides (i.e., which area the device is installed, whether the client is a natural person or a legal entity, and whether the client is in upper stream (whole seller) or lower stream (retailer) in a distribution channel.

The mediation fee table storage section 16 is configured to store mediation fees to be paid to the mediators playing only the role of mediating the supplier and the purchaser. In the present embodiment, the mediators are realized by the electricity companies M owning the electricity transmission and distribution network N, respectively. Thus, when the electricity transmission and reception is carried out between the supplier and the purchaser, the mediation fee is calculated out the electricity transmission and distribution network(s) N based on the electricity amount of the green electricity having passed the electricity transmission and distribution network(s) N. One concrete example of the mediation fee will be given later, referring Fig. 9. In another embodiment, the mediator is realized as a moving object provided with a green electricity supply control device 2 and a green electricity reception control device 3. Therefore, in such an embodiment, the payment amount and the billing amount may be calculated out according to the electricity amount in the transaction between the green electricity supply control device 2 and the green electricity reception control device 3. However, if the moving object is registered as equipment specially for transporting green electricity, the mediation fee to be paid to the mediator owning the moving object may be calculated out based on a mediation fee table. In this case, the payment processing section 46 calculates out a mediation fee according to an amount of the green electricity thus transported or a distance of the transportation, based on a mediation fee table stored in the mediation fee table storage section 16.

The functional blocks of the main control section 11 described above can be realized by a CPU (central processing unit) reading a program from a memory device (storage section 19) realized by a ROM (read only memory) or the like, and then running the program on a RAM (random access memory) or the like (not illustrated).

[Mediation fee table]

Fig. 9 is a view illustrating a concrete example of the mediation fee table stored in the mediation fee table storage section 16 (Fig. 8) of the green electricity transaction settling device 5 according to the present invention.

The payment processing section 46 of the green electricity transaction settling device 5 has a function of calculating out, for every supply and purchase event, a mediation fee to be paid an owner (that is an electricity company M) of each electricity transmission and distribution network N contributing to the transfer of the green electricity transmitted and received in the event. The green electricity transaction settling device 5 calculates out the mediation fee, referring to a mediation fee table as illustrated in Fig. 9. As illustrated in Fig. 9, the mediation fee table has such a structure that the electricity company names and the mediation fee per kwh is stored in association with the electricity transmission and distribution network ID.

For example, the "transited electricity transmission and distribution network" in the example of the record "supply and purchase event ID; 201001-000001" in Fig. 4 is $N_1 \rightarrow N_2 \rightarrow N_4$. In such a case, the payment processing section 46 judges that green electricity of 100 kwh was transported via the electricity transmission and distribution network $N_1$, $N_2$, $N_4$, based on the "received electricity amount".

Therefore, the payment processing section 46 calculates out the mediation fee in the supply and purchase event in reference with the mediation fee table shown in Fig. 9. That is, for "KY electricity Co. Ltd." owning the electricity transmission and distribution network $N_1$, $0.8 \times 100 = ¥ 80$ is calculated out as the mediation fee to pay. For "TY energy Co. Ltd." owning the electricity transmission and distribution network $N_2$, $0.5 \times 100 = ¥ 50$ is calculated out as the mediation fee to pay. For K electricity Corp. owning the electricity transmission and distribution network $N_4$, $1 \times 100 = ¥ 100$ is calculated out as the mediation fee to pay.

Based on the records in the account-period month, the payment processing section 46 calculates out the mediation fee for each supply and purchase event, and for every electricity transmission and distribution network ID. Finally, the payment processing section 46 sum the mediations fees per electricity transmission and distribution network ID, so as to calculate out a final mediation fee payment amount to be paid to each electrical company.

The payment processing section 46 calculates out, in consideration of the mediation fee, a final payment amount to be paid to the green electricity supply control device 2 for the green electricity supplied by the green electricity supply control device 2.

[Transaction settling process flow]

Fig. 10 is a flow chart illustrating a payment process in a transaction settling process performed by the green electricity transaction settling device in one embodiment of the present invention.

Firstly, the payment processing section 46 extracts records whose "electricity transmission/reception completion time" from among the records in the supply and purchase management database 4 illustrated in Fig. 4 (S301). Then, the payment processing section 46 sorts the extracted records based on "supplying device ID" (S302). After that, for one "supplying device ID", the payment processing section 46 sums the "electricity amount of electricity reception" of the green electricity supplied from a supplying device with the "supplying device ID", so as to calculate out a total electricity amount of electricity reception (S303). In the present embodiment, the payment amount is calculated out based on the electricity amount actually received by the purchaser.

Then, the payment processing section 46 refers to unit price for payment in the price table storage section 15, and calculates out a payment amount for the one "supplying device ID" by multiplying the total electricity amount with the unit price for payment (S304).

Next, for every electricity transmission and distribution network ID, the payment processing section 46 calculates out the mediation fee to be paid to each owner of the electricity transmission and distribution network used in the electricity transmission and reception in each record with the "supplying device ID" based on the mediation fee table (S305).

Then, for the one "supplying device ID", the payment processing section 46 sums each mediation fee associated with the supplying device ID, and calculates out, in consideration with discount, tax, etc., a final payment amount to be paid to the device with the "supplying device ID" (S306). Finally, the payment processing section 46 notifies the supply and purchase invoice issuing section 48 of the final payment amount calculated for the "supplying device ID" (S307).

If the final payment amounts for all the supplying device IDs have not been calculated out (No at S308), the process from S303 is repeated per the supplying device IDs. If the final payment amounts for all the supplying device IDs have been calculated out (No at S308), the process proceeds to the summation of the mediation fees for every mediator.

That is, the payment processing section 46 sorts the records of the mediations fees based on the "electricity transmission and distribution network ID", the mediation fees having been calculated out per record of supply and purchase event, and per electricity transmission and distribution network ID. Then, the payment processing section 46 sums the records of the mediation fees per electricity transmission and distribution network N, so as to calculate out the final payment amount to be paid for every electricity company as mediation fee (S309). Finally, the payment processing section 46 notifies the supply and purchase invoice issuing section 48 of the final payment amount to be paid as mediation fee for every electricity transmission and distribution network ID (S310).

With this method, it is possible to realize, by using the green electricity supply/purchase certifying device 1, a payment process for green electricity based on the supply and purchase information which certifies that the electricity thus supplied and purchased is purely green electricity not mixed with non-green electricity.

Fig. 11 is a flow chart illustrating a billing process in the transaction settling process performed by the green electricity transaction settling device in the embodiment of the present invention.

In the present embodiment, the green electricity transaction settling device 5 is configured to calculate out a payment amount for every green electricity reception control device 3 based on the supply and purchase information in on account-period month, like the above.

The billing processing section 47 extracts records whose "electricity transmission/reception completion time" is within the account-period month from among records in the supply and purchase management database 4 illustrated in Fig. 4 (S201). Then, the billing processing section 47 sorts the extracted records based on the "receiving device IDs" (S202). Then, the billing processing section 47 sums the "electricity amount of electricity reception" for one "receiving device ID", so as to calculate out a total electricity amount of the reception amount (S203). This process is repeated for every "receiving device ID".

Then, the billing processing section 47 refers to the unit price for billing in the price table storage section 15, and calculates out a billing amount for every "receiving device ID" by multiplying the calculated total electricity amounts of electrical reception with the unit price for billing (S204).

Next, the billing processing section 47 calculates out a final billing amount for every "receiving device ID" in consideration of the mediation fee, discount, tax, etc. (S205).

Finally, the billing processing section 47 notifies the supply and purchase invoice issuing section 48 of the final billing amount calculated for every "receiving device ID" (S206).

The billing processing section 47 may feed back to the supply and purchase management database 4 a total electricity amount of electricity reception summed per month for every "receiving device ID". The fed-back information on the total electricity amount of electricity reception is read out by the certification issuing section 23 of the green electricity supply/purchase certifying device 1 in order to create a green electricity supply and purchase certificate in which the total electricity amount of electricity reception received by a green electricity reception control device 3 is written.

With this method, it is possible to realize, by using the green electricity supply/purchase certifying device 1, a billing process for green electricity based on the supply and purchase information which certifies the electricity thus supplied and purchased is purely green electricity not mixed with non-green electricity.

Moreover, in the green electricity supply/purchase certifying device 1, it is possible to create a green electricity supply/purchase certificate per green electricity supply control device 2 and per green electricity reception control device 3, based on the supply and purchase information that guarantees that green electricity not mixed with non-green electricity is supplied/received. By using the green electricity supply/purchase certificate thus created, it is possible to exactly show the electricity amount of the green electricity actually transmitted and received.

In a conventional green electricity certificate system in which the "supposing" system as described in Non-Patent Literature 1 is adopted, an entity wishing to reduce its $CO_2$ emission amount should purchase a green electricity certificate in advance, which certificate is an "article" having an environmentally added value. However, it is not certain for the purchaser at buying the conventional green electricity certificate that the purchaser should buy a green electricity certificate for how much energy in order to achieve the "$CO_2$ emission amount reduction" as much as the purchaser desired. Therefore, in many case, the electricity amount purchased with the green electricity certificate (energy amount equivalent with the price of the green electricity certificate) may be short or excess. If the electricity amount thus purchased is in short, the purchaser's $CO_2$ emission amount exceeds its limit. Meanwhile, if the electricity amount thus purchased is excess, it means that the green electricity purchase is overbought. Moreover, process to buy a green electricity certificate is tedious in many cases, and it is difficult to buy a green electricity certificate for small amount of electricity.

Moreover, the conventional green electricity certificate system does not allow a supplier of green electricity to make a direct transaction with a purchaser actually using green electricity, and to make a green electricity generation plan in conformity with a time-wise pattern or seasonal pattern in the electricity amount needed by the purchaser.

According to the green electricity supply and purchase system 100e according to the present invention, the green electricity supply control device 2 of the supplier and the green electricity reception control device 3 of the purchaser communicate with each other directly so as to establish an agreement on the supply of the green electricity, and the supply of the green electricity is direct. Therefore, it is possible to supply the green electricity according to a change in the electricity amount required by the purchaser. Moreover, the supplier can make a plan on his green electricity generation in consideration of the request from the purchaser.

Further, the green electricity is actually transferred based on the electricity amount agreed to be supplied as a result of the communication between the green electricity supply control device 2 and the electricity reception control device 3. This can solve the problem that the purchaser buys the green electricity too much or too little. Moreover, it is possible to transmit or receive the green electricity in a desired electricity amount, even if the electricity amount is small.

《Embodiment 2>>

Another embodiment regarding a green electricity supply and purchase system according to the present invention is described below, referring to drawings. For the sake of easy explanation, like members having like functions are labeled with like reference numerals as illustrated in the drawings explained in Embodiment 1, and their explanation is not repeated here.

Embodiment 1 discusses a green electricity supply and purchase system in which electricity companies serve as mediators, and the green electricity is transmitted or received via large-scale electricity transmission and distribution networks.

There is a concern that when a fast increase in provision of solar power generating facilities in houses etc. causes a huge amount of excess electricity provided from houses etc., the system in which the excess green electricity is transmitted the electricity transmission and distribution networks will face oversaturation of the electricity transmission and distribution networks.

In view of this, the present embodiment provides a green electricity supply and purchase system in which the mediator for transferring the green electricity from the supplier to the purchaser is a moving object, thereby making it possible to directly supply the green electricity from the supplier to the purchaser without adding a load on the electricity transmission and distribution network. In the following, the embodiment is described based on an example in which the mediator is a vehicle (moving object) M, and the vehicle M transfer the green electricity to supply the green electricity from the supplier to the purchaser.

[Green Electricity Supply and Purchase System (2)]

Fig. 12 is a view schematically illustrating a green electricity supply and purchase system according to another embodiment of the present invention.

Fig. 12, the members having the same function and structure as these members illustrated in drawings referred so far are labeled with the same reference numerals with these members. Thus, their explanation is not repeated here.

In the present embodiment, as one example, a green electricity supply and purchase system 100a in which green electricity generated by solar power generation in a house of a supplier (S) is transferred by using a vehicle as a mediator (M), and is supplied to a company as a purchaser (D).

As illustrated in Fig. 12, the green electricity supply and purchase system 100a includes a household (building) S of the supplier, a vehicle (moving object) M of the mediator, a company facility (building) D of the purchaser, a green electricity supply/purchase certifying device 1 for tracing and managing green electricity transmitted and received between these entities, and a supply and purchase management database 4 for storing a supply and purchase event. Moreover, the green electricity supply and purchase system 100a may further include a green electricity transaction settling device 5. These devices are connected with a communication network 9 as in Embodiment 1, and can communicate with one another to send and receive data between them. A green electricity supply control device 2s and a green electricity reception control device 3d are, as in Embodiment 1, communicate with each other so as to establish agreement on supply and purchase (supply offer d1 and supply offer acceptance d2, or electricity reception offer d1' and electricity reception offer acceptance d2').

The household S serving as a supplier is provided with a facility for supplying the green electricity. That is, the household S is provided at least with the green electricity supply control device 2s. the household S is provided further with a green electricity power generating device 7 in the present embodiment.

The green electricity supply control devices 2s, 2m are similar to the above-described green electricity supply control device in theirs configuration, and are configured to supply green electricity to a green electricity reception control device 3 (3m or 3d).

The green electricity power generating device 7 is, for example, realized as a solar panel for generating power from sun light in the present embodiment.

The company facility D of the purchaser is provided with a facility to receive green electricity. That is, the company facility D is provided at least with the green electricity reception control device 3d. The green electricity reception control devices 3d and 3m are similar to the above-described green electricity reception control device 3 in their configuration. In the present embodiment, the green electricity reception control device 3d and 3m receive the green electricity supplied from the green electricity supply control device 2 (2s or 2m). In the present embodiment, the green electricity reception control device 3d and 3m further include a battery 8. Green electricity stored in the battery 8 is further transmitted to another green electricity reception control device 3, or consumed for operation and management of the company facility D.

The vehicle M functions as a mediator in the present embodiment. Thus, the vehicle M includes both the green electricity supply control device 2m and the green electricity reception control device 3m. Furthermore, in the present embodiment, the vehicle M includes a green certified battery 6, which is certified as a battery for storing only green electricity. The green certified battery 6 is provided in addition to a conventional battery for storing electricity to be consumed by the vehicle M itself, or for storing electricity generated by driving of the vehicle M. The green certified battery 6 is certified to store only green electricity. The certification may be done by a battery retailer by transmitting information (such as battery serial number, car plate number to the green electricity supply/purchase certifying device 1 after confirming the battery for green electricity is not connected with a dynamo of the vehicle at installation of the battery on the vehicle. By this, the green electricity supply/purchase certifying device 1 can guarantee that the battery installed on the vehicle M can store only green electricity and certify that the battery as a green certified battery 6.

The green electricity supply control devices 2 and the green electricity reception control devices 3 are connectable with one another wired or wireless electrical connection means such as power cable, electricity transmitting/receiving antenna, etc.. By this, the green electricity supply control devices 2 and the green electricity reception control devices 3 are capable of transmitting or receiving green electricity. Moreover, each of the green electricity supply control devices 2 and the green electricity reception control devices 3 is given a device ID to identify itself uniquely, so that the green electricity supply/purchase certifying device 1 can identify the devices.

This configuration makes it possible that the green electricity generated by the green electricity generating device 7 in the household S of the supplier is transmitted from the green electricity supply control device 2s to the green electricity reception control device 3m of the vehicle M, and is stored in the green electricity battery 6, and then the vehicle M transfers the stored green electricity to the company facility D so as to supply the green electricity from the green electricity supply control device 2m to the green electricity reception control device 3d of the company facility D serving as the purchaser. By this, it becomes possible to supply the green electricity from the supplier to the purchaser without mixing non-green electricity in the green electricity.

In the green electricity supply and purchase system 100a according to the present invention, as in Embodiment 1, the supply and purchase of the green electricity is associated with transmission and reception of data regarding the supply and purchase event. For example, in the aforementioned transfer of green electricity, the data transmission and reception associated with the green electricity transfer is basically as follow.

The green electricity supply control device 2s of the household S transmits a supply offer (supply offer d1) to the green electricity reception control device 3m of the vehicle M via the communication network 9. In response to this, the green electricity reception control device 3m transmits a supply offer acceptance (supply offer acceptance d2) to the green electricity supply control device 2s via the communication network 9. By this, an agreement on the supply and purchase on the green electricity is established.

In response to the supply offer acceptance d2, the green electricity supply control device 2s transmits green electricity to the green electricity reception control device 3m in an electricity amount decided in transmitting the supply offer d1. The green electricity reception control device 3m stores the received green electricity in the green certified battery 6. At an arbitrary timing after the transmission and reception of the green electricity are completed, the green electricity supply control device 2s send an electricity transmission completion report d3 to the green electricity supply/purchase certifying device 1 via the communication network 9. Meanwhile, the green electricity reception control device 3m also sends an electricity reception completion report d4 to the green electricity supply/purchase certifying device 1 via the communication network 9 at an arbitrary timing.

The green electricity supply/purchase certifying device 1, as in Embodiment 1, checks the electricity transmission completion report d3 and electricity reception completion report d4, and stores, in the supply and purchase management database 4, supply and purchase information d5 regarding the supply and purchase event.

When the vehicle M moves and becomes able to supply the green electricity stored in the green certified battery 6 to the company facility D of the purchaser, the green electricity supply control device 2m transmits a supply offer d6 to the green electricity reception control device 3d of the company facility D via the communication network 9. In response to this, the green electricity reception control device 3d sends a supply offer acceptance d7 to the green electricity supply control device 2m via the communication network 9. By this, the supply and purchase of the green electricity is established.

In response to the supply offer acceptance d7, the green electricity supply control device 2m transmits the green electricity stored in the green certified battery 6 to the green electricity reception control device 3d. The green electricity reception control device 3d stores the received green electricity in the battery 8. At an arbitrary timing after the transmission and reception of green electricity is completed, the green electricity supply control device 2m sends an electricity transmission completion report d8 to the green electricity supply/purchase certifying device 1 via the communication network 9. Meanwhile, the green electricity reception control device 3d sends an electricity reception completion report d9 to the green electricity supply/purchase certifying device 1 via the communication network 9 at an arbitrary timing.

The green electricity supply/purchase certifying device 1, as described above, checks the electricity transmission completion report d8 and the electricity reception completion report d9, and stores, in the supply and purchase management database 4, supply and purchase information d10 regarding the supply and purchase event.

After that, at an arbitrary timing (for example, at a monthly accounting date), the green electricity transaction settling device 5 performs transaction settling process. For example, it may be such that the green electricity transaction settling device 5 notifies a payment amount d11 for the supplied electricity amount to the supplier to which the household S belongs, notifies a payment amount d12 for mediation amount to the mediator to which the vehicle M belongs, and notifies a billing amount d13 for the received electricity amount to the purchaser to which the company facility D belongs. The green electricity transaction settling device 5 may omit the billing process for the supply and purchase event occurring between a household S and a vehicle M, if the household S and the vehicle M belongs to the same entity.

As described above, in the green electricity supply and purchase system 100a according to the present invention, the supply, purchase, and transfer of the green electricity is carried out by using the green electricity supply control device 2, the green electricity reception control device 3, and the green certified battery 6, each of which is certified by the green electricity supply/purchase certifying device 1. That is, the problem of mixing green electricity with non-green electricity will not occur in the green electricity supply and purchase system 100a according to the present invention. Further, because the green electricity is not transferred via the existing electricity transmission and distribution network N, it is possible to prevent oversaturation of the electricity transmission and distribution network N. Moreover, the supply and purchase of the green electricity is carried out by the devices certified by the green electricity supply/purchase certifying device 1. The green electricity supply/purchase certifying device 1 stores and manages the supply and purchase events one by one. This makes it possible to realize traceability of green electricity.

That is, it is certified by the green electricity supply/purchase certifying device 1 that the electricity transferred between the devices is green electricity. Further, the data on the supply and purchase event is transmitted and received via the communication between the devices, in association with the transfer of the green electricity. By this, the green electricity supply/purchase certifying device 1 can trace the green electricity. Moreover, the green electricity supply/ purchase certifying device 1 has a function of checking consistency between the data received from the supplier and the data received from the purchaser. This makes possible to detect false data and to discourage against making such false data.

This makes it possible to establish an electricity supply and purchase system, which realizes traceability of the green electricity without allowing false statement.

[Data Structure of Various Data]

Fig. 13 is a view schematically illustrating data structures of various data transmitted and received by the green electricity supply control device 2 or the green electricity reception control device 3. Fig. 14 is a view schematically illustrating a data structure of the supply and purchase management database 4 in which records of the supply and purchase information created by the green electricity supply/purchase certifying device 1.

Among the data illustrated in Fig. 13, d1 (d6) is one example of a data structure of supply offer transmitted from the green electricity supply control device 2s (2m), whereas d2 (d7) is one example of a data structure of a supply offer acceptance transmitted from the green electricity reception control device 3m (3d). These data structures are similar to those in Embodiment 1, and have been explained above referring to Fig. 3. Thus, their explanation is not repeated here.

In Fig. 13, d3 is an electricity transmission completion report d3 transmitted from the green electricity supply control device 2.

As illustrated in Fig. 13, the electricity transmission completion report d3 at least includes fields of "electricity transmission completion time", "supplying device ID", "receiving device ID", and "electricity amount of electricity transmission" in a digital text (also called body). Even though it is not illustrated here, the electricity transmission completion report d3 may have a header storing data type information indicating that this data is an electricity transmission completion report.

The "electricity transmission completion time" indicates the time at which the green electricity supply control device 2 completed the electricity transmission of the green electricity to the counterpart in one supply and purchase event. For example, the "electricity transmission completion time" stores "2010/1/8 17:13" therein.

The "supplying device ID" indicates identification information of the green electricity supply control device 2, which performed the electricity transmission in the supply and purchase event. The identification information has been given to each device in advance, so that the green electricity supply/purchase certifying device 1 can integrally manage these devices. For example, "2s2s2s" is stored therein.

The "receiving device ID" indicates identification information of the green electricity reception control device 3 which is the counterpart to which the green electricity supply control device 2 supplied the green electricity in the supply and purchase event. For example, "3m3m3m" is stored therein.

The "electricity amount of electricity transmission" indicates an amount of the green electricity transmitted to the counterpart from the green electricity supply control device 2 in the supply and purchase event. For example, "10 kwh" is stored therein.

Among the data illustrated in Fig. 13, d4 is an electricity reception completion report d4 transmitted from the green electricity reception control device 3.

As illustrated in Fig. 13, the electricity reception completion report d4 at least includes fields of "electricity reception completion time", "receiving device ID", "supplying device ID", and "electricity amount of electricity reception" in a digital text (also called body). If the green electricity reception control device 3 includes an electricity storage device such as a battery, the electricity reception completion report d4 may additionally include a field for storing "electricity amount stored", which indicates an electricity amount actually stored finally in the supply and purchase event (that is, an electricity amount actually available).

The "electricity reception completion time" indicates time at which the green electricity reception control device 3 completed the electricity reception of the green electricity from its counterpart in one supply and purchase event. The time supposed to be coincident or almost coincident with the "electricity transmission completion time", as long as these times are for the same supply and purchase event. For example, "2010/1/8 17: 13" is stored therein.

The "receiving device ID" indicates identification information of the green electricity reception control device 3 performed the electricity reception. If the electricity reception completion report d4 is paired with the electricity transmission completion report d3, "3m3m3m" is stored therein.

The "supplying device ID" indicates identification information of the green electricity supply control device 2, which is the counterpart performing the electricity transmission. If the electricity reception completion report d4 is paired with the electricity transmission completion report d3, "2s2s2s" is stored therein.

The "electricity amount of electricity reception" indicates the amount of the green electricity received by the green electricity reception control device 3 from its counterpart in the supply and purchase event. If the electricity reception completion report d4 is paired with the electricity transmission completion report d3, "10 kwh" is stored therein. (Note that the transmission loss in the transmission and reception of the green electricity is ignored in this example.)

By receiving the electricity transmission completion report d3 and the electricity reception completion report d4, the green electricity supply/purchase certifying device 1 can grasp "when the green electricity of what kwh is transferred from who to whom" in one supply and purchase event.

The electricity transmission/reception completion report checking section 21 reads out, from the electricity transmission/reception completion report temporary storage section 13, the electricity transmission completion report d3 and the electricity reception completion report d4 thus received, and checks each field in these completion reports so as to judge whether the data in each completion report is consistent from each other. The process to judge the consistency can be similar to that in Embodiment 1. However, the electricity amount of the electricity transmission and the electricity amount of the electricity reception are not managed in separate fields in the present embodiment. Therefore, the electricity transmission/reception completion report checking section 21 check whether the "electricity amount of electricity transmission" in the electricity transmission completion report d3 and the "electricity amount of electricity reception" in the electricity reception completion report d4 are consistent from each other without a difference exceeding a predetermined error (for example less than 1 kwh).

In this concrete example, it is consistent that the electricity transmission (reception) completion time is "2010/1/8 17:13", the supplying device ID is "2s2s2s", the receiving device ID is "3m3m3m", and the supplied electricity amount (transmitted (received) electricity amount) is 10 kwh. In this case, the electricity transmission/reception completion report checking section 21 judges that the electricity transmission completion report d3 and the electricity reception completion report d4 are a pair for one supply and purchase event.

The electricity transmission/reception completion report checking section 21 notifies the pair of the electricity transmission completion report d3 and the electricity reception completion report d4 to the supply and purchase information processing section 22.

The supply and purchase information processing section 22 creates the supply and purchase information d5 on the basis of the pair of the electricity transmission completion report d3 and the electricity reception completion report d4.

More specifically, in the present embodiment, the supply and purchase information processing section 22 creates supply and purchase information d5 as data regarding one supply and purchase event in such a way that duplication of information in each field in the completion reports is omitted, and "supply and purchase event ID" is given to the data, so that the supply and purchase information processing section 22 can manage the data as one record.

As illustrated in Fig. 14, the supply and purchase information d5 includes each field of "electricity transmission/ reception time", "supplying device ID", "receiving device ID", "electricity amount supplied", and "supply and purchase event ID" without data duplication. In the above example, the supply and purchase information processing section 22 creates supply and purchase information d5 including information of "2010I1/8 17:13", "2s2s2s", "3m3m3m", and "10 kwh".

The supply and purchase information d5 thus created is stored in the supply and purchase management database 4 in series. By reading out the supply and purchase information d5, the certificate issuing section 23 of the green electricity supply/purchase certifying device 1, or the green electricity transaction settling device 5 can grasp "when the green electricity of how much kwh is transmitted from who to whom" for one supply and purchase event.

[Transaction Settling Process Flow]

In the present embodiment, the green electricity transaction settling device 5 performs transaction settling process in reference to the supply and purchase management database 4 illustrated in Fig. 14. The billing process to the green electricity reception control device 3 in the present embodiment is carried out according to the method described above referring to Fig. 11.

Fig. 15 is a flowchart illustrating a flow of payment process in the transaction settling process performed by the green electricity transaction settling device according to the present invention.

In the present embodiment, the green electricity transaction settling device 5 has a monthly accounting data, and calculates out a payment amount for every green electricity supply control device 2 based on supply and purchase information within one account-period month.

Firstly, the payment processing section 46 extracts records whose "electricity transmission/reception time" is within the account-period month, from among the records in the supply and purchase management database 4 illustrated in Fig. 14 (S101). Then, the payment processing section 46 sorts extracted records based on the "supplying device ID" (S102). Then, the payment processing section 46 sums the "electricity amount supplied" associated with the same "supplying device ID" so as to total supplied electricity amount per "supplying device ID" (S103). This process is repeated for every "supplying device ID".

Then, the payment processing section 46 refers to unit price of payment in the price table storage section 15, and calculates a payment amount for every "supplying device ID" by multiplying each total supplied electricity amount with the unit price for payment (S104).

Next, the payment processing section 46 calculates out a final payment amount for every "supplying device ID" in consideration of mediation fee, discount, tax, etc. (S105).

Finally, the payment processing section 46 notifies the supply and purchase invoice issuing section 48 of the final payment amount thus calculated out for every "supplying device ID" (S106).

The payment processing section 46 may feed back to the supply and purchase management database 4 a total supplied amount summed per month for every "supplying device ID". The total supplied amount thus fed back is read out accordingly by the certificate issuing section 23 of the green electricity supply/purchase certifying device 1 in order to create a green electricity supply/purchase certificate in which the total supplied amount for a green electricity supply control device 2.

With this method, it is possible to realize a payment process for green electricity based on the supply and purchase information which certifies, by using the green electricity supply/purchase certifying device 1, that the electricity thus supplied and purchased is purely green electricity not mixed with non-green electricity.

According to the green electricity supply and purchase system 100a according to the present invention, green electricity can be supplied and purchased after the green electricity supply control device 2 of the supplier and the green electricity reception control device 3 of the purchaser directly communicate with each other in order to establish an agreement on the supply and purchase of the green electricity. Further, the green electricity supply and purchase system 100a, the green electricity supply/purchase certifying device 1 creates supply and purchase information that certifies the electricity thus supplied and purchased is purely green electricity not mixed with non-green electricity. This makes it possible to realize traceability of the green electricity.

Moreover, the use of the vehicle M as a mediator in the green electricity supply and purchase system 100a provides the following merits.

A fast increase in provision of solar power generation is expected to cause a large amount of excess electricity from households provided with solar power generation facility. It is expected that the existing electricity transmission and distribution network will be oversaturated (exceed its electricity limit) if such excess electricity is sold via the existing electricity transmission and distribution network. If the green electricity is transferred from the supplier to the purchaser by using a vehicle as in the green electricity supply and purchase system 100a in the present embodiment, it is possible to prevent oversaturation of the existing electricity transmission and distribution network, because the existing electricity transmission and distribution network is not used in the transfer of the green electricity.

[Modification 1]

The green electricity supply and purchase system 100a in the present embodiment is explained on the assumption that there is no transmission loss of green electricity in repeated transmission and reception between the green electricity supply control devices 2 and the green electricity reception control devices 3.

However, the green electricity supply control device 2 according to the present invention may be configured to decide the electricity amount of the electricity transmission in consideration of the transmission loss.

For example, assume that, at this moment, green electricity of 100 kwh is stored in the green certified battery 6 of the vehicle M illustrated in Fig. 12, and that the green electricity reception control device 3d of the company facility D requests green electricity of 20 kwh. For this request, the electricity transmission deciding section 40 judges whether or not the green electricity stored in the green certified battery 6 is enough to supply the requested electricity amount in consideration of the transmission loss rate, which is stored in the storage section 19 in advance. In this case, the electricity transmission deciding section 40 judges that the green electricity stored in the green certified battery 6 is enough to supply the requested electricity amount, because 100 - 20 = 80 kwh. Then, the electricity transmission deciding section 40 sends a green electricity reception control device 3d an electricity transmission request acceptance d2' indicating to approve supply of electricity amount of 20 kwh.

On the other hand, if the green electricity reception control device 3 requests for green electricity of 95 kwh when the green electricity of 100 kwh is stored in the green certified battery 6. For this request, the electricity transmission deciding section 40 judges whether or not the stored electricity amount is enough to supply the requested electricity amount in consideration of the transmission loss rate. Here, the electricity transmission deciding section 40 judges that it is impossible to supply the requested electricity amount in full measure due to the transmission loss, because 100 - 95 = 5 kwh. In this case, the electricity transmission deciding section 40 calculates a maximum transmittable electricity amount in consideration of the transmission loss rate. For example, the electricity transmission deciding section 40 calculates out the maximum transmittable electricity amount as 90 kwh, and sends the green electricity reception control device 3d a electricity transmission request acceptance d2' indicating that the electricity transmission request is acceptable if the electricity amount is 90 kwh instead of requested 95 kwh.

That is, the green electricity supply control device 2 can perform the supply of green electricity in such a way that the green electricity supply control device 2 negotiates to reduce the electricity amount to a suppliable level and then supply the electricity amount, if the green electricity supply control device 2 cannot guarantee the supply of the requested electricity amount in consideration of the electricity amount stored in the battery in the green electricity supply control device 2, the requested electricity amount, and the transmission loss rate.

[Application Example 1]

The green electricity supply and purchase system according to the present invention can be realized as the following commercial scheme.

There has been so-called drive-through system in which a user in a car can purchase directly from a shop or can enjoy a service without leaving the car.

It is possible to construct a green electricity supply and purchase system 100b of drive-through type in which a shop receives a green electricity from a vehicle of a customer using the drive-through.

Fig. 16 is a view schematically illustrating the green electricity supply and purchase system 100b of drive-through type. In the green electricity supply and purchase system 100b, a vehicle M as a supplier is temporally stopped at a certain position for purchasing a good on a premises of a shop $D_1$ as a purchaser. Underground of the position, there is a loop coil antenna 18 capable of receiving electricity wirelessly. In this example, it is assumed that the vehicle M is a car provided with a solar cell panel, or a car capable of receiving green electricity generated at a customer's house, which performs solar power generation.

A green electricity supply control device 2m of the vehicle M communicates with a green electricity reception control device 3d of the shop $D_1$, thereby establishing an agreement on supply and purchase of the green electricity. Then, the green electricity supply control device 2m transmits a certain amount of green electricity stored in a green certified battery 6, to the loop coil antenna 18. Below its car body, the vehicle M is provided with an electricity transmission antenna 17 capable of transmitting electricity wirelessly. The certain amount of green electricity is received by the green electricity reception control device 3d of the shop $D_1$ from the electricity transmission antenna 17 via the loop coil antenna 18. A green electricity supply/purchase certifying device 1 is notified of information on this supply and purchase event in the form of completion reports respectively from the green electricity supply control device 2m and the green electricity reception control device 3d via the communication network 9.

The shop $D_1$ can pay the customer a money amount for the electricity amount thus received. Each shop $D_1$ may be provided with a green electricity transaction settling device 5 for performing the transaction settling process, or a green electricity transaction settling device 5 connected with the shop $D_1$ via the communication network 9 performs the transaction settling process for the shop $D_1$ based on the supply and purchase information stored in the supply and purchase management database 4, and feeds back the result of the transaction settling process to the shop $D_1$.

The shop $D_1$ may pay for the received electricity amount by providing the customer with goods or a coupon ticket for goods, instead of paying money.

The green electricity supply and purchase system 100b can give the following merits to the supplier having the vehicle M and to the shop $D_1$ as the purchaser, respectively.

For the shop $D_1$, it becomes possible to reduce cost of electricity by purchasing the electricity from individuals offering low prices, compared with purchasing green electricity from an electricity company or the like. Moreover, this can promote the shop $D_1$ to customers having vehicles M capable of transferring green electricity.

Further, this can certify that green electricity is stored in the battery 8 in the shop $D_1$. This allows the shop $D_1$ to operate by using the green electricity stored in the battery 8, thereby making it possible to reduce $CO_2$ emission compared with the case where the shop $D_1$ uses non-green electricity. This gives the shop $D_1$ a positive image to appeal that the shop $D_1$ is working on the environmental issue ardently. That is, the green electricity supply and purchase system 100b according to the present invention can be used as one measures to improve corporation image.

Moreover, for the owner of the vehicle M, it becomes possible to receive a service at free or at discount in exchange or obtain an income by selling extra electricity stored in the vehicle M to the shop $D_1$. Because there is no mediator in the supply and purchase of the green electricity, no mediation cost is subtracted in the transaction, thereby providing the supplier of the green electricity with more profit from selling the green electricity.

[Application Example 2]

The green electricity supply and purchase system according to the present invention is applicable to a car park.
Fig. 17 is a view schematically illustrating a green electricity supply and purchase system 100c of car park type.
In a parking space in a car park, a vehicle M is parked. The vehicle M is configured such that a green electricity supply control device 2 is capable of communicating with outside via the communication network 9 and performing wireless electricity transmission, even if the vehicle M is completely stopped. In each parking space, a loop coil antenna 18 is provided, which is connected with a green electricity reception control device 3d via an electrical connecting means, the green electricity reception control device 3d being provided in a parking fee settling device $D_2$. The green electricity reception control device 3d can identify each loop coil antenna 18, and can grasp when green electricity of how much is received from the loop coil antennal 18 of which parking space. These information as an electricity reception completion report d4 is transmitted to the green electricity supply/purchase certifying device 1 via the communication network 9, and notified to the green electricity transaction settling device 5 in the parking fee settling device $D_2$. Meanwhile, the green electricity thus received is stored in a battery 8.
Moreover, the green electricity supply control device 2 provided on the vehicle M transmits an electricity transmission completion report 3d to the green electricity supply/purchase certifying device 1.
When the vehicle M goes out of the car park, the parking fee settling device $D_2$ provided at an exit of the car park pays an amount of money for the electricity amount of the electricity transmission. Alternatively, parking fee may be cancelled out with the money. That is, the parking fee may be paid by green electricity.
Examples of car parks to which the green electricity supply and purchase system 100c is expected to be applied are relatively large car park in which many cars park for 30 minutes or longer, such as ones in supermarkets, cinemas, large hospitals, etc. Premises having such a car park can operate and maintain its facilities by using the green electricity stored in the battery 8, thereby reducing $CO_2$ emission per consumed electricity compared with the case where it uses non-green electricity. Of course, it is possible to receive green electricity at a lower price than that of green electricity provided from an electricity company.

[Application Example 3]

The green electricity supply and purchase system according to the present invention is applicable to fuel stations such as a petrol station, an electrical charging station, etc.
Fig. 18 is a view schematically illustrating a green electricity supply and purchase system 100d of fuel station type. It is expected that, as a result of an increase in vehicles M capable of receiving and transmitting green electricity, fuel stations such as petrol station and electrical charging station to which vehicles stop by often will adopt the green electricity supply and purchase system according to the present invention, whereby the fuel station plays a role of the mediator of the green electricity.
Underground in a premise of an electrical charging station $D_3$, a loop coil antenna 18 is provided as in the case of the green electricity supply and purchase system described above. A green electricity reception control device 3d provided underground likewise is configured to receive green electricity from a green electricity supply control device 2m via the loop coil antenna 18.
A battery 8 as a large-scale electricity storage provided underground likewise is configured to store the green electricity and supply the green electricity to a green electricity supply control device 2d of the electrical charging station $D_3$. The green electricity supply control device 2d is capable of selling the green electricity in the battery 8 to a customer's vehicle visited the premise. Of course, the green electricity may be used to operate and maintain the electrical charging station $D_3$ itself.
To the owner of the vehicle M, which supplied the green electricity, an amount of money is paid for the amount of the green electricity as in the above application example. As such, the owner of the vehicle M can sell excess electricity obtained by solar power generation at his/her household, for example.

[Application Example 4]

Further, the green electricity supply and purchase system according to the present invention is applicable to a highway.
For example, loop coil antennas 18 may be provided at predetermined intervals under a highway, so that green electricity is received via the loop coil antennas 18 from a vehicle M driving on the highway.
A vehicle with more than enough green electricity can drive while supplying the electricity to the highway. An electrical car in short of electricity can drive while receiving electricity from the highway.

<<Embodiment 3>>

In each Embodiment described above, the green electricity supply and purchase systems 100, which realize traceability of green electricity by certifying the electricity is green electricity. As illustrated in Fig. 19, the green electricity supply and purchase system 100 realizes a green electricity supply and purchase network 101 for transmitting green electricity, so that purchasers (for example, a legal entity having a company facility D) connected with this network can purchase green electricity in consideration of their budget and the remaining amount to $CO_2$ emission limitation, whereby they can buy the green electricity just as much as they need.

Meanwhile, it is not realistic at this moment that the purchasers having the company facility D etc. prepares the required electricity amount only with green electricity. Therefore, it is predicted that the conventional supply of low-cost non-green electricity from an electricity company or the like to the purchasers via a non-green electricity supply and purchase network 102 will be continued for the time being after the grid parity is achieved.

It is preferable that it is possible to determine to use which one of the green electricity obtained from the green electricity supply and purchase network 101 and the non-green electricity obtained from the non-green electricity supply and purchase network 102, and to use the electricity in how much amount according to purchaser's concerns (budget, the remaining amount to $CO_2$ emission limit, etc.).

That is, it is desirable to realize an electricity composition control device 10 capable of mixing the two available types of the electricity at an optimal ratio in consideration of a balance between the $CO_2$ emission amount per unit power and electricity cost, and using an electricity composition thus prepared. In the following, a configuration and operation of the electricity composition control device 10 according to the present invention is described in more detail.

In the present embodiment, the electricity composition control device 10 includes the-aforementioned green electricity reception control device 3, and has a function of outputting an electricity reception offer d1' (supply request) for green electricity via the communication network 9 and receiving the green electricity from the supplier. Therefore, in the present embodiment, as illustrated in Fig. 19, the company facility D includes an electricity composition control device 10 instead of the green electricity reception control device 3 illustrated in Fig. 12, so as to be capable of receiving the green electricity and non-green electricity.

The company facility D may be provided with an electricity consumption reducing system 50, which is for achieving electricity consumption reduction in the company facility D by any available means including purchasing green electricity in cooperation of the electricity composition control device 10.

[Configuration of Electricity Composition Control Device]

Fig. 20 is a block diagram illustrating a configuration of a main part of the electricity composition control device 10. In Fig. 20, the members having the same function and structure as these members illustrated in drawings referred so far are labeled with the same reference numerals with these members. Thus, their explanation is not repeated here.

As described above, the electricity composition control device 10 includes the structure of the green electricity reception control device 3 illustrated in Fig. 6. If the electricity composition control device 10 has a function of selling excess electricity of the company facility D to another party, the electricity composition control device 10 may be further provided with a transformer 34 for electricity transmission and a transmitted electricity amount measuring electricity meter 35.

The storage section 19 is configured to store a control program and an OS program, which the main control section 11 executes, and various data, which the main control section 11 performs any one of various functions of the electricity composition control device 10.

The main control section 11 is configured to integrally control sections of the electricity composition control device 10, and at least includes, as functional blocks, a $CO_2$ simulating section 55, an emission amount determining section 56, an emission amount reduction instructing section 57, and an electricity type setting switching section 58. In the present embodiment, the main control section 11 includes, as functional blocks, an electricity reception deciding section 43, an electricity reception flow control section 44, and an electricity reception completion notifying section 45 as the sections included in the structure of the green electricity reception control device 3.

The functional blocks of the main control section 11 described above can be realized by a CPU (central processing unit) reading a program from a memory device (storage section 19) realized by a ROM (read only memory) or the like, and then running the program on a RAM (random access memory) or the like (not illustrated).

Based on a necessary electricity amount (EW), the $CO_2$ simulating section 55 simulates how much $CO_2$ emission amount will be caused as a result of consumption of the necessary electricity amount (EW). More specifically, the $CO_2$ simulating section 55 calculates out $CO_2$ emission amount from the necessary electricity amount EW by using a predetermined $CO_2$ emission amount converting equation for converting unit electricity amount into $CO_2$ emission amount.

The $CO_2$ emission amount converting equation is predetermined based on such a concept that a consumer of electricity emits $CO_2$ in an amount equivalent to his electricity consumption based on the point of view that electricity generation emits $CO_2$ as much as electricity is generated. Therefore, the $CO_2$ emission amount per unit electricity amount is different for green electricity and for non-green electricity. For one necessary electricity amount EW, the $CO_2$ simulating section 55 simulates both of a $CO_2$ emission amount caused when the necessary electricity amount EW is prepared totally by the green electricity, and a $CO_2$ emission amount caused when the necessary electricity amount EW is prepared totally by the non-green electricity.

That is, the $CO_2$ simulating section 55 simulates the $CO_2$ emission amounts in the following way. Here, CL is a $CO_2$ emission amount of green electricity per kwh according to the $CO_2$ emission amount converting equation. CP is an electricity fee of the green electricity per kwh. DL is a $CO_2$ emission amount of non-green electricity per kwh according to the $CO_2$ emission amount converting equation. DP is an electricity fee of the non-green electricity per kwh. Moreover, ALLCL is a $CO_2$ emission amount emitted by preparing the necessary electricity wholly with the green electricity (that is, ALLCL is warm-house effect gas emission amount for green electricity). ALLDL is a $CO_2$ emission amount emitted by preparing the necessary electricity wholly with the non-green electricity (that is, ALLDL is warm-house effect gas emission amount for non-green electricity).

The $CO_2$ simulating section 55 simulates the $CO_2$ emission amount caused by consumption of the necessary electricity amount EW by the company facility D from the following equations:

$$ALLCL = CL \cdot EW$$

$$ALLDL = DL \cdot EW$$

Of course, ALLCL < ALLDL.

The $CO_2$ simulating section 55 may receive a necessary electricity amount EW specified by a user or may receive a necessary electricity amount EW automatically calculated by a power distribution board 32 according to a load (s) under operation.

The emission amount determining section 56 is configured to compare the remaining amount U1 to the $CO_2$ emission limit (remaining amount to warm-house effect gas emission limit; hereinafter $CO_2$ emission remaining amount U1) of the company having the company facility D, and the simulated emission amounts (ALLCL and ALLDL). The emission amount determining section 56 evaluates the simulated emission amounts as any of three cases bellows:

(Case 1) if the necessary electricity amount is prepared wholly by green electricity, $CO_2$ emission exceeds the $CO_2$ emission remaining amount U1, that is, U1 < ALLCL;
(Case 2) if the necessary electricity amount is prepared wholly by green electricity, $CO_2$ emission does not exceed the $CO_2$ emission remaining amount U1, but if the necessary electricity amount is prepared wholly by non-green electricity, $CO_2$ emission exceed the $CO_2$ emission remaining amount U1, that is ALLCL $\leq$ U1 < ALLDL; and
(Case 3) even if the necessary electricity amount is prepared wholly by non-green electricity, $CO_2$ emission does not exceed the $CO_2$ emission remaining amount U1, that is, ALLDL $\leq$ U1.

The emission amount determining section 56 refers to the $CO_2$ emission remaining amount (U1) stored in the storage section 19 in advance.

The emission amount reduction instructing section 57 is configured to instruct the electricity consumption reducing system 50 to reduce the $CO_2$ emission amount. More specifically, the emission amount reduction instructing section 57 outputs an execution command to perform an energy saving solution activity (visualization of electricity consumption, presentation of electricity consumption reduction) for reducing $CO_2$ emission amount by ALLDL - U1, if the emission amount determining section 56 determines that it is Case 1. If the activity of the emission amount reduction instructing section 57 does not achieve enough $CO_2$ emission amount reduction, the company having the company facility D takes measures such as buying $CO_2$ emission right via $CO_2$ emission right trading.

The electricity type setting switching section 58 is configured to switch over power source for the necessary electricity at an appropriate timing if necessary, between the green electricity and the non-green electricity. More specifically, in case of Case 1, the electricity type setting switching section 58 sets that the necessary electricity is to be prepared wholly with the green electricity, and instructs the electricity reception deciding section 43, the electricity reception flow control section 44, and the electricity reception completion notifying section 45 to perform the electricity reception for green electricity for the necessary electricity EW. In case of Case 3, the electricity type setting switching section 58 sets that the necessary electricity is to be prepared wholly with the non-green electricity, and controls the power distribution board 32, the electricity reception facility 33, and the transformer 34 to supply the electricity composition control device 10 with non-green electricity for the necessary electricity EW.

On the other hand, in case of case 2, the electricity type setting switching section 58 determines an optimal ratio between the green electricity and the non-green electricity in consideration of the electricity fee and the $CO_2$ emission remaining amount U1, in such a way that the necessary electricity amount EW can be prepared by using the cheap non-green electricity, provided that the $CO_2$ emission remaining amount U1 is not exceeded. The electricity type setting switching section 58 sets the power source to the non-green electricity and then switches to the green electricity at a point at which a predetermined amount of the non-green electricity is received (switching point; EChange). The switching may be from the green electricity to the non-green electricity.

Fig. 21 is a graph for explaining how the electricity type setting switching section 58 finds a switching point in Case 2.

The horizontal axis indicates the electricity consumption amount (kwh), and the vertical axis indicates $CO_2$ emission amount caused as a result of the electricity consumption amount.

The line L1 indicates relationship between the electricity consumption and $CO_2$ emission amount for non-green electricity. The line L2 indicates relationship between the electricity consumption and $CO_2$ emission amount for green electricity. As described above, the $CO_2$ emission amount reaches ALLDL (> U1) if the necessary electricity amount EW is prepared wholly with the non-green electricity as indicated by the line L1. The $CO_2$ emission amount is kept to ALLCL ($\leq$ U1) if the necessary electricity amount EW is prepared wholly with the green electricity as indicated by the line L2. The electricity type setting switching section 58 calculates out a ratio of electricity amount of the non-green electricity in composition that does not exceed U1 at the end, that is, the electricity type setting switching section 58 calculates out a switching point (EChange) from the non-green electricity to the green electricity.

The line L1 for the non-green electricity is expressed by the following equation.

$$ALLDL = DL \cdot EW \cdots (1)$$

The line L2 for the green electricity is expressed by the following equation.

$$ALLCL = CL \cdot EW \cdots (2)$$

Next, the relationship between the $CO_2$ emission limit U1 and the switching point EChange is expressed by the following equation.

$$U1 = DL \cdot EChange + CL \cdot (EW - EChange) \cdots (3)$$

According to (3), the EChange is a x coordinate of an intersection P of the line L1 and the line L2', where L2' (dashed-dotted line along the line L2 for the green electricity) is a line on which the electricity consumption of EW causes a $CO_2$ emission amount of U1. That is, the EChange is electricity consumption amount $P_x$ that should be consumed with non-green electricity.

The electricity type setting switching section 58 converts Equation (3) into the following equation:

$$EChange = (U1 - ALLCL)/(DL - CL) \cdots (4),$$

From Equation (4), the electricity type setting switching section 58 obtains the EChange.

In this example, the electricity type setting switching section 58 determines that the electricity amount of the non-green electricity to be received is $P_x$ (kwh) and the amount of electricity amount of the green electricity is EW - $P_x$ (kwh). The electricity type setting switching section 58 controls such that the electricity composition control device 10 receives the non-green electricity of $P_x$ (kwh). When the non-green electricity of $P_x$ (kwh) has received, the electricity type setting switching section 58 switches the power source to the green electricity and instructs the electricity receiving deciding section 43 to receive the green electricity of EW - $P_x$ (kwh).

[Electricity Mixing Process Flow]

Fig. 22 is a flow chart illustrating an electricity mixing process performed by the electricity composition control device 10 according to the present invention.

The $CO_2$ simulating section 55 obtains the necessary electricity amount EW, and simulates the $CO_2$ emission amount equivalent to EW in case of green electricity and in case of non-green electricity, respectively (S401).

Next, the emission amount determining section 56 compares the $CO_2$ emission remaining amount (U1) of the purchaser D with the simulated $CO_2$ emission amount (ALLCL) for the green electricity, and with the simulated $CO_2$ emission amount (ALLDL) for the non-green electricity (S402).

If the emission amount determining section 56 judges that it is Case 1 (U1 < ALLCL) ((1) at S403), the emission amount reduction instructing section 57 instructs the electricity consumption reducing system 50 to reduce the $CO_2$ emission amount by (ALLCL-U1) (S404). Further, the electricity type setting switching section 58 instructs the electricity reception deciding section 43 to prepare the necessary electricity amount EW whole with the green electricity (S405). The electricity reception deciding section 43, the electricity reception flow control section 44, and the electricity reception completion notifying section 45 performs electricity reception preparation to receive the green electricity of the necessary electricity amount EW (kwh) in a way similar to the one described above. That is, the electricity reception deciding section 43 transmits, to the green electricity supply control device 2, an electricity reception request d1' in which requested electricity amount of the electricity reception is "EW (kwh)" (S408). Then, the electricity reception flow control section 44 receives the green electricity of EW (kwh) from the green electricity supply control device 2, and the electricity reception completion notifying section 45 creates an electricity reception completion report d4 and transmits the electricity reception completion report d4 to the green electricity supply/purchase certifying device 1 (S409).

On the other hand, the emission amount determining section 56 determines that it is Case 2 (ALLCL $\leq$ U1 < ALLDL) ((2) at S403), the electricity type setting switching section 58 performs the aforementioned process to calculate out a switching point EChange from the non-green electricity to the green electricity (S406). Then, the electricity type setting switching section 58 sets the power source to the non-green electricity and controls the sections to receive the non-green electricity of $P_x$ (kwh) up to the EChange. After that, the electricity type setting switching section 58 instructs the electricity reception deciding section 43 to receive the green electricity for EW - $P_x$ (kwh), which has not been received yet (S407). The electricity reception deciding section 43, the electricity reception flow control section 44, and the electricity reception completion notifying section 45 performs the process as described above, so as to perform the electricity reception preparation to receive the green electricity of necessary electricity amount EW - $P_x$ (kwh) (S408, S409).

If the emission amount determining section 56 judges that it is Case 3 (ALLDL $\leq$ U1) ((3) at S403), the electricity type setting switching section 58 controls the sections of the electricity composition control device 10 to prepare the necessary electricity EW wholly with the non-green electricity, thereby performing the electricity reception preparation to receive the non-green electricity (S410). Here, the electricity type setting switching section 58 may be notified of a switching point to the green electricity based on a predetermined rule, so that the purchaser can have some leeway for the $CO_2$ emission remaining amount.

According to the configuration or the method, the electricity composition control device 10 can automatically prepare an electricity composition for the necessary electricity amount EW in consideration of the necessary electricity amount EW (kwh) and the $CO_2$ emission remaining amount, which is the remaining amount to the $CO_2$ emission limit, so that the $CO_2$ emission is kept at or below U1 while the electricity cost is kept as low as possible.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

Finally, the functional blocks of the green electricity supply/purchase certifying device 1, the green electricity supply control device 2, the green electricity reception control device 3, the green electricity transaction settling device 5, and the electricity composition control device 10 may be realized by way of hardware or software as executed by a CPU as follows:

The green electricity supply/purchase certifying device 1, the green electricity supply control device 2, the green electricity reception control device 3, the green electricity transaction settling device 5, and the electricity composition control device 10 each include a CPU (central processing unit) and memory devices (memory media). The CPU (central processing unit) executes instructions in control programs realizing the functions. The memory devices include a ROM (read only memory) which contains programs, a RAM (random access memory) to which the programs are loaded, and a memory containing the programs and various data. The object of the present invention can also be achieved by mounting to the green electricity supply/purchase certifying device 1, the green electricity supply control device 2, the green electricity reception control device 3, the green electricity transaction settling device 5, and the electricity composition control device 10 a computer-readable storage medium containing control program code (executable program, intermediate code program, or source program) for the green electricity supply/purchase certifying device 1, the green electricity supply control device 2, the green electricity reception control device 3, the green electricity transaction settling device 5, and the electricity composition control device 10, which is software realizing the aforementioned functions, in order for the computer (or CPU, MPU) to retrieve and execute the program code contained in the storage medium.

The storage medium may be, for example, a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.

The green electricity supply/purchase certifying device 1, the green electricity supply control device 2, the green electricity reception control device 3, the green electricity transaction settling device 5, and the electricity composition control device 10 may be arranged to be connectable to a communications network so that the program code may be delivered over the communications network. The communications network is not limited in any particular manner, and may be, for example, the Internet, an intranet, extranet, LAN, ISDN, VAN, CATV communications network, virtual dedicated network (virtual private network), telephone line network, mobile communications network, or satellite communications network. The transfer medium which makes up the communications network is not limited in any particular manner, and may be, for example, wired line, such as IEEE 1394, USB, electric power line, cable TV line, telephone line, or ADSL line; or wireless, such as infrared radiation (IrDA, remote control), Bluetooth, 802.11 wireless, HDR, mobile telephone network, satellite line, or terrestrial digital network. The present invention encompasses a carrier wave or data signal transmission in which the program code is embodied electronically.

[Means to solve the problem]

The present invention may be constructed as follows.

The green electricity supply/purchase certifying device according to the present invention may be preferably configured such that the performed electricity transmission information and the performed electricity reception information includes time when the electricity transmission or the electricity reception occurred, an electricity transmission sender ID for identifying the transmission electricity sender, and an electricity transmission receiver ID for identifying the transmission electricity receiver, the performed electricity transmission/reception checking means judges that the performed electricity transmission information and the performed electricity reception information are consistent with each other, if the performed electricity transmission information and the performed electricity reception information are consistent in terms of the time, the electricity transmission sender ID, and the electricity transmission receiver ID.

With this configuration, the green electricity supply/purchase certifying device is notified of the information on "when the green electricity of how much amount is transmitted/received from who to whom" respectively from the electricity transmission sender and the electricity transmission receiver.

It becomes possible to exactly trace the supply and purchase of the green electricity based on the supply and purchase information thus created from the performed transmission information and the performed reception information.

The green electricity supply and purchase system according to the present invention may further comprise the above-described moving object.

The green electricity supply and purchase system according to the present invention may further comprise the above-described green electricity transaction settling device.

The green electricity supply and purchase system according to the present invention may further comprise the above-described electricity composition control device.

The green electricity supply and purchase system may be configured such that the electricity transmission and reception of the green electricity between the green electricity supply control device and the green electricity reception control device is performed by wireless transmission or via an electric cable.

The green electricity supply and purchase system may be configured such that the electricity transmission and reception of the green electricity between the green electricity supply control device and the green electricity reception control device is performed via an electricity transmission and distribution network.

The electricity composition controlling method may preferably further comprise instructing reduction in a warm-house effect gas emission by (the warm-house effect gas emission amount of the green electricity - the remaining amount to the warm-house gas emission limit) if it is judged in the step of comparing that the remaining amount to the warm-house gas emission limit < the warm-house effect gas emission amount of the green electricity.

The electricity composition controlling method may preferably further comprise performing electricity reception preparation to receive the non-green electricity to prepare the necessary electricity amount wholly with the non-green electricity, if it is judged in the step of comparing that the warm-house effect gas emission amount of the non-green electricity ≤ the remaining amount to the warm-house gas emission limit.

Industrial Applicability

With a green electricity supply and purchase system according to the present invention, green electricity generated by a green electricity generating device can be provided to a purchaser in such a manner that it is possible to certify the electricity is green electricity. This assists the purchaser to achieve purchaser's obligation to achieve $CO_2$ emission amount reduction, even if the purchaser needs a lot of electricity. Therefore, it is preferable to apply a green electricity supply control device 2 and/or a green electricity reception control device 3 according to the present invention to buildings and moving objects belonging to any kinds of corporations, associations, or individuals.

There are households, which have excess electricity from their solar power generation and offer such excess electricity at low prices. Under such circumstances, the green electricity supply and purchase system according to the present invention provides such a merit that corporations and associations under the emission reduction obligation can be supplied with green electricity at low cost, because the green electricity supply and purchase system according to the present invention can allow individual levels (such as household) to directly supply green electricity to the purchaser via the electricity transmission and distribution network. That is, installation of a green electricity supply control device 2 on a general household building (house, apartment, etc.) provides a large economical merit.

Reference Signs List

1: Green electricity supply/purchase certifying device (notified party)
2: Green electricity supply control device (electricity transmission sender)
3: Green electricity reception control device (electricity transmission receiver)
4: Supply and purchase management database
5: Green electricity transaction settling device
6: green certified battery (green electricity storage device)
7: Green electricity generating device
8: Battery (green electricity storage device)
9: Communication network
10: Electricity composition control device
11: Main control section
12: Communication section
13: Electricity transmission/reception completion report temporary storage section
14: Electricity line
15: Price table storage section
16: Mediation fee table storage section
17: Electricity transmission antenna
18: Loop coil antenna
19: Storage section
20: Electricity transmission/reception completion report acquiring section
21: Electricity transmission/reception completion report checking section (performed electricity transmission/reception checking means)
22: Supply and purchase information processing section (supply and purchase information creating means)
23: Certificate issuing section
32: Power distribution board
33: Electricity reception facility
34: Transformer
35: Transmitted electricity amount measuring electricity meter
36: Received electricity amount measuring electricity meter
40: Electricity transmission deciding section (electricity transmission deciding means)
41: Electricity transmission flow control section (electricity transmission flow control means)
42: Electricity transmission completion notifying section (performed electricity transmission information notifying means)
43: Electricity reception deciding section (electricity reception deciding means)
44: Electricity reception flow control section (electricity reception flow control means)
45: Electricity reception completion notifying section (performed electricity reception information notifying means)
46: Payment processing section (transaction settling processing means / payment processing means/supply and purchase information acquiring means)

47: Billing processing section (transaction settling processing means / billing processing means/supply and purchase information acquiring means)

48: Supply and purchase invoice issuing section

50: Electricity consumption reducing system

55: $CO_2$ emission amount simulating section (emission amount calculating means)

56: Emission amount determining section (emission amount comparing means)

57: Emission amount reduction instructing section

58: Electricity type setting switching section (electricity type-distinguished electricity amount deciding means)

100: Green electricity supply and purchase system

101: Green electricity supply and purchase network

102: Non-green electricity supply and purchase network

d1: Supply offer

d1': Supply request

d2: Supply offer acceptance

d2': Supply request acceptance

d3: Electricity transmission completion report (performed electricity transmission information)

d4: Electricity reception completion report (performed electricity reception information)

d5: Supply and purchase information

d6: Supply offer

d7: Supply offer acceptance

d8: Electricity transmission completion report (performed electricity transmission information)

d9: Electricity reception completion report (performed electricity reception information)

d10: Supply and purchase information

d11: Payment amount for supplied electricity amount

d12: Payment amount for mediation amount

d13: Billing amount for received electricity amount

## Claims

1.  An electricity supply and purchase system for transmitting electricity via an electric line from an electricity transmission sender to an electricity transmission receiver, comprising:

    electricity transmission deciding means for deciding an electricity transmission content including an electricity amount of the electricity transmission to be transmitted from the electricity transmission sender;
    electricity reception deciding means for deciding an electricity reception content including an electricity amount of electricity reception at the electricity transmission receiver;
    a communication system for communication between the electricity transmission sender and the electricity transmission receiver, the communication being carried out for matching consistency between the electricity transmission content and the electricity reception content;
    electricity transmission flow control means for performing the electricity transmission from the electricity transmission sender to the electricity line based on the electricity transmission content for which the consistency is confirmed by the communication performed via the communication system;
    electricity reception flow control means for performing the electricity reception at the electricity transmission receiver from the electricity line based on the electricity reception content for which the consistency is confirmed by the communication performed via the communication system.

2.  An electricity supply control device for use at an electricity transmission sender in an electricity supply and purchase system for transmitting electricity via an electric line from the electricity transmission sender to an electricity transmission receiver, the electricity supply control device comprising:

    electricity transmission deciding means for deciding an electricity transmission content in case of performing the electricity transmission of the green electricity to the electricity transmission receiver, the electricity transmission deciding means deciding the electricity transmission content by communication with the electricity transmission receiver via a communication section in order to match consistency between the electricity transmission content and an electricity reception content of the electricity transmission receiver; and
    electricity transmission flow control means for performing the electricity transmission from the electricity transmission sender to the electricity line based on the electricity transmission content for which the consistency is confirmed by the electricity transmission deciding means.

3. An electricity reception control device for use at an electricity transmission receiver in an electricity supply and purchase system for transmitting electricity via an electric line from an electricity transmission sender to the electricity transmission receiver, the electricity reception control device comprising:

electricity reception deciding means for deciding an electricity reception content in case of performing the electricity transmission of the green electricity to the electricity transmission receiver, the electricity reception deciding means deciding the electricity reception content by communication with the electricity transmission sender via a communication section in order to match consistency between the electricity reception content and an electricity transmission content of the electricity transmission receiver; and
electricity reception flow control means for performing the electricity reception at the electricity transmission receiver from the electricity line based on the electricity reception content for which the consistency is confirmed by the electricity reception deciding means.

4. A green electricity supply control device, comprising:

a communication section for communicating with an electricity transmission receiver via a communication network, the electricity transmission receiver being a counterpart to which the green electricity supply control device is to transmit green electricity;
electricity transmission deciding means for deciding an electricity transmission content by communicating with the electricity transmission receiver via the communication section in case of performing the electricity transmission of the green electricity to the electricity transmission receiver;
electricity transmission flow control means for performing the electricity transmission of the green electricity to the electricity transmission receiver based on the electricity transmission content decided by the electricity transmission deciding means; and
performed electricity transmission information notifying means for notifying a predetermined notification receiving party of performed electricity transmission information after the electricity transmission is completed by the electricity transmission flow control means, the performed electricity transmission information including the electricity transmission receiver and an electricity amount of the electricity transmission.

5. A green electricity reception control device, comprising:

a communication section for communicating with an electricity transmission sender via a communication network, the electricity transmission sender being for transmitting green electricity;
electricity reception deciding means for deciding an electricity reception content by communicating with the electricity transmission sender via the communication section in case of performing the electricity reception of the green electricity from the electricity transmission sender;
electricity reception flow control means for performing the electricity reception of the green electricity from the electricity transmission sender based on the electricity reception content decided by the electricity reception deciding means; and
performed electricity reception information notifying means for notifying a predetermined notification receiving party of performed electricity reception information after the electricity reception is completed by the electricity reception flow control means, the performed electricity reception information including the electricity transmission sender and an electricity amount of the electricity reception.

6. A green electricity supply/purchase certifying device, comprising:

performed electricity transmission/reception checking means for comparing (i) performed electricity transmission information transmitted from an electricity transmission sender for transmitting green electricity and (ii) performed electricity reception information transmitted from an electricity transmission receiver for receiving green electricity from the electricity transmission sender, so as to check whether or not the performed electricity transmission information and the performed electricity reception information are consistent with each other; and
supply and purchase information creating means for creating supply and purchase information in which (i) the performed electricity transmission information and the performed electricity reception information, which the performed electricity transmission/reception checking means judges as being consistent with each other, are paired, and (ii) the electricity transmission sender, the electricity transmission receiver, and an electricity amount of the green electricity transmitted/received are included.

**7.** The green electricity supply/purchase certifying device as set forth in claim 6, wherein
the performed electricity transmission information and the performed electricity reception information includes time when the electricity transmission or the electricity reception occurred, an electricity transmission sender ID for identifying the transmission electricity sender, and an electricity transmission receiver ID for identifying the transmission electricity receiver,
the performed electricity transmission/reception checking means judges that the performed electricity transmission information and the performed electricity reception information are consistent with each other, if the performed electricity transmission information and the performed electricity reception information are consistent in terms of the time, the electricity transmission sender ID, and the electricity transmission receiver ID.

**8.** A electricity composition control device, comprising:

emission amount calculating means for calculating out a warm-house effect gas emission amount of green electricity in use of the green electricity to prepare a necessary electricity amount, and a warm-house effect gas emission amount of non-green electricity in use of the non-green electricity to prepare the necessary electricity amount;
emission amount comparing means for comparing (i) a remaining amount to a warm-house gas emission limit with (ii) the warm-house effect gas emission amount of the green electricity and with (iii) the warm-house effect gas emission amount of the non-green electricity, where the remaining amount to the warm-house gas emission limit indicates a preset limit in a warm-house gas emission allowed; and
electricity type-distinguished electricity amount deciding means for deciding electricity amounts of the green electricity and the non-green electricity to be received to prepare the necessary electricity amount, if the emission amount comparing means judges that the warm-house effect gas emission amount of the green electricity $\leq$ the remaining amount to the warm-house gas emission limit < the warm-house effect gas emission amount of the non-green electricity, the electricity type-distinguished electricity amount deciding means deciding the electricity amounts of the green electricity and the non-green electricity in such a way that the warm-house effect gas emission amount will not exceed the remaining amount to the warm-house gas emission limit.

**9.** A green electricity transaction settling device, comprising:

supply and purchase information acquiring means for acquiring supply and purchase information from a supply and purchase management database in which the supply and purchase information is stored, the supply and purchase information including an electricity transmission sender for supplying green electricity, an electricity transmission receiver for receiving the green electricity from the electricity transmission sender, and an electricity amount of the green electricity supplied/received; and
transaction settling processing means for calculating out payment to pay and to be paid for the supplied and received electricity amount of the green electricity based on the supply and purchase information acquired by the supply and purchase information acquiring means.

**10.** A moving object, comprising:

a communication section for communicating with an external device via a communication network;
a green electricity reception control device for receiving green electricity from an electricity transmission sender for sending the green electricity;
a green electricity storage device for storing the green electricity received by the green electricity reception control device;
a green electricity supply control device for transmitting the green electricity in the green electricity storage device to an electricity transmission receiver to which the green electricity is to be transmitted,
the green electricity reception control device including:

electricity reception deciding means for deciding an electricity reception content in case of performing the electricity reception of the green electricity from the electricity transmission sender, the electricity reception deciding means deciding the electricity reception content by communication with the electricity transmission sender via a communication section;
electricity reception flow control means for performing the electricity reception from the electricity transmission sender based on the electricity reception content decided by electricity reception deciding means; and
performed electricity reception information notifying means for notifying a predetermined notification receiving party of performed electricity reception information after the electricity reception is completed by the electricity reception flow control means, the performed electricity reception information including the electricity transmission sender and an electricity amount of the electricity reception, and

the green electricity supply control device including:

electricity transmission deciding means for deciding an electricity transmission content in case of performing the electricity transmission of the green electricity to the electricity transmission receiver, the electricity transmission deciding means deciding the electricity transmission content by communication with the electricity transmission receiver via a communication section;

electricity transmission flow control means for performing the electricity transmission to the electricity transmission receiver based on the electricity transmission content decided by the electricity transmission deciding means; and

performed electricity transmission information notifying means for notifying a predetermined notification receiving party of performed electricity transmission information after the electricity transmission is completed by the electricity transmission flow control means, the performed electricity transmission information including the electricity transmission receiver and an electricity amount of the electricity transmission.

11. A building, comprising:

a green electricity generating device for generating green electricity;

a green electricity supply control device for transmitting the green electricity generated by the green electricity generating device to an electricity transmission receiver to which the green electricity is to be transmitted,

the green electricity supply control device including:

a communication section for communicating with an electricity transmission receiver via a communication network, the electricity transmission receiver being a counterpart to which the green electricity supply control device is to transmit green electricity;

electricity transmission deciding means for deciding an electricity transmission content by communicating with the electricity transmission receiver via the communication section in case of performing the electricity transmission of the green electricity to the electricity transmission receiver;

electricity transmission flow control means for performing the electricity transmission of the green electricity to the electricity transmission receiver based on the electricity transmission content decided by the electricity transmission deciding means; and

performed electricity transmission information notifying means for notifying a predetermined notification receiving party of performed electricity transmission information after the electricity transmission is completed by the electricity transmission flow control means, the performed electricity transmission information including the electricity transmission receiver and an electricity amount of the electricity transmission.

12. A building, comparing:

a green electricity reception control device,

the green electricity reception control device including:

a communication section for communicating with an electricity transmission sender via a communication network, the electricity transmission sender being for transmitting green electricity;

electricity reception deciding means for deciding an electricity reception content by communicating with the electricity transmission sender via the communication section in case of performing the electricity reception of the green electricity from the electricity transmission sender;

electricity reception flow control means for performing the electricity reception of the green electricity from the electricity transmission sender based on the electricity reception content decided by the electricity reception deciding means; and

performed electricity reception information notifying means for notifying a predetermined notification receiving party of performed electricity reception information after the electricity reception is completed by the electricity reception flow control means, the performed electricity reception information including the electricity transmission sender and an electricity amount of the electricity reception.

13. A green electricity supply and purchase system, comprising:

EP 2 533 189 A1

a green electricity supply control device for transmitting green electricity;
a green electricity reception control device for receiving green electricity; and
a green electricity supply/purchase certifying device for certifying supply and purchase of the green electricity,
the green electricity supply control device including:

a communication section for communicating with an electricity transmission receiver via a communication network, the electricity transmission receiver being a counterpart to which the green electricity supply control device is to transmit green electricity;

electricity transmission deciding means for deciding an electricity transmission content by communicating with the electricity transmission receiver via the communication section in case of performing the electricity transmission of the green electricity to the electricity transmission receiver;

electricity transmission flow control means for performing the electricity transmission of the green electricity to the electricity transmission receiver based on the electricity transmission content decided by the electricity transmission deciding means; and

performed electricity transmission information notifying means for notifying a predetermined notification receiving party of performed electricity transmission information after the electricity transmission is completed by the electricity transmission flow control means, the performed electricity transmission information including the electricity transmission receiver and an electricity amount of the electricity transmission,

the green electricity reception control device including:

a communication section for communicating with an electricity transmission sender via a communication network, the electricity transmission sender being for transmitting green electricity;

electricity reception deciding means for deciding an electricity reception content by communicating with the electricity transmission sender via the communication section in case of performing the electricity reception of the green electricity from the electricity transmission sender;

electricity reception flow control means for performing the electricity reception of the green electricity from the electricity transmission sender based on the electricity reception content decided by the electricity reception deciding means; and

performed electricity reception information notifying means for notifying a predetermined notification receiving party of performed electricity reception information after the electricity reception is completed by the electricity reception flow control means, the performed electricity reception information including the electricity transmission sender and an electricity amount of the electricity reception, and

green electricity supply/purchase certifying device including:

performed electricity transmission/reception checking means for comparing (i) performed electricity transmission information transmitted from an electricity transmission sender for transmitting green electricity and (ii) performed electricity reception information transmitted from an electricity transmission receiver for receiving green electricity from the electricity transmission sender, so as to check whether or not the performed electricity transmission information and the performed electricity reception information are consistent with each other; and

supply and purchase information creating means for creating supply and purchase information in which (i) the performed electricity transmission information and the performed electricity reception information, which the performed electricity transmission/reception checking means judges as being consistent with each other, are paired, and (ii) the electricity transmission sender, the electricity transmission receiver, and an electricity amount of the green electricity transmitted/received are included.

14. The green electricity supply and purchase system as set forth in claim 13, further comprising a moving object as set forth in claim 10.

15. The green electricity supply and purchase system as set forth in claim 13 or 14, further comprising a green electricity transaction settling device as set forth in claim 9.

16. The green electricity supply and purchase system as set forth in any one of claims 13 to 15, further comprising an electricity composition control device as set forth in claim 8.

17. The green electricity supply and purchase system as set forth in any one of claims 13 to 16, wherein the electricity transmission and reception of the green electricity between the green electricity supply control device and the green electricity reception control device is performed by wireless transmission or via an electric cable.

18. The green electricity supply and purchase system as set forth in any one of claims 13, 15, and 16, wherein the electricity transmission and reception of the green electricity between the green electricity supply control device and the green electricity reception control device is performed via an electricity transmission and distribution network.

19. A green electricity transmitting and receiving method, comprising:

deciding electricity transmission, including deciding an electricity transmission content of the electricity transmission by an electricity transmission sender for transmitting green electricity, wherein the electricity transmission sender decides the electricity transmission content by communicating with an electricity transmission receiver being a counterpart for receiving the green electricity;

deciding electricity reception, including deciding an electricity reception content by the electricity transmission receiver, wherein the electricity transmission receiver decides the electricity reception content by communicating with the electricity transmission sender;

performing an electricity transmission flow control in which the electricity transmission sender performs the electricity transmission based on the electricity transmission content decided in the step of deciding the electricity transmission;

notifying performed electricity transmission information from the electricity transmission sender to a predetermined notified party after the electricity transmission in the step of performing the electricity transmission flow control is completed, the performed electricity transmission information including the electricity transmission receiver and an electricity amount of the electricity transmission;

performing electricity reception flow control in which the electricity transmission receiver performs the electricity reception based on the electricity reception content decided in the step of deciding the electricity reception; and

notifying performed electricity reception information from the electricity transmission receiver to the notified party after the electricity reception in the step of performing the electricity reception flow control completed, the performed electricity reception information including the electricity transmission sender and an electricity amount of the electricity reception.

20. A green electricity supply/purchase certifying method, comprising:

checking performed electricity transmission/reception by comparing (i) performed electricity transmission information transmitted from an electricity transmission sender for transmitting green electricity and (ii) performed electricity reception information transmitted from an electricity transmission receiver for receiving green electricity from the electricity transmission sender, so as to check whether or not the performed electricity transmission information and the performed electricity reception information are consistent with each other; and

creating supply and purchase information in which (i) the performed electricity transmission information and the performed electricity reception information, which are judged as being consistent with each other in the step of checking, are paired, and (ii) the electricity transmission sender, the electricity transmission receiver, and an electricity amount of the green electricity transmitted/received are included.

21. An electricity composition controlling method, comprising:

calculating out a warm-house effect gas emission amount of green electricity in use of the green electricity to prepare a necessary electricity amount, and a warm-house effect gas emission amount of non-green electricity in use of the non-green electricity to prepare the necessary electricity amount;

comparing (i) a remaining amount to a warm-house gas emission limit with (ii) the warm-house effect gas emission amount of the green electricity and with (iii) the warm-house effect gas emission amount of the non-green electricity, where the remaining amount to the warm-house gas emission limit indicates a preset limit in a warm-house gas emission allowed; and

deciding electricity amounts of the green electricity and the non-green electricity to be received to prepare the necessary electricity amount, wherein, if it is judged in the step of comparing that the warm-house effect gas emission amount of the green electricity $\leq$ the remaining amount to the warm-house gas emission limit < the warm-house effect gas emission amount of the non-green electricity, the electricity amounts of the green electricity and the non-green electricity are judged in such a way that the warm-house effect gas emission amount will not exceed the remaining amount to the warm-house gas emission limit.

**22.** The electricity composition controlling method as set forth in claim 21, comprising:

instructing reduction in a warm-house effect gas emission by (the warm-house effect gas emission amount of the green electricity - the remaining amount to the warm-house gas emission limit) if it is judged in the step of comparing that the remaining amount to the warm-house gas emission limit < the warm-house effect gas emission amount of the green electricity.

**23.** The electricity composition controlling method as set forth in claim 21 or 22, comprising:

performing electricity reception preparation to receive the non-green electricity to prepare the necessary electricity amount wholly with the non-green electricity, if it is judged in the step of comparing that the warm-house effect gas emission amount of the non-green electricity $\leq$ the remaining amount to the warm-house gas emission limit.

**24.** A transaction settling method, comprising:

acquiring supply and purchase information from a supply and purchase management database in which the supply and purchase information is stored, the supply and purchase information including an electricity transmission sender for supplying green electricity, an electricity transmission receiver for receiving the green electricity from the electricity transmission sender, and an electricity amount of the green electricity supplied/received; and

performing a transaction settling process for calculating out payment to pay and to be paid for the supplied and received electricity amount of the green electricity based on the supply and purchase information acquired by the step of acquiring.

**25.** An electricity composition controlling program for causing a computer to perform:

calculating out a warm-house effect gas emission amount of green electricity in use of the green electricity to prepare a necessary electricity amount, and a warm-house effect gas emission amount of non-green electricity in use of the non-green electricity to prepare the necessary electricity amount;

comparing (i) a remaining amount to a warm-house gas emission limit with (ii) the warm-house effect gas emission amount of the green electricity and with (iii) the warm-house effect gas emission amount of the non-green electricity, where the remaining amount to the warm-house gas emission limit indicates a preset limit in a warm-house gas emission allowed; and

deciding electricity amounts of the green electricity and the non-green electricity to be received to prepare the necessary electricity amount, wherein, if it is judged in the step of comparing that the warm-house effect gas emission amount of the green electricity $\leq$ the remaining amount to the warm-house gas emission limit < the warm-house effect gas emission amount of the non-green electricity, the electricity amounts of the green electricity and the non-green electricity are judged in such a way that the warm-house effect gas emission amount will not exceed the remaining amount to the warm-house gas emission limit.

FIG. 1

EP 2 533 189 A1

FIG. 2

FIG. 3

| Supplying device ID | Electricity transmission offer | Offered electricity amount of electricity transmission | ~d1 |

| Receiving device ID | Electricity transmission offer acceptance | Requested electricity amount of electricity reception | ~d2 |

| Electricity transmission completion time | Supplying device ID | Receiving device ID | Electricity amount E0 of electricity transmission | Electricity amount E1 of electricity reception | Electricity transmission and distribution network ID ($N_1$) | ~d3 |

| Electricity reception completion time | Receiving device ID | Supplying device ID | Electricity amount E0 of electricity transmission | Electricity amount E1 of electricity reception | Electricity transmission and distribution network ID ($N_4$) | ~d4 |

FIG. 4

| Supply and purchase event ID | Electricity transmission/ reception completion time | Supplying device ID | Receiving device ID | Electricity amount E1 of electricity reception | Electricity amount E0 of electricity transmission | Transited electricity transmission and distribution network |
|---|---|---|---|---|---|---|
| 201001-000001 | 2010/1/8 17:13 | 2s2s2s | 3d4 | 100kwh | 120kwh | $N_1 \rightarrow N_2 \rightarrow N_4$ |
| 201001-000002 | 2010/1/9 9:05 | 2s2s2s | 3d5 | 200kwh | 280kwh | $N_1 \rightarrow N_2 \rightarrow N_4 \rightarrow N_5 \rightarrow N_6$ |
| 201001-000003 | 2010/1/9 9:05 | ＊＊＊＊ | ●●●● | 50kwh | 60kwh | $N_3$ |
| 201001-000004 | 2010/1/10 12:30 | ◇◇◇◇ | ◎◎◎◎ | 23kwh | 25kwh | $N_6$ |
| ⋮ | ⋮ | ⋮ | ⋮ | ⋮ | ⋮ | ⋮ |

EP 2 533 189 A1

FIG. 5

Green electricity supply control device (2)

Green electricity reception control device (3)
Green electricity supply/purchase certifying device (1)

Electricity line (14)

Transformer (34)
Transmitted electricity amount measuring electricity meter (35)

Transformer (34)
Received electricity amount measuring electricity meter (36)

Electricity reception facility (33)
Power distribution board (32)

Green electricity generating device (7)

Main control section (11)
Electricity transmission deciding section (40)
Electricity transmission flow control section (41)
Electricity transmission completion notifying section (42)

Storage section (19)
Communication section (12)
(9)

load (House electric appliance etc.)

Battery (8)

FIG. 6

EP 2 533 189 A1

EP 2 533 189 A1

FIG. 7

Green electricity supply
control device

Green electricity
reception control device

Green electricity supply/
purchase certifying device

S1 — Decide electricity amount of electricity transmission, and send supply offer d1

S2 — Receive supply offer d1

S3 — Possible to receive electricity? — NO

YES

S4 — Transmit supply offer acceptance d2

S5 — Receive supply offer acceptance d2

S6 — Transmit green electricity of accepted amount to reception control device

S10 — Receive green electricity from supply control device

S7 — Electricity transmission complete? — NO

YES

S11 — Electricity reception complete? — NO

S8 — Create electricity transmission completion report d3

YES

S12 — Create electricity reception completion report d4

S13 — Transmit electricity reception completion report d4

S14 — Receive electricity reception completion report d4

S9 — Transmit electricity transmission completion report d3

S15 — Receive electricity transmission completion report d3

S16 — Check consistency between electricity transmission completion report d3 and electricity reception completion report d4

S17 — Electricity transmission/reception completion times, device IDs, and supplied and received amounts are consistent? — NO

YES

S18 — Create supply and purchase info d5 in which report d3 and report d4 consistent with each other are associated with each other

S19 — Store supply and purchase info d5 in supply and purchase management database

55

FIG. 8

Green electricity transaction settling device — 5

- Communication section — 12

Main control section — 11

- Supply and purchase invoice issuing section — 48
- Payment processing section — 46
- Billing processing section — 47

Storage section — 19

- Price table storage section — 15
- Mediation fee table storage section — 16

— 9

Supply and purchase management database — 4

FIG. 9

| Electricity transmission and distribution network ID | Network-owning electricity company | Mediation fee |
|---|---|---|
| $N_1$ | KY electricity Co. Ltd. | ¥0. 8/kwh |
| $N_2$ | TY energy Co. Ltd. | ¥0. 5/kwh |
| $N_3$ | S energy Co. Ltd. | ¥0. 2/kwh |
| $N_4$ | K electricity Corp. | ¥1/kwh |
| $N_5$ | T electricity Corp. | ¥1/kwh |
| $N_6$ | H electricity Ltd. | ¥0. 5/kwh |
| : | : | : |

FIG. 10

```
                    ┌──────────────┐
                    │    Start     │
                    └──────┬───────┘
                           │
┌──────────────────────────────────────────────────────┐
│ Extract records of supply and purchase events in      │  S301
│ account-period month from supply and purchase         │
│ management database                                   │
└──────────────────────────────────────────────────────┘
                           │
┌──────────────────────────────────────────────────────┐
│ Sort extracted records based on supplying devices     │  S302
│ ID                                                    │
└──────────────────────────────────────────────────────┘
                           │
┌──────────────────────────────────────────────────────┐
│ Sum received green electricity amounts of records     │  S303
│ with same supplying device ID                         │
└──────────────────────────────────────────────────────┘
                           │
┌──────────────────────────────────────────────────────┐
│ Calculate out payment amount by multiplying the sum of│  S304
│ received green electricity amounts with unit price    │
└──────────────────────────────────────────────────────┘
                           │
┌──────────────────────────────────────────────────────┐
│ Calculate out, for every electricity transmission and │  S305
│ distribution network ID, for records with same        │
│ supplying device ID, how much mediation fee should be │
│ paid to respective owners of electricity transmission │
│ and distribution networks used in electricity         │
│ transmission based on mediation fee table             │
└──────────────────────────────────────────────────────┘
                           │
┌──────────────────────────────────────────────────────┐
│ Calculate out final payment amount by subtracting     │  S306
│ sum of mediation fees from payment amount             │
│ (considering discount, tax, etc. if necessary)        │
└──────────────────────────────────────────────────────┘
                           │
┌──────────────────────────────────────────────────────┐
│ Notify final payment amount for each supplying        │  S307
│ device ID                                             │
└──────────────────────────────────────────────────────┘
                           │
            ┌──────────────────────────────┐
       NO   │ Has final payment amount      │  S308
    ◄───────│ calculation finished for all  │
            │ supplying device IDs?         │
            └──────────────────────────────┘
                           │ YES
┌──────────────────────────────────────────────────────┐
│ Sort, based on electricity transmission and           │  S309
│ distribution network ID, records of mediation fees    │
│ calculated out per electricity transmission and       │
│ distribution network ID, and sum the mediation fees   │
│ per electricity transmission and distribution network │
│ ID                                                    │
└──────────────────────────────────────────────────────┘
                           │
┌──────────────────────────────────────────────────────┐
│ Notify the sum of the mediation fees for each         │  S310
│ electricity transmission and distribution network ID  │
└──────────────────────────────────────────────────────┘
                           │
                    ┌──────────────┐
                    │     End      │
                    └──────────────┘
```

FIG. 11

```
                        ┌──────────┐
                        │  Start   │
                        └────┬─────┘
                             │
    ┌────────────────────────▼────────────────────────┐
    │ Extract records of supply and purchase events in │ ⌐S201
    │   account-period month from supply and purchase  │
    │              management database                 │
    └────────────────────────┬────────────────────────┘
                             │
    ┌────────────────────────▼────────────────────────┐
    │ Sort extracted records based on receiving devices│ ⌐S202
    │                      ID                          │
    └────────────────────────┬────────────────────────┘
                             │
    ┌────────────────────────▼────────────────────────┐
    │ Sum supplied green electricity amounts of records│ ⌐S203
    │            with same receiving device ID         │
    └────────────────────────┬────────────────────────┘
                             │
    ┌────────────────────────▼────────────────────────┐
    │Calculate out billing amount by multiplying the sum│ ⌐S204
    │  of supplied green electricity amounts with unit  │
    │                 billing price                     │
    └────────────────────────┬────────────────────────┘
                             │
    ┌────────────────────────▼────────────────────────┐
    │Calculate out final billing amount from the billing│ ⌐S205
    │ amount per receiving device ID in consideration of│
    │        mediation fee, discount, tax, etc.         │
    └────────────────────────┬────────────────────────┘
                             │
    ┌────────────────────────▼────────────────────────┐
    │Notify final billing amount per receiving device ID│ ⌐S206
    └────────────────────────┬────────────────────────┘
                             │
                        ┌────▼─────┐
                        │   End    │
                        └──────────┘
```

FIG. 12

EP 2 533 189 A1

FIG. 13

| Supplying device ID | Electricity transmission offer | Offered electricity amount of electricity transmission | ~d1, d6 |
|---|---|---|---|

| Receiving device ID | Electricity transmission offer acceptance | Requested electricity amount of electricity reception | ~d2, d7 |
|---|---|---|---|

| Electricity transmission completion time | Supplying device ID | Receiving device ID | Electricity amount of electricity transmission | ~d3, d8 |
|---|---|---|---|---|

| Electricity reception completion time | Receiving device ID | Supplying device ID | Electricity amount of electricity transmission | Stored electricity amount | ~d4, d9 |
|---|---|---|---|---|---|

EP 2 533 189 A1

FIG. 14

| Supply and purchase event ID | Electricity transmission/ reception time | Supplying device ID | Receiving device ID | Electricity amount supplied |
|---|---|---|---|---|
| 201001-000001 | 2010/1/8 17:13 | 2s2s2s | 3m3m3m | 10kwh |
| 201001-000002 | 2010/1/8 18:50 | 2m2m2m | 3d3d3d | 10kwh |
| 201001-000003 | 2010/1/9 9:05 | ＊＊＊＊ | ●●●● | 50kwh |
| 201001-000004 | 2010/1/10 12:30 | ◇◇◇◇ | ◎◎◎◎ | 20kwh |
| ⋮ | ⋮ | ⋮ | ⋮ | ⋮ |

EP 2 533 189 A1

**FIG. 15**

```
                    ┌──────────────┐
                    │    Start     │
                    └──────┬───────┘
                           │
    ┌──────────────────────▼──────────────────────┐
    │ Extract records of supply and purchase events in │ ⌐S101
    │ account-period month from supply and purchase │
    │           management database                │
    └──────────────────────┬──────────────────────┘
                           │
    ┌──────────────────────▼──────────────────────┐
    │ Sort extracted records based on supplying devices │ ⌐S102
    │                     ID                        │
    └──────────────────────┬──────────────────────┘
                           │
    ┌──────────────────────▼──────────────────────┐
    │ Sum supplied green electricity amounts of records │ ⌐S103
    │          with same supplying device ID        │
    └──────────────────────┬──────────────────────┘
                           │
    ┌──────────────────────▼──────────────────────┐
    │ Calculate out payment amount by multiplying the sum │ ⌐S104
    │   of supplied green electricity amounts with unit │
    │                 payment price                 │
    └──────────────────────┬──────────────────────┘
                           │
    ┌──────────────────────▼──────────────────────┐
    │ Calculate out final payment amount from the payment │ ⌐S105
    │ amount per supplying device ID in consideration of │
    │       mediation fee, discount, tax, etc.      │
    └──────────────────────┬──────────────────────┘
                           │
    ┌──────────────────────▼──────────────────────┐
    │ Notify final payment amount per supplying device ID │ ⌐S106
    └──────────────────────┬──────────────────────┘
                           │
                    ┌──────▼───────┐
                    │     End      │
                    └──────────────┘
```

FIG. 16

100b

2m:Green electricity supply control device

M

load (Consumption) D₁

Battery 8

Green electricity reception control device 3d

9

Green electricity supply/purchase certifying device 1

Supply and purchase management database 4

Loop coil antenna 18

17:Electricity transmission antenna

EP 2 533 189 A1

FIG. 17

100c

5:Green electricity transaction settling device

D₂

2m:Green electricity supply control device

M

M

2m

17

18

18

Loop coil antenna

Loop coil antenna

17:Electricity transmission antenna

9

1

Green electricity supply/purchase certifying device

3d:Green electricity reception control device

4

Supply and purchase management database

8

Battery

FIG. 18

2m:Green electricity supply control device

2d

2d

2d

5

M

17:Electricity transmission antenna

18 — Loop coil antenna

3d — Green electricity reception control device

8 — Battery

D₃

100d

EP 2 533 189 A1

FIG. 19

Non-green electricity supply and purchase network 102

Green electricity supply and purchase network 101

Electricity composition control device 10

To battery, load (electricity consumption), etc.

Electricity consumption reducing system 50

Electricity consumption reduction calculating section 51

Electricity consumption visualizing system 52

Electricity consumption reduction scheme evaluating system 54

Electricity consumption reduction scheme proposing system 53

Reduction scheme execution instruction or CO2 emission right trading execution instruction

Electricity consumption reduction achieve & know-how

D

S

S

100

FIG. 20

EP 2 533 189 A1

Electricity composition control device ~10

Green electricity supply and purchase network ~101

Non-green electricity supply and purchase network ~102

Electricity reception facility ~33

Transformer ~34

Transformer ~34

Electricity line ~14

Power distribution board ~32

Received electricity amount measuring electricity meter ~36

Transmitted electricity amount measuring electricity meter ~35

Main control section ~11

43~ Electricity reception deciding section

44~ Electricity reception flow control section

45~ Electricity reception completion notifying section

CO₂ emission amount simulating section ~55

Emission amount determining section ~56

Emission amount reduction instructing section ~57

Electricity type setting switching section ~58

Communication section ~12

Storage section ~19

Green electricity supply control device ~2

Green electricity supply/purchase certifying device ~1

Battery ~8

load (House electric appliance etc.)

~9

FIG. 21

CO₂ emission amount

L1 — Non-green electricity (simulation)

ALLDL

L2' — Result obtained by switching to green electricity from point P

U1

P

L2 — Green electricity (simulation)

ALLCL

Electricity consumption amount (kwh)

Px
(=EChange)

EW

⊛ Switching point to green electricity

EP 2 533 189 A1

FIG. 22

Start

S401
Obtain necessary electricity amount EW, and simulate CO2 emission amount equivalent to EW

S402
Compare permitted CO2 emission amount U1 and simulated CO2 emission amount

S403
(1) U1 < ALLCL
(2) ALLCL ≦ U1 < ALLDL
or
(3) ALLDL ≦ U1 ?

(1)

(2)

(3)

S404
Instruct to reduce CO2 emission amount by (ALLCL-U1)

S406
Calculate out switching point (EChange) from non-green electricity to green electricity

S410
Perform electricity reception preparation to receive non-green electricity to cover EW

S405
Perform electricity reception preparation to receive green electricity to cover EW

S407
Perform electricity reception preparation to receive green electricity to cover electricity consumption further than Echange in EW

S408
Transmit electricity reception request and requested electricity amount of electricity reception to the green electricity supply control device

S409
Receive green electricity from supply control device, and create electricity reception completion report, and send the report to certifying device

End

FIG. 23

## INTERNATIONAL SEARCH REPORT

International application No.

PCT/JP2011/052140

| A. CLASSIFICATION OF SUBJECT MATTER |
|---|
| G06Q50/00(2006.01)i, H02J3/00(2006.01)i, H02J13/00(2006.01)i, H01M8/00 (2006.01)n |

According to International Patent Classification (IPC) or to both national classification and IPC

| B. FIELDS SEARCHED |
|---|
| Minimum documentation searched (classification system followed by classification symbols) |
| G06Q50/00, H02J3/00, H02J13/00, H01M8/00 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
JSTPlus/JMEDPlus/JST7580(JDreamII), G-Search

| C. DOCUMENTS CONSIDERED TO BE RELEVANT | | |
|---|---|---|
| Category* | Citation of document, with indication, where appropriate, of the relevant passages | Relevant to claim No. |
| Y | JP 2003-348753 A  (Sharp Corp.), 05 December 2003 (05.12.2003), paragraphs [0010] to [0031], [0090] to [0100], [0130] to [0136] (Family: none) | 1-25 |
| Y | JP 2006-215758 A  (Hitachi, Ltd.), 17 August 2006 (17.08.2006), paragraphs [0004] to [0010], [0037] to [0047], [0068] (Family: none) | 1-25 |
| Y | JP 2007-080299 A  (Sanyo Electric Co., Ltd.), 29 March 2007 (29.03.2007), paragraphs [0039] to [0048] (Family: none) | 8,21-23,25 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 02 March, 2011 (02.03.11) | 15 March, 2011 (15.03.11) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2011/052140 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | JP 2006-204081 A  (Hitachi, Ltd.),<br>03 August 2006 (03.08.2006),<br>paragraphs [0063] to [0072]<br>(Family: none) | 10,14-18 |
| A | JP 2005-050164 A  (Sekisui Chemical Co., Ltd.),<br>24 February 2005 (24.02.2005),<br>entire text; all drawings<br>(Family: none) | 1-25 |
| A | JP 2008-306827 A  (The Chugoku Electric Power<br>Co., Inc.),<br>18 December 2008 (18.12.2008),<br>entire text; all drawings<br>(Family: none) | 1-25 |
| A | JP 2008-046926 A  (Kurita Water Industries<br>Ltd.),<br>28 February 2008 (28.02.2008),<br>entire text; all drawings<br>(Family: none) | 1-25 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001177990 A
- JP 2001184406 A
- JP 2005185016 A
- JP 2007164397 A
- JP 2008306827 A

**Non-patent literature cited in the description**

- Green Electricity Certificate system / Japan Natural Energy Company Limited. Japan Natural Energy Company Limited, 07 January 2010